(19) Europäisches Patentamt / European Patent Office / Office européen des brevets

(11) **EP 3 616 462 B1**

(12) **EUROPEAN PATENT SPECIFICATION**

(45) Date of publication and mention
of the grant of the patent:
**26.03.2025 Bulletin 2025/13**

(21) Application number: **18791033.6**

(22) Date of filing: **26.04.2018**

(51) International Patent Classification (IPC):
**H04W 74/0833** (2024.01)    **H04W 48/14** (2009.01)

(52) Cooperative Patent Classification (CPC):
**H04W 74/0833; H04W 48/14; H04W 74/006**

(86) International application number:
**PCT/US2018/029524**

(87) International publication number:
**WO 2018/200779 (01.11.2018 Gazette 2018/44)**

(54) **RANDOM ACCESS PROCEDURE(S) FOR RADIO SYSTEM**

ZUFALLSZUGRIFFSVERFAHREN FÜR FUNKSYSTEM

PROCÉDURE(S) D'ACCÈS ALÉATOIRE DESTINÉE(S) À UN SYSTÈME RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2017 US 201762492073 P**

(43) Date of publication of application:
**04.03.2020 Bulletin 2020/10**

(73) Proprietor: **Sharp Kabushiki Kaisha**
**Sakai City**
**Osaka 590-8522 (JP)**

(72) Inventor: **ISHII, Atsushi**
**Vancouver, Washington 98683 (US)**

(74) Representative: **Müller-Boré & Partner**
**Patentanwälte PartG mbB**
**Friedenheimer Brücke 21**
**80639 München (DE)**

(56) References cited:
**WO-A1-2016/198909    US-A1- 2014 286 261**
**US-A1- 2015 085 689    US-A1- 2016 234 759**

- **SAMSUNG ET AL: "On Demand SI Request TX", vol. RAN WG2, no. Spokane, USA; 20170403 - 20170407, 3 April 2017 (2017-04-03), XP051244934, Retrieved from the Internet <URL:http://www.3gpp.org/ftp/ Meetings_3GPP_SYNC/RAN2/Docs/> [retrieved on 20170403]**
- **INTERDIGITAL COMMUNICATIONS: "Request and Acquisition of Other-SI", vol. RAN WG2, no. Athens, Greece; 20170213 - 20170217, 12 February 2017 (2017-02-12), XP051211884, Retrieved from the Internet <URL:http:// www.3gpp.org/ftp/Meetings_3GPP_SYNC/RAN2/ Docs/> [retrieved on 20170212]**
- **OPPO: "Discussion on Remaining Issues of Other SI Design", vol. RAN WG2, no. Spokane, USA; 20170117 - 20170119, 17 January 2017 (2017-01-17), XP051210632, Retrieved from the Internet <URL:http://www.3gpp.org/ftp/ Meetings_3GPP_SYNC/RAN2/Docs/> [retrieved on 20170117]**

**Description**

**TECHNICAL FIELD**

The technology relates to wireless communications, and particularly to methods and apparatus for performing a random access procedure (RACH) in wireless communications.

**BACKGROUND**

In wireless communication systems, a radio access network generally comprises one or more access nodes (such as a base station) which communicate on radio channels over a radio or air interface with plural wireless terminals. In some technologies such a wireless terminal is also called a User Equipment (UE). A group known as the 3rd Generation Partnership Project ("3GPP") has undertaken to define globally applicable technical specifications and technical reports for present and future generation wireless communication systems. The 3GPP Long Term Evolution ("LTE") and 3GPP LTE Advanced (LTE-A) are projects to improve an earlier Universal Mobile Telecommunications System ("UMTS") mobile phone or device standard in a manner to cope with future requirements.

In typical cellular mobile communication systems, a random access procedure is used by user equipment (UE) to obtain synchronization information of the uplink and to initiate data transfer with the currently camping cell. In Long-Term Evolution (LTE) and LTE Advanced (LTE-A), the random access procedure may be triggered when the UE in idle state attempts to send uplink data, when the UE performs a hand over to a new cell, or when the eNode B (eNB) of the currently serving cell receives downlink data from the network but finds that the uplink synchronization is lost.

The Random Access Procedure (RACH) is the media access control (MAC) layer procedure. In the IEEE 802 reference model of computer networking, the medium access control or media access control (MAC) layer is the lower sublayer of the data link layer (layer 2) of the seven-layer OSI model. The MAC sublayer provides addressing and channel access control mechanisms that make it possible for several terminals or network nodes to communicate within a multiple access network that incorporates a shared medium. The MAC sublayer acts as an interface between the logical link control (LLC) sublayer and the network's physical layer.

Work has started in the International Telecommunications Union (ITU) and 3GPP to develop requirements and specifications for new radio (NR) 5G systems, e.g., fifth generation systems. For fifth-generation (5G) New Radio systems, the 3rd Generation Partnership Project (3GPP) is currently discussing the framework of the random access procedure for use cases other than an initiation of data transfer. One exemplary application of such cases is UEs to request on-demand system information broadcast.

What is needed, therefore, and example objects of the technology disclosed herein, are methods, apparatus, and techniques to provide random access procedure (RACH) techniques for systems including the 5G system.

SAMSUNG ET AL: "On Demand SI Request TX", 3GPP DRAFT; R2-1702970_ON DEMAND SI REQUEST TX_MSG1 VS MSG3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Spokane, USA; 20170403 - 20170407 3 April 2017 (2017-04-03) relates to a discussion for on demand

INTERDIGITAL COMMUNICATIONS: "Request and Acquisition of Other-SI", 3GPP DRAFT; R2-1701195 (NR SI AI10224 ACQUISITION OF OTHER-SI), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20170213 - 20170217 12 February 2017 (2017-02-12) relates to a discussion for system information acquisition.

WO 2016/198909 AI relates to a method for low overhead system information acquisition (LOSIA). The LOSIA method includes several techniques for transmitting common channels in a next generation Radio Access Technology (xRAT). Instead of transmitting system information in a periodic, static, cell-specific, wideband manner, the transmission is triggered by user equipment in an "on demand" manner. The LOSIA method allows the network to control the overhead, bandwidth, and periodicity, as well as other characteristics. The LOSIA method employs several different techniques to trigger the information upon which the network can act, for example, by transmitting different payloads depending on the received trigger.

OPPO: "Discussion on Remaining Issues of Other SI Design", 3GPP DRAFT; R2-1700045-DISCUSSION ON REMAINING ISSUES OF OTHER SI DESIGN, 3RD GENERATION PARTNERSHIP PROJECT (3GPP), MOBILE COMPETENCE CENTRE ; 650, ROUTE DESLUCIOLES ; F-06921 SOPHIA-ANTIPOLIS CEDEX, vol. RAN WG2, no. Spokane, USA; 20170117 - 2017011917 January 2017 (2017-01-17) relates to a discussion of Other SI design.

Thus, according to an aspect, the problem relates to performing on-demand system information requests effectively. This problem is solved by the subject-matter of the independent claims. Preferred embodiments are defined in the dependent claims.

# EP 3 616 462 B1

## SUMMARY

In some of its various example aspects the technology disclosed herein comprises and provides a set of Random Access Preambles to be reserved for upper layer to inform the network of a designated request/notification using the RACH process without performing a subsequent data transfer.

In one of its aspects the technology disclosed herein concerns a user equipment comprising a receiving unit configured to receive, from a base station apparatus, a periodically broadcasted system information block, SIB, the periodically broadcasted SIB indicating configuration parameters for a random access procedure, the configuration parameters at least comprising: one or more SIB types, wherein the one or more SIB types identify a specific set of one or more on-demand SIBs, a set of multiple random access preambles configured for requesting on-demand delivery of the specific set of one or more on-demand SIBs, anda set of multiple physical random access channel, PRACH, resources configured for requesting on-demand delivery of the specific set of one or more on-demand SIBs; a processing unit configured to select a random access preamble from the set of multiple random access preambles and a PRACH resource from the set of multiple PRACH resources in accordance with a request for the specific set of one or more on-demand SIBs; and a transmitting unit configured to transmit the selected random access preamble using the selected PRACH resource for requesting on-demand delivery of the specific set of one or more on-demand SIBs.

In another of its aspects the technology disclosed herein concerns a method for a user equipment. In a basic mode the method comprises: receiving, from a base station apparatus, a periodically broadcasted system information block, SIB, the periodically broadcasted SIB indicating configuration parameters for a random access procedure, the configuration parameters at least comprising: one or more SIB types, wherein the one or more SIB types identify a specific set of one or more on-demand SIBs, a set of multiple random access preambles configured for requesting on-demand delivery of the specific set of one or more on-demand SIBs, and a set of multiple physical random access channel, PRACH, resources configured for requesting on-demand delivery of the specific set of one or more on-demand SIBs; selecting a random access preamble from the set of multiple random access preambles and a PRACH resource from the set of multiple PRACH resources in accordance with a request for the specific set of one or more on-demand SIBs; and transmitting the selected random access preamble using the selected PRACH resource.

In another of its aspects the technology disclosed herein concerns base station apparatus comprising a receiving unit and a transmitting unit configured to communicate across a radio interface with a user equipment; and a processing unit configured to: periodically broadcast a system information block, SIB, the periodically broadcasted SIB indicating configuration parameters for a random access procedure, the configuration parameters at least comprising: one or more SIB types, wherein the one or more SIB types identify a specific set of one or more on-demand SIBs, a set of multiple random access preambles configured for requesting on-demand delivery of the specific set of one or more on-demand SIBs, and a set of multiple physical random access channel, PRACH, resources configured for requesting on-demand delivery of the specific set of one or more on-demand SIBs; receive a preamble sequence associated with one of the random access preambles of the set of multiple random access preambles on one of the PRACH resources of the set of multiple PRACH resources in accordance with a request for the specific set of one or more on-demand SIBs; and identify and process the request for the specific set of one or more on-demand SIBs from the user equipment.

In another of its aspects the technology disclosed herein concerns a method for a base station apparatus. In a basic mode the method comprises: using a receiving unit and a transmitting unit to communicate across a radio interface with a user equipment; using a processing unit to: periodically broadcast a system information block, SIB, the periodically broadcasted SIB indicating configuration parameters for a random access procedure, the configuration parameters at least comprising:one or more SIB types, wherein the one or more SIB types identify a specific set of one or more on-demand SIBs, a set of multiple random access preambles configured for requesting on-demand delivery of the specific set of one or more on-demand SIBs, and a set of multiple physical random access channel, PRACH, resources configured for requesting on-demand delivery of the specific set of one or more on-demand SIBs; receive a preamble sequence associated with one of the random access preambles of the set of multiple random access preambles on one of the PRACH resources of the set of multiple PRACH resources in accordance with a request for the specific set of one or more on-demand SIBs; and identify and process the request for the specific set of one or more on-demand SIBs from the user equipment.

In an example embodiment and mode, the request of system information requests from the base station apparatus an on-demand delivery of a system information block (SIB) or a group of SIBs.

## BRIEF DESCRIPTION OF THE DRAWINGS

The foregoing and other objects, features, and advantages of the technology disclosed herein will be apparent from the following more particular description of preferred embodiments as illustrated in the accompanying drawings in which reference characters refer to the same parts throughout the various views. The drawings are not necessarily to scale, emphasis instead being placed upon illustrating the principles of the technology disclosed herein.

3

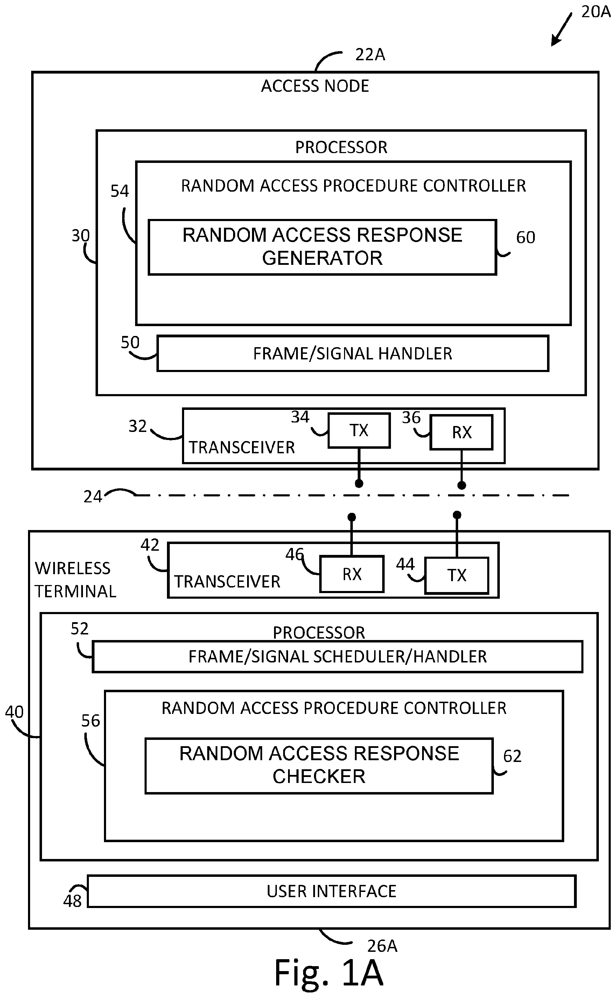

Fig. 1A - Fig. 1I are schematic views showing an example communications system comprising differing configurations of radio access nodes and a wireless terminal which perform random access procedures according to differing example embodiment and modes of the technology disclosed herein.

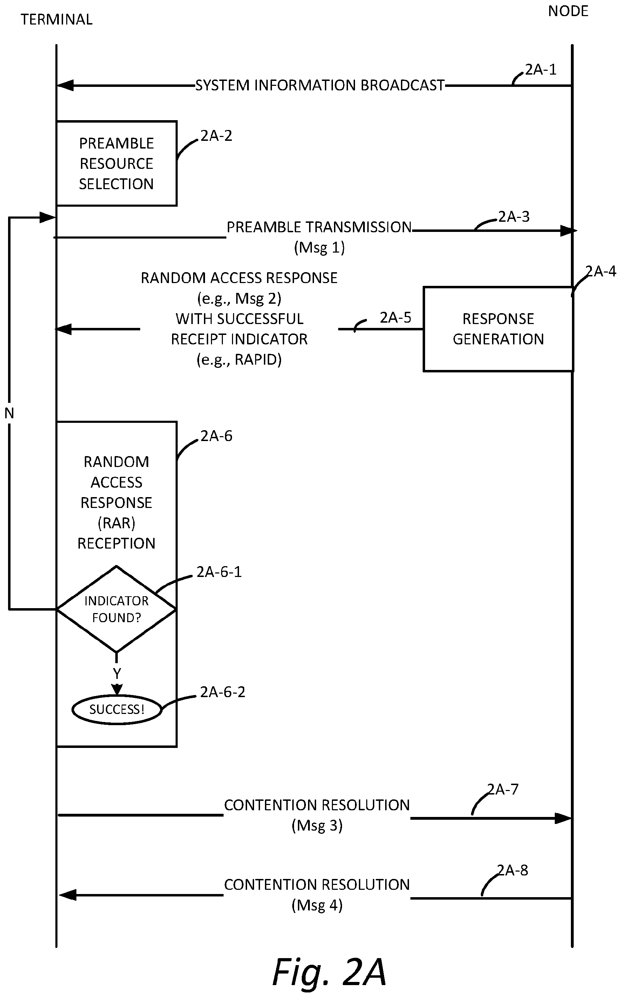

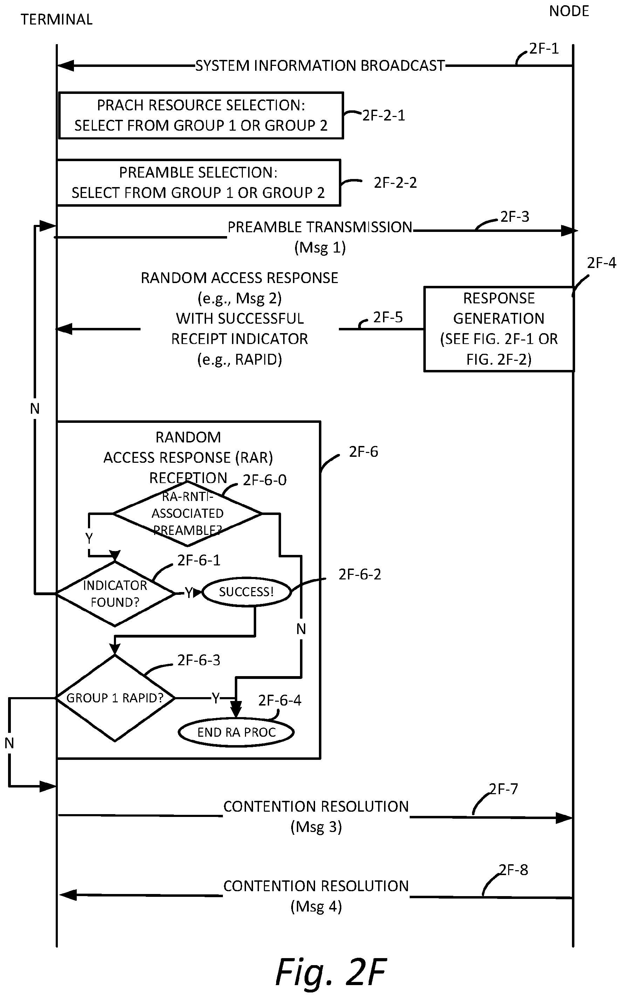

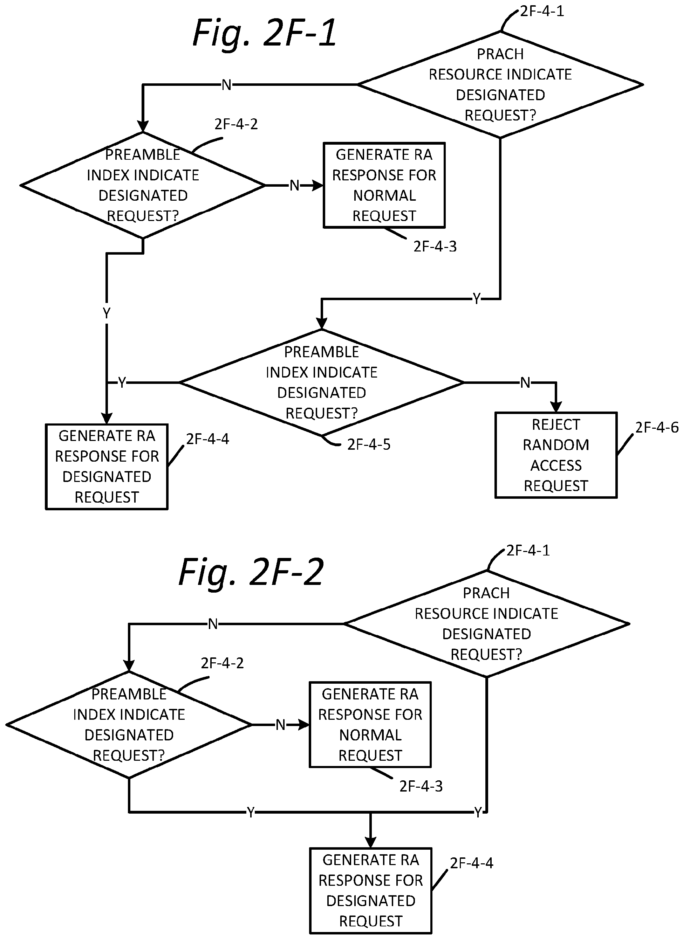

Fig. 2A - Fig. 2G are diagrammatic views of acts including messages comprising the respective random access procedures of Fig. 1A - Fig. 1G, Fig. 2F-1 and Fig. 2F-2 are flowcharts showing example acts or steps comprising act 2F-4 of Fig. 2F.

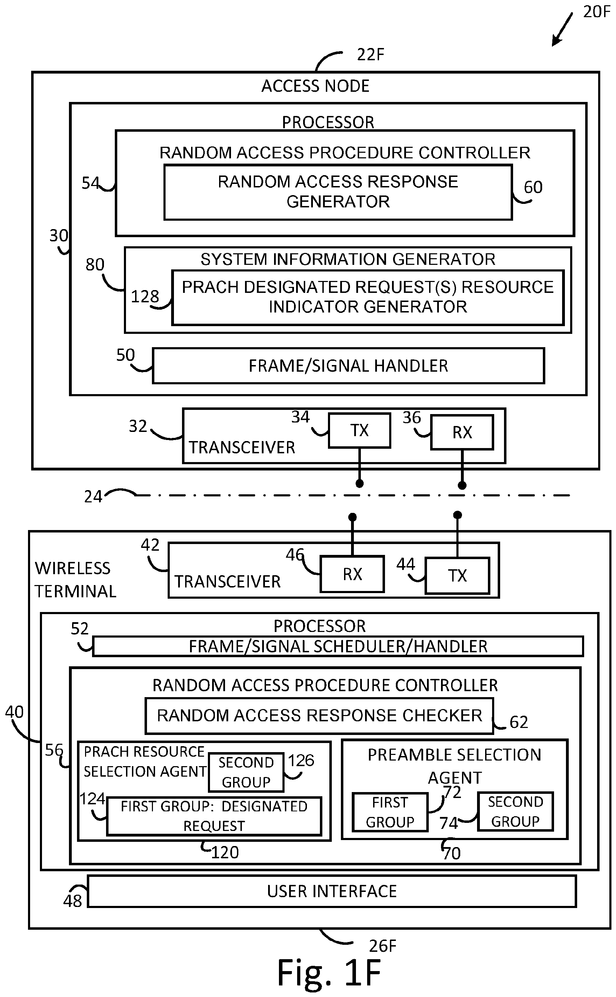

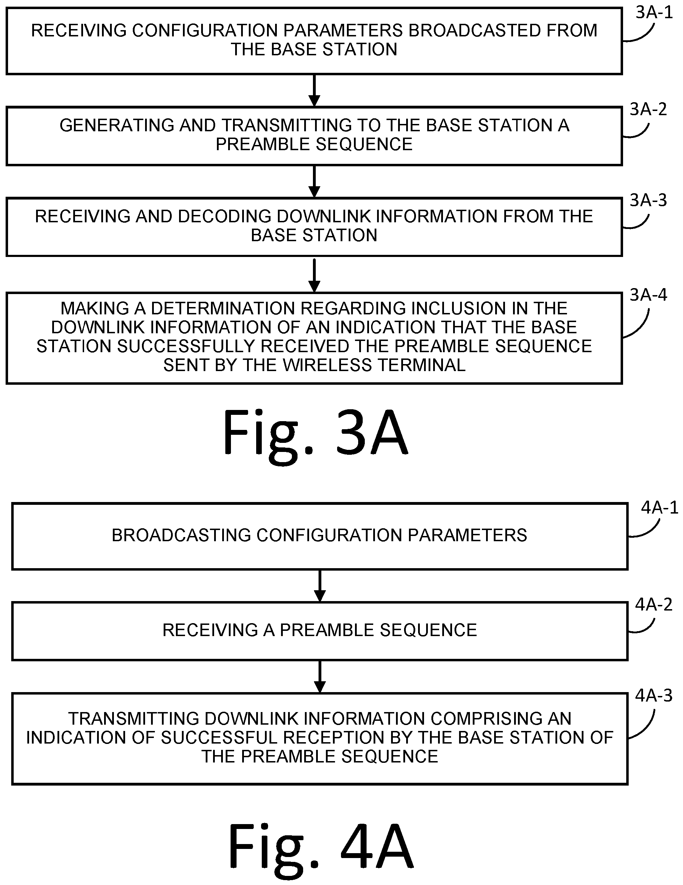

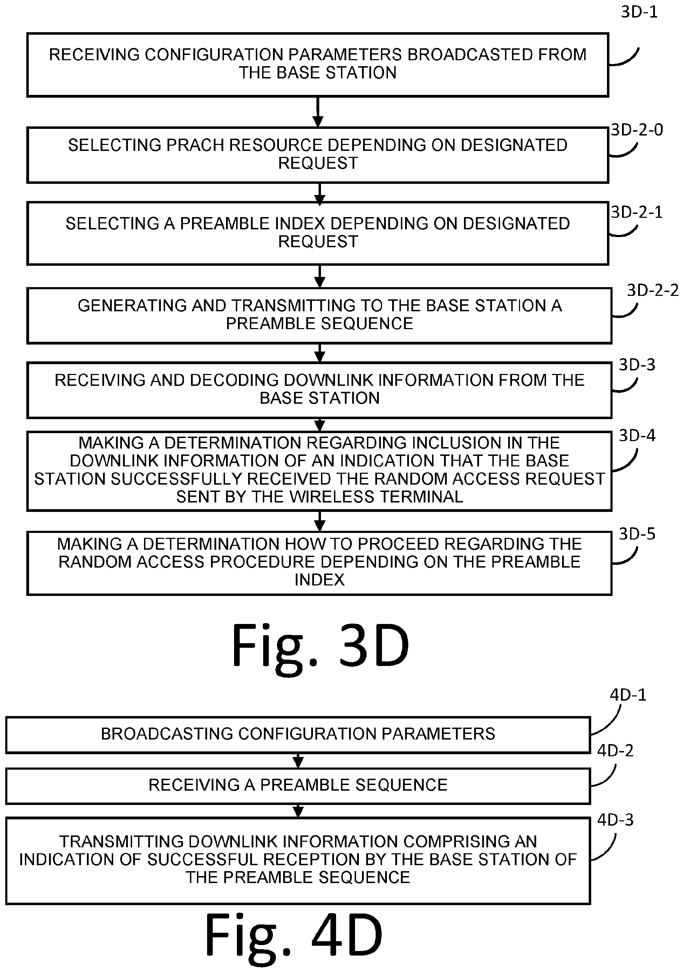

Fig. 3A - Fig. 3C are flowcharts showing example, non-limiting, representative acts or steps performed by the wireless terminals of the systems of Fig. 1A - Fig. 1C, respectively. Fig. 3D - Fig. 3G are flowcharts showing example, non-limiting, representative acts or steps performed by the wireless terminals of the systems of Fig. 1F - Fig. 1I, respectively.

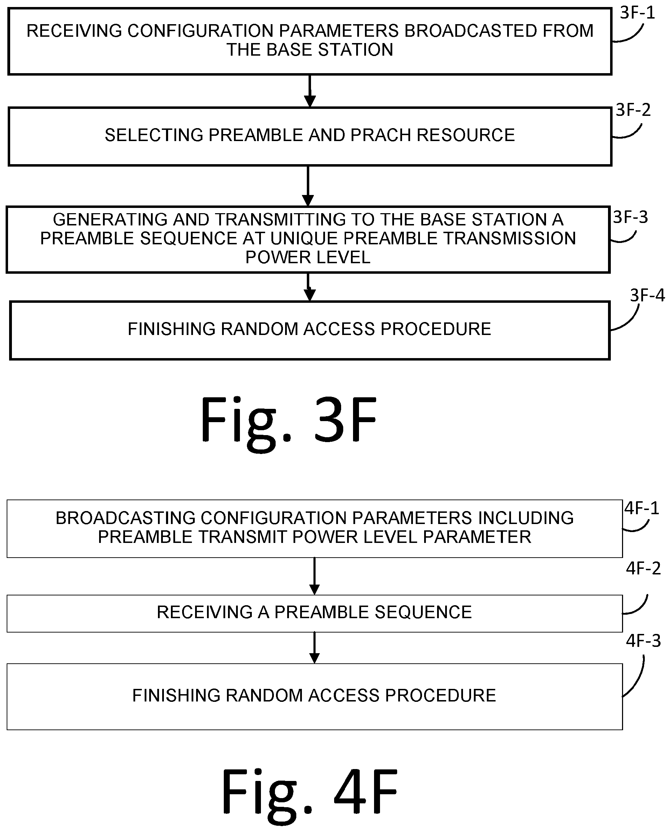

Fig. 4A - Fig. 4C are flowcharts showing example, non-limiting, representative acts or steps performed by the radio access nodes of the systems of Fig. 1A - Fig. 1C, respectively. Fig. 4D - Fig. 4G are flowcharts showing example, non-limiting, representative acts or steps performed by the radio access nodes of the systems of Fig. 1F - Fig. 1I, respectively.

Fig. 5A-1, Fig. 5A-2, Fig. 5A-3, Fig. A-4, Fig. 5A-4a, and Fig. 5A-4b are diagrammatic views showing example formats and example contents of some of the messages comprising the random access procedure of the example embodiment and mode of Fig. 1A.

Fig. 5B-1, Fig. 5B-2, Fig. 5B-3, Fig. 5B-4, Fig. 5B-4a, Fig. 5B-4b, and Fig. 5B-4c are diagrammatic views showing example formats and example contents of some of the messages comprising the random access procedure of the example embodiment and mode of Fig. 1B.

Fig. 6 is a diagrammatic view which illustrates that downlink information may include both a Physical Downlink Control Channel (PDCCH) and a Physical Downlink Shared Channel (PDSCH).

Fig. 7 is a diagrammatic view which illustrating example associations between preamble indices belonging to a preamble index first group and respective designated requests.

Fig. 8 is a diagrammatic view showing an example formats and example contents of some of a MAC PDU for another example embodiment and mode which is a variation of the example embodiment and mode of Fig. 1B.

Fig. 9 is a diagrammatic view which illustrating example associations between preamble information and X-RNTI for a fourth example embodiment and mode.

Fig. 10 is a diagrammatic view showing an alternate implementation of the example embodiment and mode of Fig. 2C in a scenario in which a DCI addressed with the X-RNTI may be used for scheduling of PDSCH to transmit a message.

Fig. 11 is a diagrammatic view which illustrating example associations between preamble information and an input function for an X-RNTI function for a fifth example embodiment and mode.

Fig. 12A is a diagrammatic view illustrating example associations between PRACH resources belonging to PRACH first resource group and respective designated requests. Fig. 12B is a diagrammatic view illustrating example situation in which one PRACH resource may be allocated for multiple reserved preambles.

Fig. 13 is a diagrammatic view illustrating a non-limiting, example format of a system information block that may be used to identify the first random access physical radio resource group for the seventh example embodiment and mode.

Fig. 14 is a diagrammatic view illustrating a non-limiting, example format of a system information block that may be comprise random access procedure termination criteria for the eighth example embodiment and mode.

Fig. 15 is a diagrammatic view illustrating a non-limiting, example format of a system information block that may be comprise a preamble transmission message transmit power level information element for the ninth example embodiment and mode.

Fig. 16 is a diagrammatic view illustrating a non-limiting, example format of a system information block that may be comprise a preamble re-transmission information element for the tenth example embodiment and mode.

Fig. 17 is a diagrammatic view showing example electronic machinery which may comprise node electronic machinery or terminal electronic machinery.

**DETAILED DESCRIPTION**

In the following description, for purposes of explanation and not limitation, specific details are set forth such as particular architectures, interfaces, techniques, etc. in order to provide a thorough understanding of the technology disclosed herein. However, it will be apparent to those skilled in the art that the technology disclosed herein may be practiced in other embodiments that depart from these specific details. That is, those skilled in the art will be able to devise various arrangements which, although not explicitly described or shown herein, embody the principles of the technology disclosed herein and are included within its scope. In some instances, detailed descriptions of well-known devices, circuits, and methods are omitted so as not to obscure the description of the technology disclosed herein with unnecessary detail.

Thus, for example, it will be appreciated by those skilled in the art that block diagrams herein can represent conceptual views of illustrative circuitry or other functional units embodying the principles of the technology. Similarly, it will be appreciated that any flow charts, state transition diagrams, pseudocode, and the like represent various processes which may be substantially represented in computer readable medium and so executed by a computer or processor, whether or not such computer or processor is explicitly shown.

As used herein, the term "core network" can refer to a device, group of devices, or sub-system in a telecommunication network that provides services to users of the telecommunications network. Examples of services provided by a core network include aggregation, authentication, call switching, service invocation, gateways to other networks, etc

As used herein, the term "wireless terminal" can refer to any electronic device used to communicate voice and/or data via a telecommunications system, such as (but not limited to) a cellular network. Other terminology used to refer to wireless terminals and non-limiting examples of such devices can include user equipment terminal, UE, mobile station, mobile device, access terminal, subscriber station, mobile terminal, remote station, user terminal, terminal, subscriber unit, cellular phones, smart phones, personal digital assistants ("PDAs"), laptop computers, netbooks, tablets, e-readers, wireless modems, etc.

As used herein, the term "access node", "node", or "base station" can refer to any device or group of devices that facilitates wireless communication or otherwise provides an interface between a wireless terminal and a telecommunications system. A non-limiting example of an access node may include, in the 3GPP specification, a Node B ("NB"), an enhanced Node B ("eNB"), a home eNB ("HeNB"), or in the 5G terminology, a gNB or even a transmission and reception point (TRP), or some other similar terminology. Another non-limiting example of a base station is an access point. An access point may be an electronic device that provides access for wireless terminal to a data network, such as (but not limited to) a Local Area Network ("LAN"), Wide Area Network ("WAN"), the Internet, etc. Although some examples of the systems and methods disclosed herein may be described in relation to given standards (e.g., 3GPP Releases 8, 9, 10, 11, ...), the scope of the present disclosure should not be limited in this regard. At least some aspects of the systems and methods disclosed herein may be utilized in other types of wireless communication systems.

As used herein, the term "telecommunication system" or "communications system" can refer to any network of devices used to transmit information. A non-limiting example of a telecommunication system is a cellular network or other wireless communication system.

As used herein, the term "cellular network" can refer to a network distributed over cells, each cell served by at least one fixed-location transceiver, such as a base station. A "cell" may be any communication channel that is specified by standardization or regulatory bodies to be used for International Mobile Telecommunications-Advanced ("IMTAdvanced"). All or a subset of the cell may be adopted by 3GPP as licensed bands (e.g., frequency band) to be used for communication between a base station, such as a Node B, and a UE terminal. A cellular network using licensed frequency bands may include configured cells. Configured cells can include cells of which a UE terminal is aware and in which it is allowed by a base station to transmit or receive information.

Fig. 1A - Fig. 1I show example communications systems 20A - 20I wherein random access procedures according to example, non-limiting embodiments and modes of the technology disclosed herein are described. In each of Fig. 1A - Fig. 1I, the components and functionalities that have a same base reference numeral have same or similar structure and operation unless otherwise noted or otherwise clear from context. In the example communications systems 20A - 20I, respective radio access nodes 22A - 22I communicate over air or radio interface 24 (e.g., Uu interface) with respective wireless terminals 26A - 26I. As used herein, reference to any one of the radio access nodes 22A - 22I may, for sake of convenience, be generically noted as node 22, and reference to any one of the wireless terminals 26A- 26I maybe also be generically noted as wireless terminal 26.

As mentioned above, the radio access node 22 may be any suitable node for communicating with the wireless terminal 26, such as a base station node, or eNodeB ("eNB") or gNodeB or gNB, for example. The node 22 comprises node processor circuitry ("node processor 30") and node transceiver circuitry 32. The node transceiver circuitry 32 typically comprises node transmitter circuitry 34 and node receiver circuitry 36, which are also called node transmitter and node receiver, respectively.

The wireless terminal 26 comprises terminal processor circuitry 40 ("terminal processor 40") and terminal transceiver circuitry 42. The terminal transceiver circuitry 42 typically comprises terminal transmitter circuitry 44 and terminal receiver circuitry 46, which are also called terminal transmitter 44 and terminal receiver 46, respectively. The wireless terminal 26 also typically comprises user interface 48. The terminal user interface 48 may serve for both user input and output operations, and may comprise (for example) a screen such as a touch screen that can both display information to the user and receive information entered by the user. The user interface 48 may also include other types of devices, such as a speaker, a microphone, or a haptic feedback device, for example.

For both the radio access node 22 and wireless terminal 26, the respective transceiver circuitries 22 include antenna(s). The respective transmitter circuits 36 and 46 may comprise, e.g., amplifier(s), modulation circuitry and other conventional transmission equipment. The respective receiver circuits 34 and 44 may comprise, e.g., e.g., amplifiers, demodulation circuitry, and other conventional receiver equipment.

In general operation node, access node 22 and wireless terminal 26 communicate with each other across radio interface 24 using predefined configurations of information. By way of non-limiting example, the radio access node 22 and wireless terminal 26 may communicate over radio interface 24 using "frames" of information that may be configured to include various channels. In Long Term Evolution (LTE), as a non-limiting example, a frame, which may have both downlink portion(s) and uplink portion(s), may comprise plural subframes, with each LTE subframe in turn being divided into two slots. The frame may be conceptualized as a resource grid (a two dimensional grid) comprised of resource elements (RE). Each column of the two dimensional grid represents a symbol (e.g., an OFDM symbol on downlink (DL) from node to wireless terminal; an SC-FDMA symbol in an uplink (UL) frame from wireless terminal to node). Each row of the grid represents a subcarrier. The frame and subframe structure serves only as an example of a technique of formatting of information that is to be transmitted over a radio or air interface. It should be understood that "frame" and "subframe" may be utilized interchangeably or may include or be realized by other units of information formatting, and as such may bear other terminology (such as blocks, or symbol, slot, mini-slot in 5G for example).

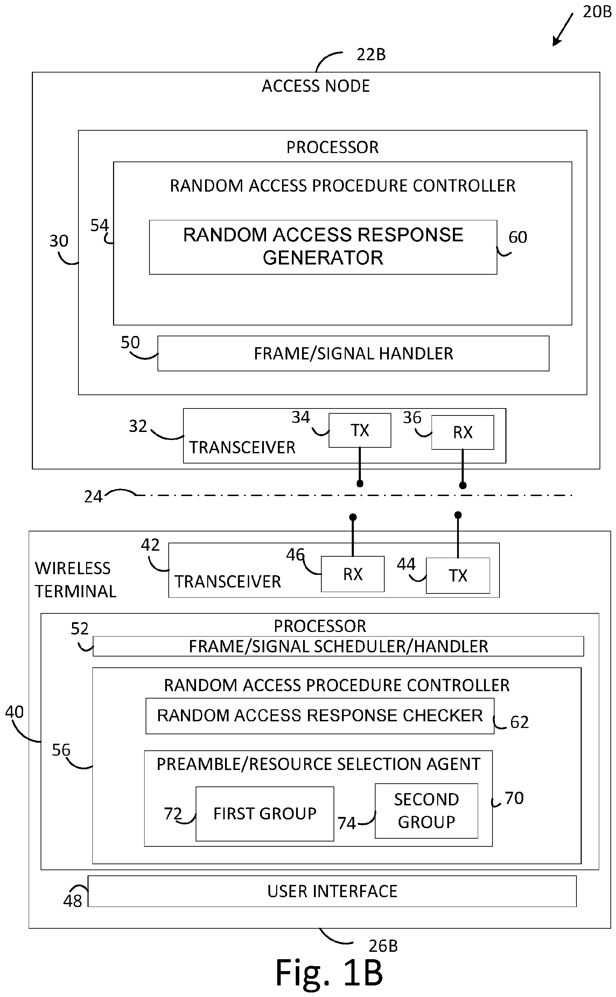

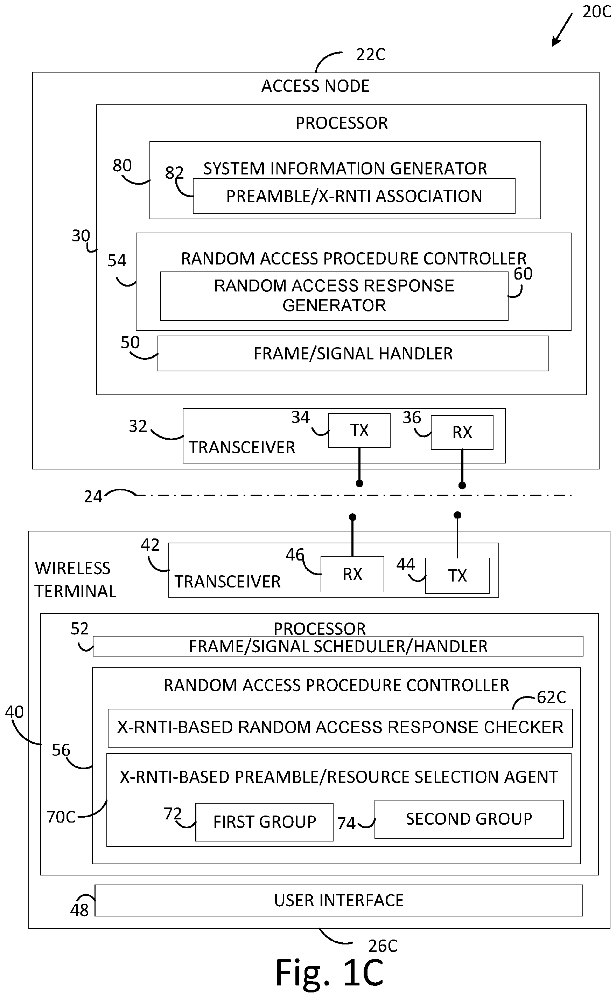

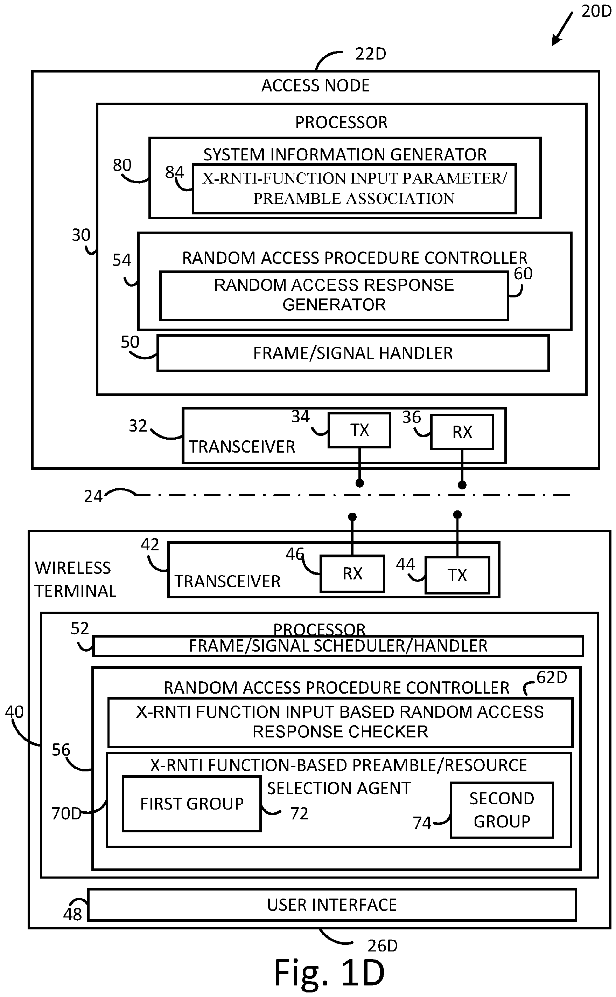

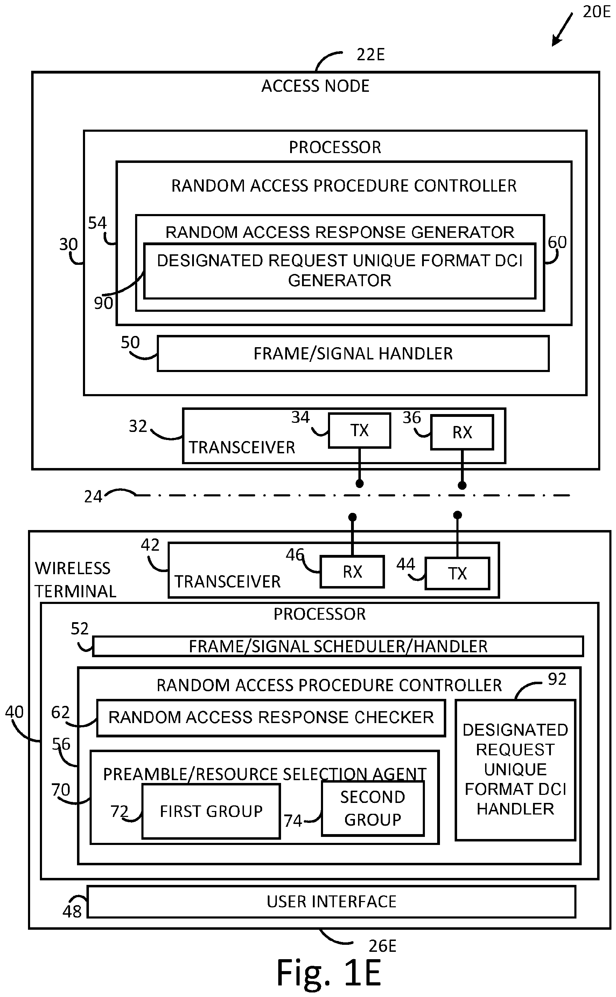

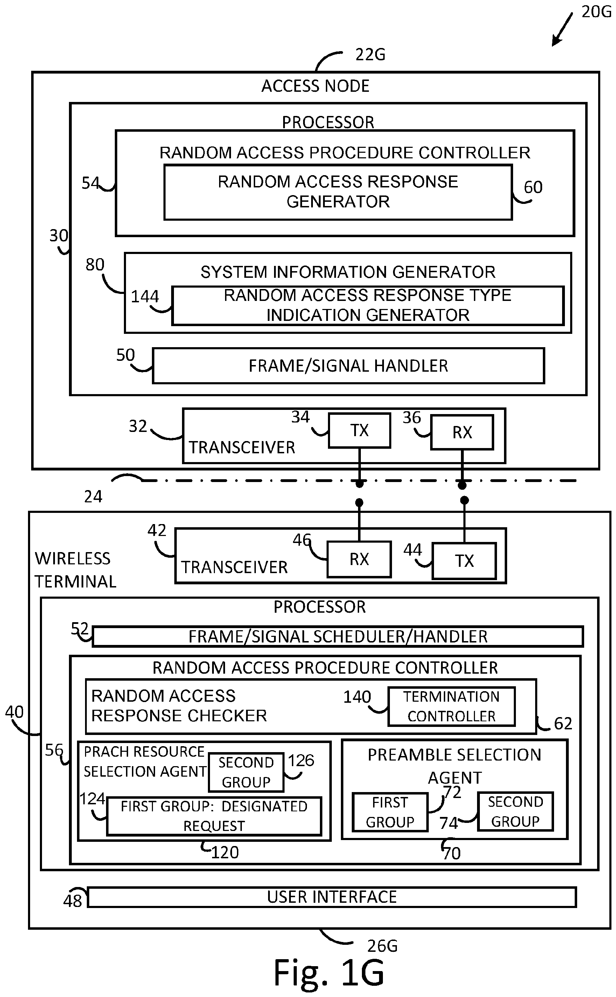

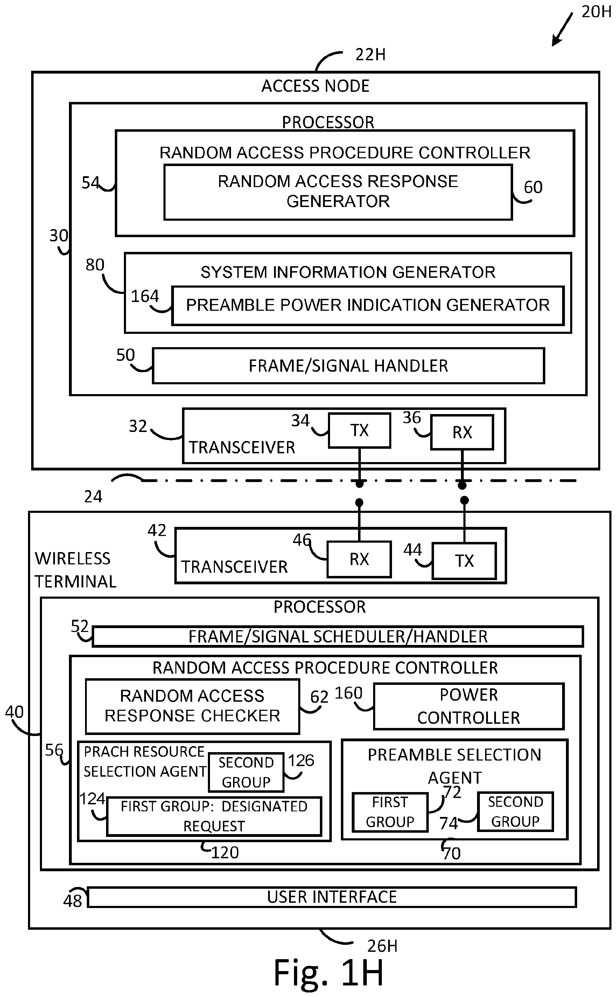

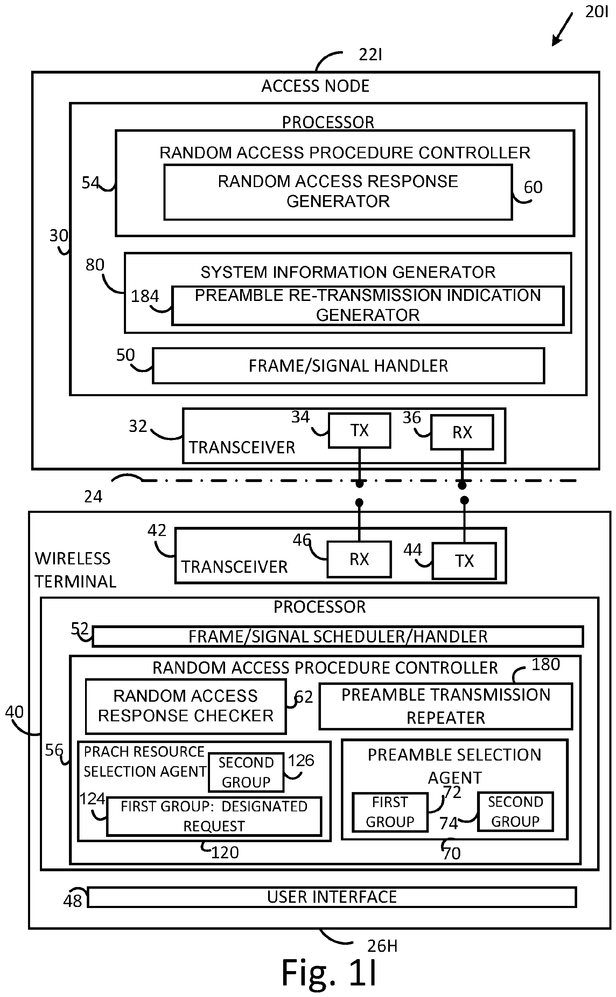

To cater to the transmission of information between radio access node 22A and wireless terminal 26 over radio interface 24, the node processor 30 and terminal processor 40 of Fig. 1 are shown as comprising respective information handlers. For an example implementation in which the information is communicated via frames, the information handler for radio access node 22 is shown as node frame/signal scheduler/handler 50, while the information handler for wireless terminal 26 is shown as terminal frame/signal handler 52. The terminal processor 40 further comprises synchronization information (SI) generator 54.

The technology disclosed herein particularly concerns random access procedure(s) and the base stations (e.g., radio access nodes) and wireless terminals that participate in the random access procedure(s), and methods of operation of such base stations/nodes and wireless terminals. To this end, radio access node 22A is shown as comprising node random access procedure controller 54 and wireless terminal 26A is shown as comprising terminal random access procedure controller 56. The node random access procedure controller 54 and terminal random access procedure controller 56 participate in the example embodiments and modes of the random access procedures described herein.

An example random access procedure generally includes five phases or aspects as briefly described below:

- Initialization Phase: The wireless terminal acquires necessary configuration information broadcasted as System Information from a current serving cell.
- Preamble Resource Selection Phase: The wireless terminal selects a random access preamble sequence from the set of sequences available in the serving cell.
- Preamble Transmission Phase: In first RACH message (Msg1) the wireless terminal transmits the selected preamble sequence on the physical channel, e.g., physical random access channel (PRACH), using the radio resources configured by the cell through system information broadcast.
- Random Access Response (RAR) Reception Phase: The UE monitors designated downlink channels to receive RAR in a second RACH message (Msg2 which contains necessary information to be used in the subsequent uplink transmissions.
- Contention Resolution Phase: When the UE detects successful reception of the RAR, it transmits an upper layer (RRC) message (Msg3), then attempts to receive (RRC) message (Msg4) with Contention Resolution Identity that indicates a successful or unsuccessful result of the contention resolution.

The node random access procedure controller 54 and terminal random access procedure controller 56 participate in some or all of the aspects above described, and do so in manners further described herein with respect to certain example embodiments and modes.

## 1. **FIRST NOT CLAIMED EMBODIMENT**

A first example embodiment and mode of a random access procedure of the technology disclosed herein is illustrated in Fig. 1A, Fig. 2A, Fig. 3A, Fig. 4A, and Fig. 5A-1, Fig. A-2, Fig. 5A-3, Fig. 5A-4, Fig. A-4a, and Fig. 5A-4b. Fig. 1A shows structure and functionalities of radio access node 22A and wireless terminal 26A; Fig. 2A shows acts involved in the random access procedure of the first embodiment including messages; Fig. 3A shows example acts or steps specifically performed by wireless terminal 26A; Fig. 4A shows example acts or steps specifically performed by radio access node 22A; and Fig. 5A-1, Fig. 5A-2, Fig. 5A-3, Fig. A-4, Fig. 5A-4a, and Fig. 5A-4b show example formats and example contents of some of the messages comprising the random access procedure of the first example embodiment and mode.

As shown in Fig. 1A, the node random access procedure controller 54 of node processor 30 comprises random access response generator 60, and the terminal random access procedure controller 56 of wireless terminal 26A comprises random access response checker 62. As explained herein, according to the first example embodiment and mode the wireless terminal 26A may confirm successful receipt by the radio access node 22A of a preamble sequence transmitted to the radio access node 22A, such confirmation occurring upon receiving, in the Random Access Response (RAR) phase, an indication from the radio access node 22A of successful receipt. In some example implementations of the example embodiments and modes described herein, the indication of successful receipt of the preamble sequence may also be referred to as "RAPID", e.g., random access preamble identifier.

Fig. 2A shows basic example acts involved in the random access procedure of the first embodiment including messages. Act 2A-1 represents the initialization phase and as such depicts the radio access node 22A transmitting, and wireless terminal 26A receiving, configuration parameters. The configuration parameters may be broadcast as system information from the serving cell (e.g., the cell based at radio access node 22A and serving wireless terminal 26A). Act 2A-2 represents the preamble resource selection phase wherein the wireless terminal 26A selects a random access preamble sequence from a set of sequences available in the serving cell. Act 2A-3 represents the preamble transmission phase in which the wireless terminal 26A transmits the selected preamble sequence on a physical channel (PRACH) using radio resources configured by the cell and communicated in act 2A-1. The transmission of act 2A-3 is depicted as the Msg1 of the random access procedure.

Act 2A-4 represents the radio access node 22A processing and generating a response to the preamble transmission message (Msg1) of act 2A-3. In processing the preamble transmission message (Msg1) of act 2A-3, the node random access procedure controller 54 takes note of the preamble sequence included in message Msg1. Further, as act 2A-5 the node random access procedure controller 54 causes the random access response generator 60 to generate a Random Access Response (RAR) message, Msg2, which includes in downlink information an indication of successful receipt of the preamble sequence. The indication of successful receipt of the preamble sequence is also known as the "indication". In some example implementations in which the indication relates to a preamble sequence used by the wireless terminal 26 in Msg1 of the random access procedure, the indication may also be referred to as "RAPID". Different ways in which the indication of successful receipt of the preamble sequence may be expressed and/or formatted in the Random Access Response Msg2 are described in differing embodiments and modes herein.

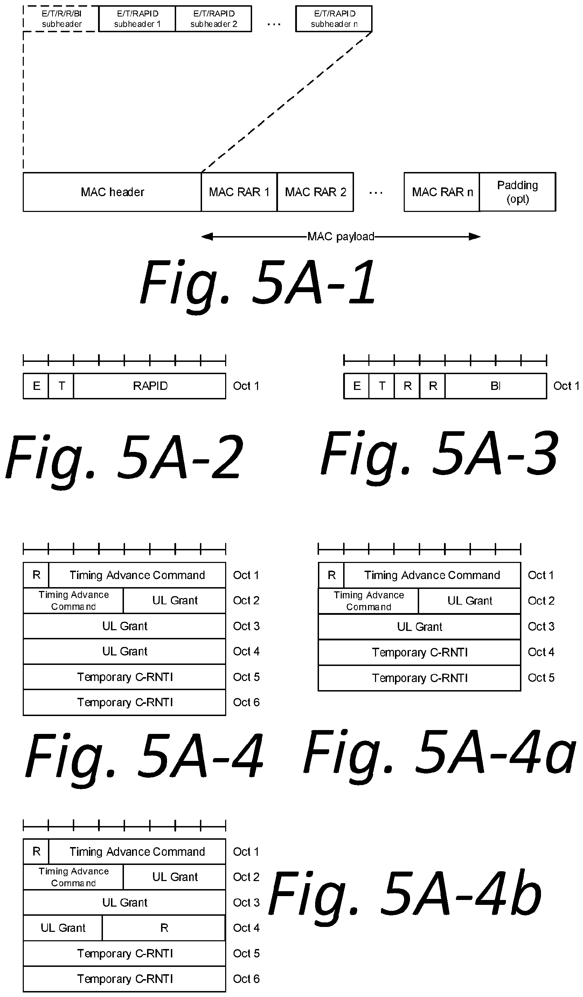

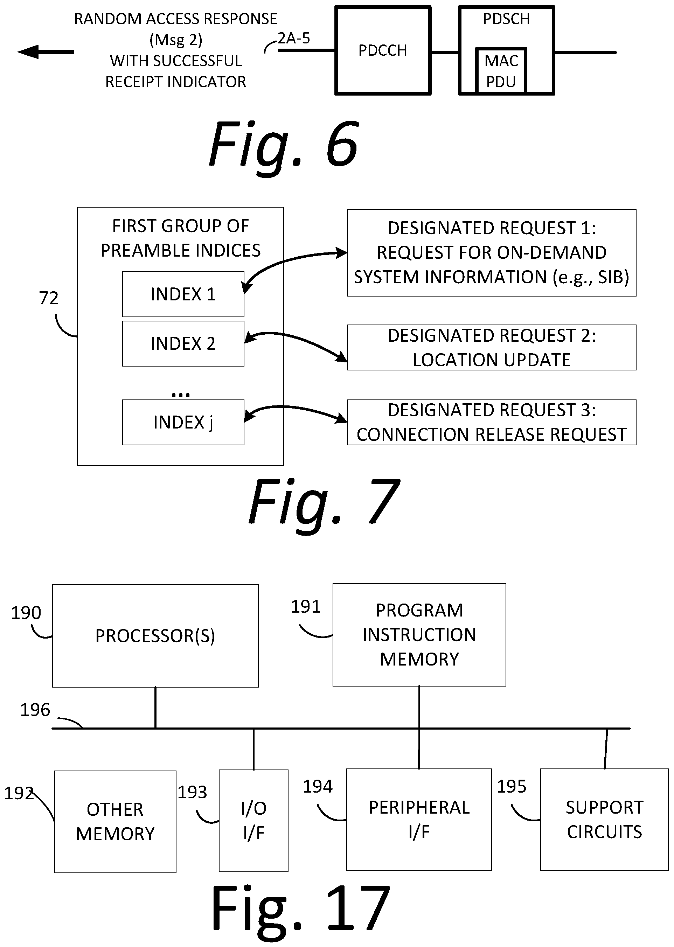

The "downlink information" in which the indication of successful receipt of the preamble sequence is included may include any type of transmission(s) from radio access node 22 to the wireless terminal 26 over the air interface. Fig. 6 illustrates that the downlink information of act 2A-5 and Msg2, and other comparable acts and messages described herein, may include both a Physical Downlink Control Channel (PDCCH) and a Physical Downlink Shared Channel (PDSCH). The Physical Downlink Control Channel (PDCCH) and Physical Downlink Shared Channel (PDSCH) may be included in a same frame or message, or in differing frames or messages; in a same subframe, slot or subslot, or in differing subframes, slots, or subslots. As shown in Fig. 6, the Physical Downlink Shared Channel (PDSCH) may comprise or carry one or more Medium Access Control (MAC) packet data units (PDU). In some example embodiments and modes described herein, the indication of successful receipt of the preamble sequence may be included in the Physical Downlink Control Channel (PDCCH), while in other example embodiments and modes the indication of successful receipt of the preamble sequence may be included in the MAC PDU of the Physical Downlink Shared Channel (PDSCH). For example, as herein described with reference to Fig.5A-1, for one non-limiting example implementation of the first example embodiment and mode, the indication of successful receipt of the preamble sequence is included in a MAC PDU of the Physical Downlink Shared Channel (PDSCH). In an example implementation, the terminal random access procedure controller 56, before receiving the MAC PDU, may monitor a downlink control signal to obtain resource allocation information for the downlink information that comprises the MAC PDU transmission. It should also be appreciated, that for the example embodiments and modes described herein, including the first example embodiment and mode, the indication of successful receipt of the preamble sequence may instead be included in the Physical Downlink Control Channel (PDCCH) (as understood from other subsequently described example embodiments and modes).

Act 2A-6 represents the Random Access Response (RAR) Reception phase. In the Random Access Response (RAR) Reception phase the random access response checker 62 monitors designated downlink (DL) channels by receiving and decoding downlink information. In particular, as act 2A-6-1 random access response checker 62 attempts to find from the downlink information the indication of successful receipt of the preamble sequence. In other words, the random access response checker 62 makes a determination regarding inclusion in the downlink information of an indication that the base station successfully received the preamble sequence sent by the wireless terminal. If the random access response checker 62 makes the determination of inclusion of the indication of successful receipt of the preamble sequence, then the random access response checker 62 can definitively confirm that the preamble sequence was successfully sent to and received by radio access node 22A (act 2A-6-2). Otherwise, if the indication of successful receipt of the preamble sequence was not found, the terminal random access procedure controller 56 may retransmit the preamble sequence or indicate a failure of the random access procedure to the upper layer.

For sake of context, Fig. 2A further shows act 2A-7 and act 2A-8 which comprise the Contention Resolution phase. Act 2A-7 comprises the terminal random access procedure controller 56, after successful detection of the Random Access Response (RAR), transmitting an upper layer (RRC) message (message Msg3). Act 2A-8 comprises the terminal random access procedure controller 56 subsequently attempting to receive the RRC message Msg4 which includes a contention resolution identity that indicates a successful or unsuccessful result of contention resolution.

Fig. 3A shows example acts or steps specifically performed by wireless terminal 26A. The acts of Fig. 3A may be performed by terminal random access procedure controller 56, which may comprise the terminal processor 40 executing instructions stored on non-transient memory. Act 3A-1 comprises the wireless terminal 26A receiving configuration parameters broadcasted from the base station. Act 3A-2 comprises generating and transmitting to the base station a preamble sequence, e.g., as message Msg1. Act 3A-3 comprises receiving and decoding downlink information from the base station, e.g., in/from message Msg2. Act 3A-4 comprises the random access response checker 62 making a determination regarding inclusion, in the downlink information of Msg2, an indication that the base station successfully received the preamble sequence sent by the wireless terminal.

Fig. 4A shows example acts or steps specifically performed by radio access node 22A. The acts of Fig. 4A may be performed by node random access procedure controller 54, which may comprise the node processor 30 executing instructions stored on non-transient memory. Act 4A-1 comprises the radio access node 22A broadcasting configuration parameters, e.g., in a system information block (SIB). Act 4A-2 comprises the radio access node 22A receiving (e.g., in message Msg1 from wireless terminal 26A) a preamble sequence generated/selected by wireless terminal 26A. Act 4A-3 comprises the random access response generator 60 generating, and the radio access node 22A transmitting (e.g., as Msg 2), downlink information comprising an indication of successful reception by the base station of the preamble sequence.

Fig. 5A-1, Fig. 5A-2, Fig. 5A-3, Fig. A-4, Fig. 5A-4a, and Fig. 5A-4b show example formats and example contents of some of the messages comprising the random access procedure of the first example embodiment and mode in an example implementation in which the indication of successful receipt of the preamble sequence is included in a Physical Downlink Shared Channel (PDSCH). As shown in Fig. A-1, the MAC PDU carried on the Physical Downlink Shared Channel (PDSCH) may comprise a MAC header and zero or more MAC Random Access Responses (MAC RAR) and optional padding. The MAC header may be of variable size. As further shown in Fig. 5A-1, the MAC PDU header may comprise one or more MAC PDU subheaders; each subheader corresponding to a MAC RAR except for a Backoff Indicator subheader. If included, the Backoff Indicator subheader may be only included once, and is the first subheader included within the MAC PDU header. A MAC PDU subheader may comprise the three header fields E/T/RAPID (as described Fig. 5A-2), except for the Backoff Indicator subheader which may comprise the five header field E/T/R/R/BI (as described in Fig. 5A-3). A MAC RAR may comprise the four fields R/Timing Advance Command/UL Grant Temporary C-RNTI (as shown in Fig. 5A-4, Fig. 5A-4a, and Fig. 5A-4b). For BL UEs and UEs in enhanced coverage in enhanced coverage level 2 or 3 the MAC RAR in Fig. 5A-4a is used, for a narrow band Internet-of- Things wireless terminal (NB-IoT UE) the MAC RAR in Fig. 5A-4b is used, otherwise the MAC RAR in Fig. 5A-4 is used. A "BL UE" is a Bandwidth reduced Low complexity UE and is a type of machine-type communication device using limited bandwidth of LTE radio.

Fig. 5A-1 and Fig. 5A-2 show, for example, that the "indication", e.g., the "RAPID", e.g., random access preamble identifier for some example implementations, may be included in a subheader of the MAC header of the MAC PDU. The indication may thus be included in a medium access control (MAC) protocol data unit (PDU) comprising the downlink data, the MAC PDU may comprise one or more preamble indices.

From the foregoing it will be appreciated that, in an example implementation, the MAC PDU (e.g., of Fig. 5A-1) may comprise a header and a payload, the header further comprising one or a plurality of subheaders, the payload further comprising one or a plurality of Random Access Responses (RARs), each of the subheaders comprising an index of a received preamble being associated with one of the RARs, the association being in such a way that the RARs are arranged in the order of their associated subheaders.

Having provided an overview of the first example embodiment and mode, a more detailed discussion follows and is structured according to the aforementioned example phases of the random access procedure.

**1-1 Initialization**

The Random Access procedure may be initiated by a Physical Downlink Control Channel (PDCCH) order, by the MAC sublayer itself or by the RRC sublayer. Random Access procedure on a Secondary Cell (SCell) may only be initiated by a PDCCH order. If a MAC entity receives a PDCCH transmission consistent with a PDCCH order masked with its C-RNTI, and for a specific Serving Cell, the MAC entity may initiate a Random Access procedure on this Serving Cell. For Random Access on the Special Cell (SpCell, a serving cell supporting PUCCH transmission and contention based Random Access) a PDCCH order or RRC may optionally indicate the *ra-PreambleIndex* and the *ra-PRACH-MaskIndex,* except for NB-IoT where the subcarrier index is indicated; and for Random Access on an SCell, the PDCCH order indicates the *ra-PreambleIndex* with a value different from 000000 and the *ra-PRACH-MaskIndex.* For the pTAG preamble transmission on PRACH and reception of a PDCCH order are only supported for SpCell. If the UE is an NB-IoT UE and is configured with a non-anchor carrier, perform the Random Access procedure on the anchor carrier. Before the procedure can be initiated, the following information for related Serving Cell is assumed to be available for UEs other than NB-IoT UEs, BL UEs or UEs in enhanced coverage, unless explicitly stated otherwise:

-    the available set of PRACH resources for the transmission of the Random Access Preamble, *prach-ConfigIndex.*

-    the groups of Random Access Preambles and the set of available Random Access Preambles in each group (SpCell only):
The preambles that are contained in Random Access Preambles group A and Random Access Preambles group B are calculated from the parameters *numberOfRA-Preambles* and *sizeOfRA-PreamblesGroupA:*
If *sizeOfRA-PreamblesGroupA* is equal to *numberOfRA-Preambles* then there is no Random Access Preambles group B. The preambles in Random Access Preamble group A are the preambles 0 to *sizeOfRA-PreamblesGroupA -* 1 and, if it exists, the preambles in Random Access Preamble group B are the preambles *sizeOfRA-PreamblesGroupA* to *numberOfRA-Preambles - 1* from the set of 64 preambles.

-    if Random Access Preambles group B exists, the thresholds, *messagePowerOffsetGroupB* and *messageSizeGroupA,* the configured UE transmitted power of the Serving Cell performing the Random Access Procedure, $P_{CMAX, c}$, and the offset between the preamble and Msg3, *deltaPreambleMsg3,* that are required for selecting one of the two groups of Random Access Preambles (SpCell only).

-    the RA response window size *ra-ResponseWindowSize.*

-    the power-ramping factor *powerRampingStep.*

-    the maximum number of preamble transmission *preambleTransMax.*

-    the initial preamble power *preambleInitialReceivedTargetPower.*

-    the preamble format based offset DELTA_PREAMBLE.

-    the maximum number of Msg3 HARQ transmissions *maxHARQ-Msg3Tx* (SpCell only).

-    the Contention Resolution Timer *mac-ContentionResolutionTimer* (SpCell only).

NOTE: The above parameters may be updated from upper layers before each Random Access procedure is initiated.
The following information for related Serving Cell is assumed to be available before the procedure can be initiated for NB-IoT UEs, BL UEs or UEs in enhanced coverage:

-    if the UE is a BL UE or a UE in enhanced coverage:

    -    the available set of PRACH resources associated with each enhanced coverage level supported in the Serving Cell for the transmission of the Random Access Preamble, *prach-ConfigIndex.*
    -    the groups of Random Access Preambles and the set of available Random Access Preambles in each group(SpCell only):

        The preambles that are contained in Random Access Preamble groups for each enhanced coverage level, if it exists, are the preambles *firstPreamble* to *lastPreamble.*

If *sizeOfRA-PreamblesGroupA* is not equal to *numberOfRA-Preambles,* Random Access Preambles group B exists for all enhanced coverage levels and is calculated as above.

NOTE: If Random Access Preamble group B exists, the eNB should ensure that at least one Random Access Preamble is contained in Random Access Preamble group A and Random Access Preamble group B for all enhanced coverage level.

- if the UE is a NB-IoT UE:

  - the available set of PRACH resources supported in the Serving Cell, *nprach-ParametersList.*

  - for random access resource selection and preamble transmission:

    - a PRACH resource is mapped into an enhanced coverage level.

    - each PRACH resource contains a set of *nprach-NumSubcarriers* subcarriers which can be partitioned into one or two groups for single/multi-tone Msg3 transmission by *nprach-SubcarrierMSG3-RangeStart* and *nprach-NumCBRA-StartSubcarriers* as configured by higher layers. Each group is referred to as a Random Access Preamble group below in the procedure text.

      - a subcarrier is identified by the subcarrier index in the range: *[nprach-SubcarrierOffset, nprach-SubcarrierOffset + nprach-NumSubcarriers* - 1]

      - each subcarrier of a Random Access Preamble group corresponds to a Random Access Preamble.

    - when the subcarrier index is explicitly sent from the eNB as part of a PDCCH order *ra-PreambleIndex* shall be set to the signalled subcarrier index.

  - the mapping of the PRACH resources into enhanced coverage levels is determined according to the following:

    - the number of enhanced coverage levels is equal to one plus the number of RSRP thresholds present in *rsrp-ThresholdsPrachInfoList.*

    - each enhanced coverage level has one PRACH resource present in *nprach-ParametersList.*

    - enhanced coverage levels are numbered from 0 and the mapping of PRACH resources to enhanced coverage levels are done in increasing *numRepetitionsPerPreambleAttempt* order.

- the criteria to select PRACH resources based on RSRP measurement per enhanced coverage level supported in the Serving Cell *rsrp-ThresholdsPrachInfoList.*

- the maximum number of preamble transmission attempts per enhanced coverage level supported in the Serving Cell *maxNumPreambleAttemptCE.*

- the number of repetitions required for preamble transmission per attempt for each enhanced coverage level supported in the Serving Cell *numRepetitionPerPreambleAttempt.*

- the configured UE transmitted power of the Serving Cell performing the Random Access Procedure, $P_{CMAX, c}$.

- the RA response window size *ra-ResponseWindowSize* and the Contention Resolution Timer *mac-ContentionResolutionTimer* (SpCell only) per enhanced coverage level supported in the Serving Cell.

- the power-ramping factor *powerRampingStep*.

- the maximum number of preamble transmission *preambleTransMax-CE.*

- the initial preamble power *preambleInitialReceivedTargetPower.*

- the preamble format based offset DELTA_PREAMBLE. For NB-IoT the DELTA_PREAMBLE is set to 0.

The configuration parameters described above are broadcasted via RRC system information messages.

The following is the structure of the information elements contained in the system information:

```
-- ASN1START

PRACH-ConfigSIB ::=              SEQUENCE {
    rootSequenceIndex               INTEGER (0..837),
    prach-ConfigInfo                PRACH-ConfigInfo
}

PRACH-ConfigSIB-v1310 ::=        SEQUENCE {
    rsrp-ThresholdsPrachInfoList-r13    RSRP-ThresholdsPrachInfoList-r13,
    mpdcch-startSF-CSS-RA-r13       CHOICE {
        fdd-r13                     ENUMERATED {v1, v1dot5, v2, v2dot5, v4, v5,
v8,
                                         v10},
        tdd-r13                     ENUMERATED {v1, v2, v4, v5, v8, v10, v20,
spare}
    }                                                    OPTIONAL,    --
Cond MP
    prach-HoppingOffset-r13         INTEGER (0..94)
    OPTIONAL,    -- Need OR
    prach-ParametersListCE-r13      PRACH-ParametersListCE-r13
}

PRACH-Config ::=                 SEQUENCE {
    rootSequenceIndex               INTEGER (0..837),
```

```
        prach-ConfigInfo               PRACH-
ConfigInfo               OPTIONAL    -- Need ON
}


PRACH-Config-v1310 ::=              SEQUENCE {
    rsrp-ThresholdsPrachInfoList-r13      RSRP-ThresholdsPrachInfoList-r13
    OPTIONAL,    -- Cond HO
    mpdcch-startSF-CSS-RA-r13          CHOICE {
        fdd-r13                    ENUMERATED {v1, v1dot5, v2, v2dot5, v4, v5,
v8,
                                   v10},
        tdd-r13                    ENUMERATED {v1, v2, v4, v5, v8, v10, v20,
spare}
    }                                                OPTIONAL,    --
Cond MP
    prach-HoppingOffset-r13            INTEGER (0..94)
    OPTIONAL,    -- Need OR
    prach-ParametersListCE-r13         PRACH-ParametersListCE-r13
    OPTIONAL,    -- Cond MP
    initial-CE-level-r13               INTEGER (0..3)        OPTIONAL    -- Need OR
}


PRACH-Config-v14xy ::=             SEQUENCE {
    rootSequenceIndexHighSpeed-r14            INTEGER (0..837),
    zeroCorrelationZoneConfigHighSpeed-r14       INTEGER (0..12)
}


PRACH-ConfigSCell-r10 ::=          SEQUENCE {
    prach-ConfigIndex-r10              INTEGER (0..63)
}


PRACH-ConfigInfo ::=               SEQUENCE {
    prach-ConfigIndex                 INTEGER (0..63),
    highSpeedFlag                     BOOLEAN,
    zeroCorrelationZoneConfig         INTEGER (0..15),
    prach-FreqOffset                  INTEGER (0..94)
}


PRACH-ParametersListCE-r13 ::= SEQUENCE (SIZE(1..maxCE-Level-r13)) OF PRACH-
ParametersCE-r13


PRACH-ParametersCE-r13 ::=         SEQUENCE {
    prach-ConfigIndex-r13             INTEGER (0..63),
    prach-FreqOffset-r13              INTEGER (0..94),
    prach-StartingSubframe-r13        ENUMERATED {sf2, sf4, sf8, sf16, sf32,
sf64, sf128,
                                   sf256}        OPTIONAL,    --
Need OP
    maxNumPreambleAttemptCE-r13
```

```
                                    ENUMERATED {n3, n4, n5, n6, n7, n8,
n10}    OPTIONAL,    -- Need OP
        numRepetitionPerPreambleAttempt-r13      ENUMERATED
{n1,n2,n4,n8,n16,n32,n64,n128},
        mpdcch-NarrowbandsToMonitor-r13              SEQUENCE (SIZE(1..2)) OF
                                                     INTEGER (1..maxAvailNarrowBands-
r13),
        mpdcch-NumRepetition-RA-r13                  ENUMERATED {r1, r2, r4, r8, r16,
                                                     r32, r64, r128, r256},
        prach-HoppingConfig-r13                      ENUMERATED {on,off}
}

RSRP-ThresholdsPrachInfoList-r13 ::= SEQUENCE (SIZE(1..3)) OF RSRP-Range

-- ASN1STOP
```

```
-- ASN1START

RACH-ConfigCommon ::=        SEQUENCE {
    preambleInfo                        SEQUENCE {
        numberOfRA-Preambles                ENUMERATED {
                                            n4, n8, n12, n16, n20, n24, n28,
                                            n32, n36, n40, n44, n48, n52, n56,
                                            n60, n64},
        preamblesGroupAConfig               SEQUENCE {
            sizeOfRA-PreamblesGroupA            ENUMERATED {
                                                n4, n8, n12, n16, n20, n24, n28,
                                                n32, n36, n40, n44, n48, n52, n56,
                                                n60},
            messageSizeGroupA                   ENUMERATED {b56, b144, b208,
b256},
            messagePowerOffsetGroupB            ENUMERATED {
                                                minusinfinity, dB0, dB5, dB8, dB10,
dB12,
                                                dB15, dB18},
            ...
        }           OPTIONAL                                         -- Need OP
    },
    powerRampingParameters              PowerRampingParameters,
    ra-SupervisionInfo                  SEQUENCE {
        preambleTransMax                    PreambleTransMax,
        ra-ResponseWindowSize               ENUMERATED {
                                            sf2, sf3, sf4, sf5, sf6, sf7,
                                            sf8, sf10},
        mac-ContentionResolutionTimer       ENUMERATED {
                                            sf8, sf16, sf24, sf32, sf40, sf48,
                                            sf56, sf64}
    },
    maxHARQ-Msg3Tx                      INTEGER (1..8),
```

```
    ....,
    [[    preambleTransMax-CE-
r13           PreambleTransMax                   OPTIONAL,    -- Need OR
         rach-CE-LevelInfoList-r13        RACH-CE-LevelInfoList-
r13           OPTIONAL     -- Need OR
    ]]
}


RACH-ConfigCommon-v1250 ::=       SEQUENCE {
   txFailParams-r12              SEQUENCE {
       connEstFailCount-r12                ENUMERATED {n1, n2, n3, n4},
       connEstFailOffsetValidity-r12       ENUMERATED {s30, s60, s120, s240,
                                                s300, s420, s600, s900},
       connEstFailOffset-r12               INTEGER (0..15)        OPTIONAL     --
Need OP
       }
}


RACH-ConfigCommonSCell-r11 ::=       SEQUENCE {
   powerRampingParameters-r11               PowerRampingParameters,
   ra-SupervisionInfo-r11                   SEQUENCE {
       preambleTransMax-r11                 PreambleTransMax
   },
   ...
}


RACH-CE-LevelInfoList-r13 ::=    SEQUENCE (SIZE (1..maxCE-Level-r13)) OF RACH-
CE-LevelInfo-r13


RACH-CE-LevelInfo-r13 ::=        SEQUENCE {
   preambleMappingInfo-r13               SEQUENCE {
       firstPreamble-r13                 INTEGER(0..63),
       lastPreamble-r13                  INTEGER(0..63)
   },
   ra-ResponseWindowSize-r13             ENUMERATED {sf20, sf50, sf80, sf120, sf180,
                                              sf240, sf320, sf400},

   mac-ContentionResolutionTimer-r13   ENUMERATED {sf80, sf100, sf120,
                                            sf160, sf200, sf240, sf480, sf960},
   rar-HoppingConfig-r13                ENUMERATED {on,off},
   ...
}


PowerRampingParameters ::=              SEQUENCE {
   powerRampingStep                     ENUMERATED {dB0, dB2,dB4, dB6},
   preambleInitialReceivedTargetPower   ENUMERATED {
                                        dBm-120, dBm-118, dBm-116, dBm-114, dBm-
112,
```

```
                                        dBm-110, dBm-108, dBm-106, dBm-104, dBm-
102,
                                        dBm-100, dBm-98, dBm-96, dBm-94,
                                        dBm-92, dBm-90}
}

PreambleTransMax ::=          ENUMERATED {
                                        n3, n4, n5, n6, n7,   n8, n10, n20, n50,
                                        n100, n200}

-- ASN1STOP
```

The Random Access procedure may be performed as follows:

- Flush the Msg3 buffer;f

- set the PREAMBLE_TRANSMISSION_COUNTER to 1;

- if the UE is an NB-IoT UE, a BL UE or a UE in enhanced coverage:

  - set the PREAMBLE_TRANSMISSION_COUNTER_CE to 1;

  - if the starting enhanced coverage level, or for NB-IoT the starting number of NPRACH repetitions, has been indicated in the PDCCH order which initiated the Random Access procedure, or if the starting enhanced coverage level has been provided by upper layers:

    - the MAC entity considers itself to be in that enhanced coverage level regardless of the measured RSRP;

  - else:

    - if the RSRP threshold of enhanced coverage level 3 is configured by upper layers in *rsrp-ThresholdsPrachInfoList* and the measured RSRP is less than the RSRP threshold of enhanced coverage level 3 and the UE is capable of enhanced coverage level 3 then:

      - the MAC entity considers to be in enhanced coverage level 3;

    - else if the RSRP threshold of enhanced coverage level 2 configured by upper layers in *rsrp-ThresholdsPrachInfoList* and the measured RSRP is less than the RSRP threshold of enhanced coverage level 2 and the UE is capable of enhanced coverage level 2 then:

      - the MAC entity considers to be in enhanced coverage level 2;

    - else if the measured RSRP is less than the RSRP threshold of enhanced coverage level 1 as configured by upper layers in *rsrp-ThresholdsPrachInfoList* then:

      - the MAC entity considers to be in enhanced coverage level 1;

    - else:

      - the MAC entity considers to be in enhanced coverage level 0;

- set the backoff parameter value to 0 ms;

- for the RN, suspend any RN subframe configuration;

- proceed to the selection of the Random Access Resource.

NOTE: There is only one Random Access procedure ongoing at any point in time in a MAC entity. If the MAC entity receives a request for a new Random Access procedure while another is already ongoing in the MAC entity, it is up to UE implementation whether to continue with the ongoing procedure or start with the new procedure.

## 1-2 Preamble Resource Selection

The Random Access Resource selection procedure may be performed as follows:

- If, except for NB-IoT, *ra-PreambleIndex* (Random Access Preamble) and *ra-PRACH-MaskIndex* (PRACH Mask Index) have been explicitly signalled and *ra-PreambleIndex* is not 000000:

  - the Random Access Preamble and the PRACH Mask Index may be those explicitly signalled;

- else, for NB-IoT, if *ra-PreambleIndex* (Random Access Preamble) and PRACH resource have been explicitly signalled:

  - the PRACH resource may be that explicitly signalled;

  - if the *ra-PreambleIndex* signalled is not 000000:

    - the Random Access Preamble may be set to *nprach-SubcarrierOffset* + (*ra-PreambleIndex* modulo *nprach-NumSubcarriers),* where *nprach-SubcarrierOffset* and *nprach-NumSubcarriers* may be parameters in the currently used PRACH resource.

  - else:

    - may select the Random Access Preamble group according to the PRACH resource and the support for multi-tone Msg3 transmission. A UE supporting multi-tone Msg3 may only select the single-tone Msg3 Random Access Preambles group if there is no multi-tone Msg3 Random Access Preambles group.

    - may randomly select a Random Access Preamble within the selected group.

- else the Random Access Preamble may be selected by the MAC entity as follows:

  - If Msg3 has not yet been transmitted, the MAC entity may, for NB-IoT UEs, BL UEs or UEs in enhanced coverage:

    - except for NB-IoT, may select the Random Access Preambles group and the PRACH resource corresponding to the selected enhanced coverage level;

    - for NB-IoT, may select the PRACH resource corresponding to the selected enhanced coverage level, and select the Random Access Preambles group corresponding to the PRACH resource and the support for multi-tone Msg3 transmission. A UE supporting multi-tone Msg3 shall only select the single-tone Msg3 Random Access Preambles group if there is no multi-tone Msg3 Random Access Preambles group.

  - If Msg3 has not yet been transmitted, the MAC entity may, except for BL UEs or UEs in enhanced coverage in case preamble group B does not exists, or for NB-IoT UEs:

    - if Random Access Preambles group B exists and any of the following events occur:

      - the potential message size (UL data available for transmission plus MAC header and, where required, MAC control elements) is greater than *messageSizeGroupA* and the pathloss is less than $P_{CMAX,c}$ (of the Serving Cell performing the Random Access Procedure) - *preambleInitialReceivedTargetPower - deltaPreambleMsg3 - messagePowerOffsetGroupB;*

      - the Random Access procedure was initiated for the CCCH logical channel and the CCCH SDU size plus MAC header is greater than *messageSizeGroupA*;

        - may select the Random Access Preambles group B;

- else:

    - may select the Random Access Preambles group A.

- else, if Msg3 is being retransmitted, the MAC entity may:

    - may select the same group of Random Access Preambles as was used for the preamble transmission attempt corresponding to the first transmission of Msg3.

- randomly select a Random Access Preamble within the selected group. The random function may be such that each of the allowed selections can be chosen with equal probability;

- except for NB-IoT, may set PRACH Mask Index to 0.

- determine the next available subframe containing PRACH permitted by the restrictions given by the *prach-ConfigIndex* (except for NB-IoT), the PRACH Mask Index (except for NB-IoT), physical layer timing requirements and in case of NB-IoT, the subframes occupied by PRACH resources related to a higher enhanced coverage level (a MAC entity may take into account the possible occurrence of measurement gaps when determining the next available PRACH subframe);

- if the transmission mode is TDD and the PRACH Mask Index is equal to zero:

    - if *ra-PreambleIndex* was explicitly signalled and it was not 000000 (i.e., not selected by MAC):

        - randomly select, with equal probability, one PRACH from the PRACHs available in the determined subframe.

    - else:

        - randomly select, with equal probability, one PRACH from the PRACHs available in the determined subframe and the next two consecutive subframes.

- else:

    - determine a PRACH within the determined subframe in accordance with the requirements of the PRACH Mask Index, if any.

- for NB-IoT UEs, BL UEs or UEs in enhanced coverage, may select the *ra-ResponseWindowSize* and *mac-ContentionResolutionTimer* corresponding to the selected enhanced coverage level and PRACH.

- proceed to the transmission of the Random Access Preamble.

**1-3 Random Access Preamble Transmission**

The random-access procedure may be performed as follows:

- set PREAMBLE_RECEIVED_TARGET_POWER to *preambleInitialReceivedTargetPower* + DELTA_PREAMBLE + (PREAMBLE_TRANSMISSION_COUNTER - 1) * *powerRampingStep;*

- if the UE is a BL UE or a UE in enhanced coverage:

    - the PREAMBLE_RECEIVED_TARGET_POWER may be set to:
      PREAMBLE_RECEIVED_TARGET_POWER - 10 * log10(*numRepetitionPerPreambleAttempt*);

- if NB-IoT:

    - for enhanced coverage level 0, the PREAMBLE_RECEIVED_TARGET_POWER may be set to:
      PREAMBLE_RECEIVED_TARGET_POWER - 10 * log10(*numRepetitionPerPreambleAttempt*)

- for other enhanced coverage levels, the PREAMBLE_RECEIVED_TARGET_POWER may be set corresponding to the max UE output power;

- if the UE is an NB-IoT UE, a BL UE or a UE in enhanced coverage:

  - may instruct the physical layer to transmit a preamble with the number of repetitions required for preamble transmission corresponding to the selected preamble group (i.e., *numRepetitionPerPreambleAttempt)* using the selected PRACH corresponding to the selected enhanced coverage level, corresponding RA-RNTI, preamble index or for NB-IoT subcarrier index, and PREAMBLE_RECEIVED_TARGET_POWER.

- else:

  - may instruct the physical layer to transmit a preamble using the selected PRACH, corresponding RA-RNTI, preamble index and PREAMBLE_RECEIVED_TARGET_POWER.

Note: The physical layer may generate a preamble sequence from the preamble index and the parameters contained in PRACH-ConfigInfo. When receiving the sequence, the eNB may be able to uniquely identify the preamble index corresponding to the sequence.

**1-4 Random Access Response reception**

Once the Random Access Preamble is transmitted, the MAC entity of the UE may monitor the PDCCH of the SpCell for Random Access Response(s) identified by the RA-RNTI defined below, in the RA Response window which starts at the subframe that contains the end of the preamble transmission plus three subframes and has length *ra-ResponseWindowSize* configured by RRC. If the UE is a BL UE or a UE in enhanced coverage, RA Response window starts at the subframe that contains the end of the last preamble repetition plus three subframes and has length *ra-ResponseWindowSize* for the corresponding coverage level. If the UE is an NB-IoT UE, in case the number of NPRACH repetitions is greater than or equal to 64, RA Response window starts at the subframe that contains the end of the last preamble repetition plus 41 subframes and has length *ra-ResponseWindowSize* for the corresponding coverage level, and in case the number of NPRACH repetitions is less than 64, RA Response window starts at the subframe that contains the end of the last preamble repetition plus 4 subframes and has length *ra-ResponseWindowSize* for the corresponding coverage level.

The RA-RNTI associated with the PRACH in which the Random Access Preamble is transmitted, is computed as:

$$RA\text{-}RNTI = 1 + t\_id + 10*f\_id$$

where t_id is the index of the first subframe of the specified PRACH ($0 \leq$ t_id <10), and f_id is the index of the specified PRACH within that subframe, in ascending order of frequency domain ($0 \leq$ f_id< 6) except for NB-IoT UEs, BL UEs or UEs in enhanced coverage. If the PRACH resource is on a TDD carrier, the f_id is set to $f_{RA}$, where $f_{RA}$ is is a frequency resource index within the considered time instance.

For BL UEs and UEs in enhanced coverage, RA-RNTI associated with the PRACH in which the Random Access Preamble is transmitted, is computed as:

$$RA\text{-}RNTI = 1 + t\_id + 10*f\_id + 60*(SFN\_id \bmod (Wmax/10))$$

where t_id is the index of the first subframe of the specified PRACH ($0 \leq$ t_id <10), f_id is the index of the specified PRACH within that subframe, in ascending order of frequency domain ($0 \leq$ f_id< 6), SFN_id is the index of the first radio frame of the specified PRACH, and Wmax is 400, maximum possible RAR window size in subframes for BL UEs or UEs in enhanced coverage. If the PRACH resource is on a TDD carrier, the f_id is set to $f_{RA}$.

For NB-IoT UEs, the RA-RNTI associated with the PRACH in which the Random Access Preamble is transmitted, is computed as:

$$RA\text{-}RNTI = 1 + floor(SFN\_id/4)$$

where SFN_id is the index of the first radio frame of the specified PRACH.

PDCCH carries DCI (Downlink Control Information), which includes resource assignments for a UE or group of UE's. The eNB can transmit many DCI's or PDCCH's in a subframe. When responding to a Random Access Preamble, the eNB may generate a DCI with Format 1A or 1C as shown in List 1 and List 2, respectively.

> - Flag for format0/format1A differentiation or flag for format0A/format1A differentiation
> - Localized/Distributed VRB assignment flag
> - Resource block assignment
> - Modulation and coding scheme
> - HARQ process number - reserved
> - New data indicator
> - Redundancy version - 2 bits
> - TPC command for PUCCH
> - Downlink Assignment Index - reserved.
> - SRS request
> - HARQ-ACK resource offset
> - SRS timing offset -present only when the DCI format is used for scheduling PDSCH in a LAA Scell and the UE is configured with uplink transmission on the LAA Scell.

**List 1 Format 1A**

> - 1 bit indicates the gap value
> - Resource block assignment
> - Modulation and coding scheme

**List 2 Format 1C**

The generated DCI may be attached with a Cyclic Redundancy Check (CRC) parity bits for error detection. The CRC parity bits may be further scrambled with a corresponding RNTI. In case of the DCI for Random Access Response, the aforementioned RA-RNTI may be used for scrambling the CRC.

The UE that monitors PDCCH may perform blind decoding of the PDCCH payload as it is not aware of the detailed control channel structure. Specifically, the UE under the process of Random Access Response reception may monitor a set of PDCCH candidates (a set of consecutive Control Channel Elements (CCEs) on which a PDCCH could be mapped). In this process the UE may use the aforementioned RA-RNTI for decoding the candidates.

After successful decoding of a DCI with the RA-RNTI, the UE may attempts to receive the Physical Downlink Shared Channel (PDSCH) whose resource allocation is specified in the Resource block assignment field of the DCI with either format 1A or 1C. Accordingly, the MAC entity of the UE may proceed with processing the DL-SCH transport block received in the assigned PDSCH resources as a MAC PDU (see 1-6) for Random Access Response. The UE may continue PDCCH decoding - PDSCH reception during the RA Response window.

The MAC entity may stop monitoring for Random Access Response(s) after successful reception of a Random Access Response containing Random Access Preamble identifiers (RAPID) that matches the transmitted Random Access Preamble.

- If a downlink assignment for this TTI has been received on the PDCCH for the RA-RNTI and the received TB is successfully decoded, the MAC entity may regardless of the possible occurrence of a measurement gap or a Sidelink Discovery Gap for Transmission or a Sidelink Discovery Gap for Reception:

  - if the Random Access Response contains a Backoff Indicator subheader:

    - may set the backoff parameter value as indicated by the BI field of the Backoff Indicator subheader.

  - else, may set the backoff parameter value to 0 ms.

  - if the Random Access Response contains a Random Access Preamble identifier corresponding to the transmitted Random Access Preamble, the MAC entity may:

- consider this Random Access Response reception successful and apply the following actions for the serving cell where the Random Access Preamble was transmitted:

  - may process the received Timing Advance Command (see subclause 5.2);

  - may indicate the *preambleInitialReceivedTargetPower* and the amount of power ramping applied to the latest preamble transmission to lower layers (i.e., (PREAMBLE_TRANSMISSION_COUNTER - 1) * *powerRampingStep);*

  - if the SCell is configured with *ul-Configuration-r14,* may ignore the received UL grant otherwise may process the received UL grant value and indicate it to the lower layers;

- if, except for NB-IoT, *ra-PreambleIndex* was explicitly signalled and it was not 000000 (i.e., not selected by MAC):

  - may consider the Random Access procedure successfully completed.

- else, if, except for NB-IoT, the Random Access Preamble was selected by the MAC entity, or for NB-IoT:

  - may set the Temporary C-RNTI to the value received in the Random Access Response message no later than at the time of the first transmission corresponding to the UL grant provided in the Random Access Response message;

  - if this is the first successfully received Random Access Response within this Random Access procedure:

    - if the transmission is not being made for the CCCH logical channel, may indicate to the Multiplexing and assembly entity to include a C-RNTI MAC control element in the subsequent uplink transmission;

    - may obtain the MAC PDU to transmit from the "Multiplexing and assembly" entity and store it in the Msg3 buffer.

NOTE: When an uplink transmission is required, e.g., for contention resolution, the eNB may not provide a grant smaller than 56 bits (or 88 bits for NB-IoT) in the Random Access Response.

NOTE: If within a Random Access procedure, an uplink grant provided in the Random Access Response for the same group of Random Access Preambles has a different size than the first uplink grant allocated during that Random Access procedure, the UE behavior is not defined.

If no Random Access Response is received within the RA Response window, or if none of all received Random Access Responses contains a Random Access Preamble identifier corresponding to the transmitted Random Access Preamble, the Random Access Response reception may be considered not successful and the MAC entity may:

- if the notification of power ramping suspension has not been received from lower layers:

  - increment PREAMBLE_TRANSMISSION_COUNTER by 1;

- if the UE is an NB-IoT UE, a BL UE or a UE in enhanced coverage:

  - if PREAMBLE_TRANSMISSION_COUNTER = *preambleTransMax-CE* + 1:

    - if the Random Access Preamble is transmitted on the SpCell:

      - indicate a Random Access problem to upper layers;

    - if NB-IoT:

      - consider the Random Access procedure unsuccessfully completed;

- else:

  - if PREAMBLE_TRANSMISSION_COUNTER = *preambleTransMax* + 1:

    - if the Random Access Preamble is transmitted on the SpCell:

      - indicate a Random Access problem to upper layers;

    - if the Random Access Preamble is transmitted on an SCell:

      - consider the Random Access procedure unsuccessfully completed.

- if in this Random Access procedure, the Random Access Preamble was selected by MAC:

  - based on the backoff parameter, may select a random backoff time according to a uniform distribution between 0 and the Backoff Parameter Value;
  - delay the subsequent Random Access transmission by the backoff time;

- else if the SCell where the Random Access Preamble was transmitted is configured with *ul-Configuration-r14:*

  - delay the subsequent Random Access transmission until the Random Access Procedure is initiated by a PDCCH order with the same *ra-PreambleIndex and ra-PRACH-MaskIndex;*

- if the UE is an NB-IoT UE, a BL UE or a UE in enhanced coverage:

  - increment PREAMBLE_TRANSMISSION_COUNTER_CE by 1;

  - if PREAMBLE_TRANSMISSION_COUNTER_CE = *maxNumPreambleAttemptCE* for the corresponding enhanced coverage level + 1:

    - reset PREAMBLE_TRANSMISSION_COUNTER _CE;

    - consider to be in the next enhanced coverage level, if it is supported by the Serving Cell and the UE, otherwise stay in the current enhanced coverage level;

    - select the Random Access Preambles group, *ra-ResponseWindowSize, mac-ContentionResolutionTimer,* and PRACH resource corresponding to the selected enhanced coverage level. A NB-IoT UE supporting multi-tone Msg3 may only select the single-tone Msg3 Random Access Preambles group if there is no multi-tone Msg3 Random Access Preambles group;

    - if the UE is an NB-IoT UE:

      - if the Random Access Procedure was initiated by a PDCCH order:

        - consider the PRACH resource corresponding to the selected enhanced coverage level as explicitly signalled;

- proceed to the selection of a Random Access Resource.

**1-5 Contention Resolution**

Contention Resolution may be based on either C-RNTI on PDCCH of the SpCell or UE Contention Resolution Identity on DL-SCH. If the UE is an NB-IoT UE, a BL UE or a UE in enhanced coverage, the MAC entity may use the *mac-ContentionResolutionTimer* for the corresponding enhanced coverage level if it exists.

Once Msg3 is transmitted, the MAC entity may:

- except for a BL UE or a UE in enhanced coverage, or a NB-IoT UE, start *mac-ContentionResolutionTimer* and restart *mac-ContentionResolutionTimer* at each HARQ retransmission;

- for a BL UE or a UE in enhanced coverage, or a NB-IoT UE, start *mac-ContentionResolutionTimer* and restart *mac-ContentionResolutionTimer* at each HARQ retransmission of the bundle in the subframe containing the last repetition of the corresponding PUSCH transmission;

- regardless of the possible occurrence of a measurement gap or Sidelink Discovery Gap for Reception, monitor the PDCCH until *mac-ContentionResolutionTimer* expires or is stopped;

- if notification of a reception of a PDCCH transmission is received from lower layers, the MAC entity may:

  - if the C-RNTI MAC control element was included in Msg3:

    - if the Random Access procedure was initiated by the MAC sublayer itself or by the RRC sublayer and the PDCCH transmission is addressed to the C-RNTI and contains an UL grant for a new transmission; or

    - if the Random Access procedure was initiated by a PDCCH order and the PDCCH transmission is addressed to the C-RNTI:

      - consider this Contention Resolution successful;

      - stop *mac-ContentionResolutionTimer;*

      - discard the Temporary C-RNTI;

      - if the UE is an NB-IoT UE and is configured with a non-anchor carrier:

        - the UL grant or DL assignment contained in the PDCCH transmission on the anchor carrier may be valid only for the non-anchor carrier.

      - consider this Random Access procedure successfully completed.

  - else if the CCCH SDU was included in Msg3 and the PDCCH transmission is addressed to its Temporary C-RNTI:

    - if the MAC PDU is successfully decoded:

      - stop *mac-ContentionResolutionTimer;*

      - if the MAC PDU contains a UE Contention Resolution Identity MAC control element; and

      - if the UE Contention Resolution Identity included in the MAC control element matches the 48 first bits of the CCCH SDU transmitted in Msg3:

        - consider this Contention Resolution successful and finish the disassembly and demultiplexing of the MAC PDU;

        - set the C-RNTI to the value of the Temporary C-RNTI;

        - discard the Temporary C-RNTI;

        - consider this Random Access procedure successfully completed.

    - else

      - discard the Temporary C-RNTI;
      - consider this Contention Resolution not successful and discard the successfully decoded MAC PDU.

- if *mac-ContentionResolutionTimer* expires:

  - discard the Temporary C-RNTI;

- consider the Contention Resolution not successful.

- if the Contention Resolution is considered not successful the MAC entity shall:

    - flush the HARQ buffer used for transmission of the MAC PDU in the Msg3 buffer;

        - if the notification of power ramping suspension has not been received from lower layers:

            - increment PREAMBLE_TRANSMISSION_COUNTER by 1;

    - if the UE is an NB-IoT UE, a BL UE or a UE in enhanced coverage:

        - if PREAMBLE_TRANSMISSION_COUNTER = *preambleTransMax-CE* + 1:

            - indicate a Random Access problem to upper layers.

            - if NB-IoT:

                - consider the Random Access procedure unsuccessfully completed;

    - else:

        - if PREAMBLE_TRANSMISSION_COUNTER = *preambleTransMax* + 1:

            - indicate a Random Access problem to upper layers.

- based on the backoff parameter, select a random backoff time according to a uniform distribution between 0 and the Backoff Parameter Value;

- delay the subsequent Random Access transmission by the backoff time;

- proceed to the selection of a Random Access Resource.

1-6 MAC PDU (Random Access Response)

A MAC PDU may consist of a MAC header and zero or more MAC Random Access Responses (MAC RAR) and optionally padding as described in figure 1-4.The MAC header may be of variable size.

A MAC PDU header may consist of one or more MAC PDU subheaders; each subheader corresponding to a MAC RAR except for the Backoff Indicator subheader. If included, the Backoff Indicator subheader may be only included once and is the first subheader included within the MAC PDU header.

A MAC PDU subheader may consist of the three header fields E/T/RAPID but for the Backoff Indicator subheader which may consist of the five header field E/T/R/R/BI.

A MAC RAR may consist of the four fields R/Timing Advance Command/UL Grant/Temporary C-RNTI.

Padding may occur after the last MAC RAR. Presence and length of padding is implicit based on TB size, size of MAC header and number of RARs.

## 2. SECOND CLAIMED EMBODIMENT

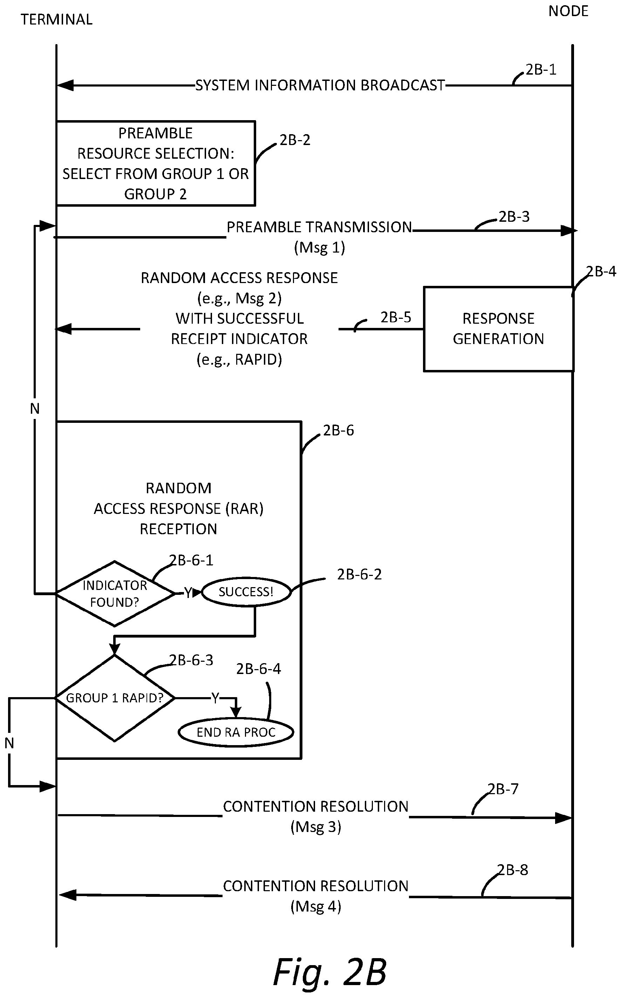

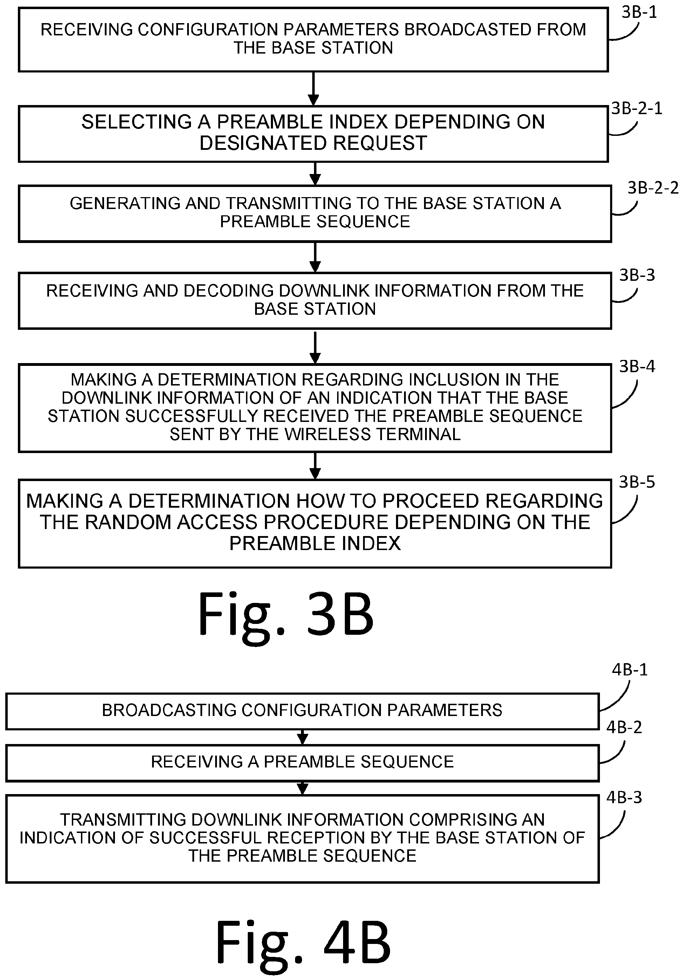

A second example embodiment and mode of a random access procedure of the technology disclosed herein is illustrated in Fig. 1B, Fig. 2B, Fig. 3B, Fig. 4B, and Fig. 5B-1, Fig. 5B-2, Fig. 5B-3, Fig. 5B-4, Fig. 5B-4a, and Fig. 5B-4b. Fig. 1B shows structure and functionalities of radio access node 22B and wireless terminal 26B; Fig. 2B shows acts involved in the random access procedure of the second embodiment including messages; Fig. 3B shows example acts or steps specifically performed by wireless terminal 26B; Fig. 4B shows example acts or steps specifically performed by radio access node 22B; and Fig. 5B-1, Fig. 5B-2, Fig. 5B-3, Fig. 5B-4, Fig. 5B-4a, and Fig. 5B-4b show example formats and example contents of some of the messages comprising the random access procedure of the second example embodiment and mode.

As shown in Fig. 1B, the node random access procedure controller 54 of node processor 30 comprises random access response generator 60. The terminal random access procedure controller 56 of wireless terminal 26B comprises random access response checker 62 and preamble/resource selection agent 70. As explained herein, according to the second example embodiment and mode the wireless terminal 26B may select a preamble index from a first preamble index group that is reserved and distinct for a set of designated requests, and may confirm successful receipt of a preamble sequence to the radio access node 22B and even terminate the random access procedure upon receiving from the radio access node 22B, in the Random Access Response (RAR) phase, an indication of successful receipt that evidences or relates to the selected preamble and/or its index. As with some other example implementations of the example embodiments and modes described herein, the indication of successful receipt of the preamble sequence may also be referred to as "RAPID", e.g., random access preamble identifier.

As shown in Fig. 1B, the preamble/resource selection agent 70 is configured to select a preamble index from one of plural preamble index groups. For sake of simplicity, two such preamble index groups are shown in Fig. 1B: preamble index first group 72 and preamble index second group 74. In other example implementations a greater number of groups may be provided. In the second example embodiment and mode, the preamble indices of the preamble index first group 72 are reserved and distinct for a set of designated requests. By "designated request" is meant some type of request, information, or action (not necessarily related to the random access procedure itself) which is sent from the wireless terminal 26B to the radio access node 22B. On the other hand, the preamble indices of the preamble index second group 74 are allocated to other purposes, e.g., purpose other than the designated requests of preamble index first group 72, including radio link connection establishment.

Fig. 7 shows that there may be an association between a preamble index of the preamble index first group 72 and a particular designated request. The associations between the preamble indices of the preamble index first group 72 and the designated request types may be predetermined, or may be dynamically changed by the network. As shown in Fig. 7, the associations may be one-to-one association, or alternatively or additionally plural preamble indices may be associated with a particular designated request. As shown in Fig. 7, one or more of the designated requests may be a request for on-demand delivery of system information, e.g., on-demand request of SIB(s). In fact, multiple preamble indices may be reserved for multiple SIBs/SIB groups. An on-demand request for one or more SIBs may occur because, e.g., to save bandwidth, such on-demand SIBs are not usually included in the system information that is broadcast by the network for basic access to the network. A request for on-demand delivery of system information is just one type of designated request to which a preamble index of preamble index first group 72 may be associated. Other types of designated requests (illustrated in Fig. 7) may include, by way of non-limiting example: location updates and connection release requests, and similar types of requests.

In another example implementation, each preamble index of preamble index first group 72 and its association to a designated request may be pre-configured at wireless terminal 26B. Alternatively, in another example implementation, each preamble index of preamble index first group 72 and its association to a designated request may be configured by the radio access node 22B, e.g., determined by the radio access node 22B and provided to the wireless terminal 26B.

Fig. 2B shows basic example acts involved in the random access procedure of the second embodiment including messages. Act 2B-1 represents the initialization phase and as such depicts the radio access node 22B transmitting, and wireless terminal 26A receiving, configuration parameters. The configuration parameters may be broadcast as system information from the serving cell (e.g., the cell based at radio access node 22B and serving wireless terminal 26B). Act 2B-2 represents the preamble resource selection phase wherein the wireless terminal 26B selects a random access preamble sequence from a set of sequences available in the serving cell. In the second example embodiment and mode, in the preamble resource selection phase the preamble/resource selection agent 70 has the choice of selecting a preamble index from the preamble index first group 72 or the preamble index second group 74 (or any other available groups). If this particular instance of the random access procedure is for a designated request, such as (for example) an on-demand request for system information, the preamble/resource selection agent 70 selects an appropriate preamble index for the designated requested from preamble index first group 72. Otherwise, if not for a designated request, the preamble/resource selection agent 70 selects the preamble index from preamble index second group 74.

Act 2B-3 represents the preamble transmission phase in which the wireless terminal 26A transmits the selected preamble sequence corresponding to the selected preamble index on a physical channel (PRACH) using radio resources configured by the cell and communicated in act 2B-1. The transmission of act 2B-3 is depicted as the Msg1 of the random access procedure.

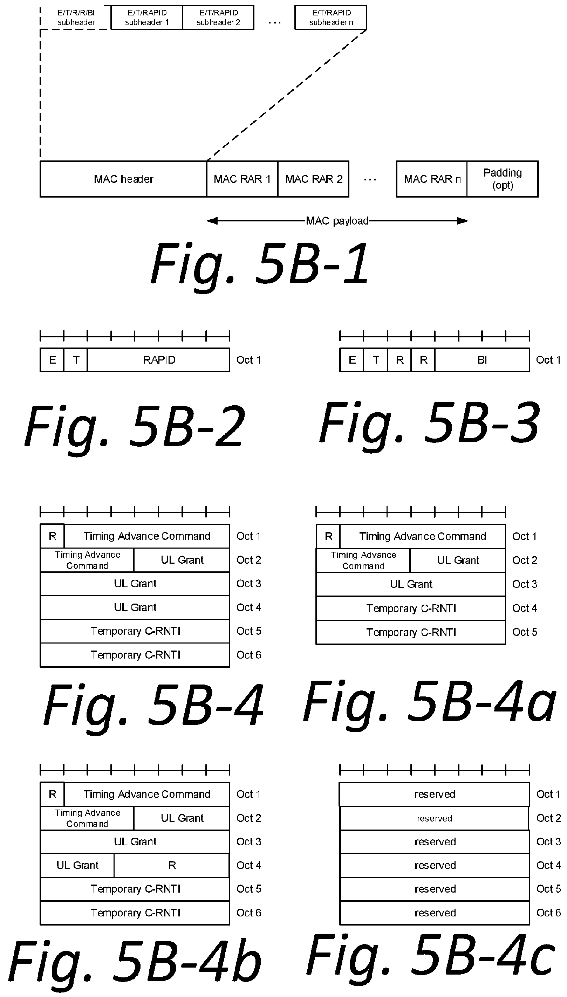

Act 2B-4 represents the radio access node 22B processing and generating a response to the preamble transmission message (Msg1) of act 2B-3. In processing the preamble transmission message (Msg1) of act 2B-3, the node random access procedure controller 54 takes note of the preamble sequence included in message Msg1. Further, as act 2B-5 the node random access procedure controller 54 causes the random access response generator 60 to generate a Random Access Response (RAR) message, Msg2, which includes in downlink information an indication of successful receipt of the preamble sequence, the concept of "indication" having been previously explained. In the second example embodiment and mode, the indication (e.g., RAPID) may be included in a subheader of a MAC PDU. The particular subheader in which the indication is included corresponds to the particular wireless terminal 26B, which may be one of several wireless terminals with which the radio access node 22B is communicating and thus associated with one of the subheaders in the header of the MAC PDU (see Fig. 5B-1).

Act 2B-6 represents the Random Access Response (RAR) Reception phase. In the Random Access Response (RAR) Reception phase the random access response checker 62 monitors designated downlink (DL) channels by receiving and decoding downlink information. In particular, as act 2B-6-1 random access response checker 62 attempts to find from the downlink information the indication of successful receipt of the preamble sequence. In other words, the random access response checker 62 makes a determination regarding inclusion in the downlink information of an indication that the base station successfully received the preamble sequence sent by the wireless terminal. If the random access response checker 62 makes the determination of inclusion of the indication of successful receipt of the preamble sequence, then as act 2B-6-2 the random access response checker 62 can definitively confirm that the preamble sequence was successfully sent to and received by radio access node 22B and proceed to act 2B-6-3. Otherwise, if the indication of successful receipt of the preamble sequence as not found, the terminal random access procedure controller 56 retransmits the preamble sequence (act 2B-3).

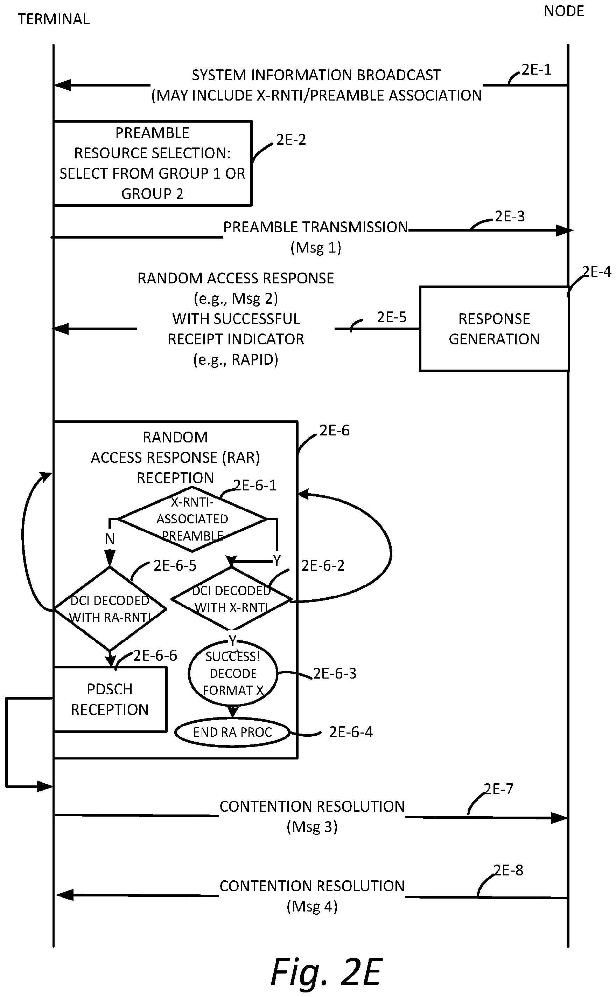

Upon successful detection of the indication of successful receipt of the preamble sequence, as act 2B-6-3 the random access response checker 62 further checks if the indication of successful receipt of the preamble sequence pertains to a preamble sequence corresponding to a preamble index of preamble index first group 72. If the check of act 2B-6-3 is affirmative, e.g., if the indication of successful receipt of the preamble sequence pertains to a preamble index belonging to preamble index first group 72, then as act 2B-6-4 the terminal random access procedure controller 56 realizes that the designated requested has been acknowledged, and can therefore essentially terminate the random access procedure. But if the indication of successful receipt of the preamble sequence pertains to a preamble index of preamble index second group 74, the terminal random access procedure controller 56 continues with the remainder of the random access procedure as indicated by other acts of Fig. 2B, e.g., contention resolution acts 2B-7 and 2B-8..

Thus, as understood, e.g., from Fig. 2B, the wireless terminal 26B processes a RAR associated with a subheader comprising one of the first preamble index group as a different format from the format used in RARs associated with subheaders with preamble indices in the second preamble index group.

Fig. 3B shows example acts or steps specifically performed by wireless terminal 26A. The acts of Fig. 3B may be performed by terminal random access procedure controller 56, which may comprise the terminal processor 40 executing instructions stored on non-transient memory. Act 3B-1 comprises the wireless terminal 26A receiving configuration parameters broadcasted from the base station.

Act 3B-2-1 comprises the preamble/resource selection agent 70 selecting a preamble index from one of preamble index first group 72 and preamble index second group 74. As explained above, whether the preamble/resource selection agent 70 selects a preamble index from preamble index first group 72 or preamble index second group 74, and if from preamble index first group 72, the particular preamble index of preamble index first group 72, depends on whether the random access procedure is for a designated request or not. Thus, in some sense act 3B-2 comprises the preamble/-resource selection agent 70 selecting a preamble index depending on designated request (e.g., whether there is or is not a designated request, and the particular type of designated request when a designated request is to be made). Act 3B-2-2 comprises generating and transmitting to the base station a preamble sequence, e.g., as message Msg1.

Act 3B-3 comprises receiving and decoding downlink information from the base station, e.g., in/from message Msg2. Act 3B-4 comprises the random access response checker 62 making a determination regarding inclusion in the downlink information of an indication that the base station successfully received the preamble sequence sent by the wireless terminal.

Act 3B-5 comprises the random access response checker 62 making a determination how to proceed regarding the random access procedure depending on the preamble index associated with the indication, e.g., depending on membership of the preamble index in either the preamble index first group 72 or the preamble index second group 74. For example, if the indication of successful receipt of the preamble sequence corresponds to a preamble index of preamble index first group 72, the terminal random access procedure controller 56 realizes that the objective of the random access procedure has been acknowledged and accordingly that the random access procedure may be terminated. On the other hand, if the indication of successful receipt of the preamble sequence corresponds to a preamble index of preamble index second group 74, the terminal random access procedure controller 56 continues with other phases of the random access procedure.

Fig. 4B shows example acts or steps specifically performed by radio access node 22B. The acts of Fig. 4B may be performed by node random access procedure controller 54, which may comprise the node processor 30 executing instructions stored on non-transient memory. Act 4B-1 comprises the radio access node 22B broadcasting configuration parameters, e.g., in a system information block (SIB). Act 4B-2 comprises the radio access node 22B receiving a preamble sequence corresponding to the selected preamble index (e.g., in message Msg1 from wireless terminal 26B). Act 4B-3 comprises the random access response generator 60 generating, and the radio access node 22B transmitting, downlink information comprising an indication of successful reception by the base station of the preamble sequence.

Fig. 5B-1, Fig. 5B-2, Fig. 5B-3, Fig. 5B-4, Fig. 5B-4a, Fig. 5B-4b, and Fig. 5B-4c show example formats and example contents of some of the messages comprising the random access procedure of the first example embodiment and mode in an example implementation in which the indication of successful receipt of the preamble sequence is included in a Physical Downlink Shared Channel (PDSCH). Fig. 5B-1, Fig. 5B-2, Fig. 5B-3, Fig. 5B-4, Fig. 5B-4a, Fig. 5B-4b are essentially the same as Fig. 5A-1, Fig. 5A-2, Fig. 5A-3, Fig. 5A-4, Fig. 5A-4a, Fig. 5A-4b, respectively.

If one of the reserved Random Access Preambles was used, the MAC RAR in Fig. 5B-4c may be used. Otherwise, a MAC RAR may consist of the four fields R/Timing Advance Command/UL Grant/Temporary C-RNTI (as described in Fig. 5B-4, Fig. 5B-4a, Fig. 5B-4b, and Fig. 5B-4c). For BL UEs and UEs in enhanced coverage in enhanced coverage level 2 or 3 the MAC RAR in Fig. 5B-4a is used, for NB-IoT UEs the MAC RAR in Fig. 5B-4b is used, otherwise the MAC RAR in Fig. 5B-4 is used.

Thus, in the second example embodiment and mode, a set of Random Access Preambles (e.g., one or more Random Access Preambles) and/or a set of PRACH resources (e.g., one or more PRACH resources) may be used by upper layer for special purposes. The set of Random Access Preambles and/or the set of PRACH resources described herein may be assumed to be included in the set of Random Access Preambles in some implementations for the sake of simple descriptions.

Specifically, one of such preambles may be selected by the upper layer to inform the network of a designated request/notification using the RACH process (e.g., the RACH procedure) without sending Msg3. For example, in case where the currently serving base station supports on-demand delivery of system information, a set of Random Access Preambles may be reserved for UEs to request transmission of system information blocks (SIBs). Such on-demand-based SIBs may be transmitted for a limited duration only when at least one UE in the coverage sends the request.

In one example configuration and implementation, such a set of preambles may be pre-determined. Namely, for example, such a set of preambles may be defined in advance by the specifications, and may be known information between the base station and the UE. In another configuration, such a set of preambles may be specified by upper layer (RRC), where RRC may acquire such a configuration from network by some periodically broadcasted messages.

In the case where the set of designated preambles to be used by upper layer is configured by the network for requesting on-demand delivery of SIBs, the following exemplary RRC information element may be broadcasted from the eNB. In one configuration, such an information element may be a part of Master Information Block (MIB), while in another configuration it may be a part of a periodically broadcasted SIB. Note that the exemplary information element is not intended to preclude any other possible configuration contents.

```
-- ASN1START

OnDemandSibGroupList ::=    SEQUENCE (SIZE (1..maxSIB-1)) OF OnDemandSibGroup

OnDemandSibGroup ::= SEQUENCE {
        sib-TypeList          SIB-TypeList,
        ra-PreambleIndex      INTEGER (0..63)
}
```

```
SIB-TypeList ::= SEQUENCE (SIZE (1..maxSIB-1)) OF SIB-Type

SIB-Type ::=                ENUMERATED {
                            sibType3, sibType4, sibType5, sibType6,
                            sibType7, sibType8, sibType9, sibType10,
                            sibType11, sibType12-v920, sibType13-v920,
                            sibType14-v1130, sibType15-v1130,
                            sibType16-v1130, sibType17-v1250, sibType18-v1250,
                            ..., sibType19-v1250, sibType20-v1310, sibType21-
v14x0}
}
```

```
-- ASN1STOP
```

| OnDemandSibGroupList field descriptions |
| --- |
| **sib-TypeList** <br> List of SIB types included in this SIB Group. |
| **ra-PreambleIndexSibGroup** <br> Index of the Random Access Preamble reserved for requesting the transmission of the SIBs in the SIB Group. |

The set of configured Random Access Preambles configured (e.g. ra-PreambleIndexSibGroup in the information element shown above) may be considered to be 'reserved' for upper layer to initiate designated requests/notifications, and therefore the MAC layer of the UE may not use such preambles for any other purposes. Upper layer may inform MAC layer of the reserved set of preamble during the initialization process, along with other configuration parameters.

When the UE decides to initiate a designated request/notification using the RACH process (such as requesting on-demand SIB delivery), the upper layer of the UE may select one of the available Random Access Preambles configured for the request/notification. Upper layer may instruct its MAC layer to initiate the RACH process using the selected Random Access Preamble.

Since Msg3 may not be transmitted in the scenario covered by this embodiment, as a response from the serving base station, a RAR PDU corresponding to the transmitted Random Access Preamble may not contain information necessary for the UE to proceed to the contention resolution phase. Such information may include Timing Advance Command, UL Grant and/or Temporary C-RNTI. In one configuration, the eNB may send reserve bits (e.g. all zeros) in the corresponding fields in the RAR PDU. The MAC entity of the UE, when receiving a MAC PDU comprising a MAC header and MAC RARs, may examine the MAC PDU to check if the Random Access Preamble identifier corresponding to the transmitted Random Access Preamble is included in the MAC header. If so, the MAC entity may ignore some or all part of the corresponding RAR PDU and report successful completion of the Random Access Procedure to the upper layer.

Having provided an overview of the second example embodiment and mode, a more detailed discussion follows and is structured according to the aforementioned example phases of the random access procedure.

**2-1 Initialization**

The Random Access procedure may be initiated by a Physical Downlink Control Channel (PDCCH) order, by the MAC sublayer itself or by the RRC sublayer. Random Access procedure on a Secondary Cell (SCell) may only be initiated by a PDCCH order. If a MAC entity receives a PDCCH transmission consistent with a PDCCH order masked with its C-RNTI, and for a specific Serving Cell, the MAC entity may initiate a Random Access procedure on this Serving Cell. For Random Access on the Special Cell (SpCell, a serving cell supporting PUCCH transmission and contention based Random Access) a PDCCH order or RRC may optionally indicate the *ra-PreambleIndex* and the *ra-PRACH-MaskIndex,* except for NB-IoT where the subcarrier index is indicated; and for Random Access on an SCell, the PDCCH order indicates the *ra-PreambleIndex* with a value different from 000000 and the *ra-PRACH-MaskIndex.* For the pTAG preamble transmission on PRACH and reception of a PDCCH order are only supported for SpCell. If the UE is an NB-IoT UE and is configured with a non-anchor carrier, perform the Random Access procedure on the anchor carrier. Before the procedure can be initiated, the following information for related Serving Cell is assumed to be available for UEs other than NB-IoT UEs, BL UEs or UEs in enhanced coverage, unless explicitly stated otherwise:

- the available set of PRACH resources for the transmission of the Random Access Preamble, *prach-ConfigIndex.*

- the groups of Random Access Preambles and the set of available Random Access Preambles in each group (SpCell only):
  The preambles that are contained in Random Access Preambles group A and Random Access Preambles group B are calculated from the parameters *numberOfRA-Preambles* and *sizeOfRA-PreamblesGroupA:*
  If *sizeOfRA-PreamblesGroupA* is equal to *numberOfRA-Preambles* then there is no Random Access Preambles group B. The preambles in Random Access Preamble group A are the preambles 0 to *sizeOfRA-PreamblesGroupA -* 1 and, if it exists, the preambles in Random Access Preamble group B are the preambles *sizeOfRA-PreamblesGroupA* to *numberOfRA-Preambles* - 1 from the set of 64 preambles.

- if Random Access Preambles group B exists, the thresholds, *messagePowerOffsetGroupB* and *messageSizeGroupA,* the configured UE transmitted power of the Serving Cell performing the Random Access Procedure, $P_{CMAX, c}$, and the offset between the preamble and Msg3, *deltaPreambleMsg3,* that are required for selecting one of the two groups of Random Access Preambles (SpCell only).

- the set of reserved Random Access Preambles.

- the RA response window size *ra-ResponseWindowSize.*

- the power-ramping factor *powerRampingStep.*

- the maximum number of preamble transmission *preambleTransMax.*

- the initial preamble power *preambleInitialReceivedTargetPower.*

- the preamble format based offset DELTA_PREAMBLE.

- the maximum number of Msg3 HARQ transmissions *maxHARQ-Msg3Tx* (SpCell only).

- the Contention Resolution Timer *mac-ContentionResolutionTimer* (SpCell only).

NOTE: The above parameters may be updated from upper layers before each Random Access procedure is initiated.

The following information for related Serving Cell is assumed to be available before the procedure can be initiated for NB-IoT UEs, BL UEs or UEs in enhanced coverage:

- if the UE is a BL UE or a UE in enhanced coverage:

    - the available set of PRACH resources associated with each enhanced coverage level supported in the Serving Cell for the transmission of the Random Access Preamble, *prach-ConfigIndex.*

    - the groups of Random Access Preambles and the set of available Random Access Preambles in each group(SpCell only):

        The preambles that are contained in Random Access Preamble groups for each enhanced coverage level, if it exists, are the preambles *firstPreamble* to *lastPreamble.*

        If *sizeOfRA-PreamblesGroupA* is not equal to *numberOfRA-Preambles,* Random Access Preambles group B exists for all enhanced coverage levels and is calculated as above.

NOTE: If Random Access Preamble group B exists, the eNB should ensure that at least one Random Access Preamble is contained in Random Access Preamble group A and Random Access Preamble group B for all enhanced coverage level.

- if the UE is a NB-IoT UE:

    - the available set of PRACH resources supported in the Serving Cell, *nprach-ParametersList.*

    - for random access resource selection and preamble transmission:

        - a PRACH resource is mapped into an enhanced coverage level.

        - each PRACH resource contains a set of *nprach-NumSubcarriers* subcarriers which can be partitioned into one or two groups for single/multi-tone Msg3 transmission by *nprach-SubcarrierMSG3-RangeStart* and *nprach-NumCBRA-StartSubcarriers* as configured by higher layers. Each group is referred to as a Random Access Preamble group below in the procedure text.

            - a subcarrier is identified by the subcarrier index in the range: *[nprach-SubcarrierOffset, nprach-SubcarrierOffset + nprach-NumSubcarriers - 1]*

            - each subcarrier of a Random Access Preamble group corresponds to a Random Access Preamble.

        - when the subcarrier index is explicitly sent from the eNB as part of a PDCCH order *ra-PreambleIndex* shall be set to the signalled subcarrier index.

- the mapping of the PRACH resources into enhanced coverage levels is determined according to the following:

  - the number of enhanced coverage levels is equal to one plus the number of RSRP thresholds present in *rsrp-ThresholdsPrachInfoList*.

  - each enhanced coverage level has one PRACH resource present in *nprach-ParametersList*.

  - enhanced coverage levels are numbered from 0 and the mapping of PRACH resources to enhanced coverage levels are done in increasing *numRepetitionsPerPreambleAttempt* order.

- the criteria to select PRACH resources based on RSRP measurement per enhanced coverage level supported in the Serving Cell *rsrp-ThresholdsPrachInfoList*.

- the maximum number of preamble transmission attempts per enhanced coverage level supported in the Serving Cell *maxNumPreambleAttemptCE*.

- the number of repetitions required for preamble transmission per attempt for each enhanced coverage level supported in the Serving Cell *numRepetitionPerPreambleAttempt*.

- the configured UE transmitted power of the Serving Cell performing the Random Access Procedure, $P_{CMAX, c}$.

- the RA response window size *ra-ResponseWindowSize* and the Contention Resolution Timer *mac-Contention-ResolutionTimer* (SpCell only) per enhanced coverage level supported in the Serving Cell.

- the power-ramping factor *powerRampingStep*.

- the maximum number of preamble transmission *preambleTransMax-CE*.

- the initial preamble power *preambleInitialReceivedTargetPower*.

- the preamble format based offset DELTA_PREAMBLE. For NB-IoT the DELTA_PREAMBLE is set to 0.

The Random Access procedure may be performed as follows:

- Flush the Msg3 buffer;f

- set the PREAMBLE_TRANSMISSION_COUNTER to 1;

- if the UE is an NB-IoT UE, a BL UE or a UE in enhanced coverage:

  - set the PREAMBLE_TRANSMISSION_COUNTER_CE to 1;

  - if the starting enhanced coverage level, or for NB-IoT the starting number of NPRACH repetitions, has been indicated in the PDCCH order which initiated the Random Access procedure, or if the starting enhanced coverage level has been provided by upper layers:

    - the MAC entity considers itself to be in that enhanced coverage level regardless of the measured RSRP;

  - else:

    - if the RSRP threshold of enhanced coverage level 3 is configured by upper layers in *rsrp-ThresholdsPrachInfoList* and the measured RSRP is less than the RSRP threshold of enhanced coverage level 3 and the UE is capable of enhanced coverage level 3 then:

      - the MAC entity considers to be in enhanced coverage level 3;

    - else if the RSRP threshold of enhanced coverage level 2 configured by upper layers in *rsrp-ThresholdsPrachInfoList* and the measured RSRP is less than the RSRP threshold of enhanced coverage level 2 and the UE is capable of enhanced coverage level 2 then:

- the MAC entity considers to be in enhanced coverage level 2;

- else if the measured RSRP is less than the RSRP threshold of enhanced coverage level 1 as configured by upper layers in *rsrp-ThresholdsPrachInfoList* then:

- the MAC entity considers to be in enhanced coverage level 1;

- else:

- the MAC entity considers to be in enhanced coverage level 0;

- set the backoff parameter value to 0 ms;

- for the RN, suspend any RN subframe configuration;

- proceed to the selection of the Random Access Resource.

NOTE: There is only one Random Access procedure ongoing at any point in time in a MAC entity. If the MAC entity receives a request for a new Random Access procedure while another is already ongoing in the MAC entity, it is up to UE implementation whether to continue with the ongoing procedure or start with the new procedure.

**2-2 Preamble Resource Selection**

The Random Access Resource selection procedure may be performed as follows:

- If, except for NB-IoT, *ra-PreambleIndex* (Random Access Preamble) and *ra-PRACH-MaskIndex* (PRACH Mask Index) have been explicitly signalled and *ra-PreambleIndex* is not 000000:

- the Random Access Preamble and the PRACH Mask Index may be those explicitly signalled;

- else, for NB-IoT, if *ra-PreambleIndex* (Random Access Preamble) and PRACH resource have been explicitly signalled:

- the PRACH resource may be that explicitly signalled;

- if the *ra-PreambleIndex* signalled is not 000000:

- the Random Access Preamble may be set to *nprach-SubcarrierOffset* + (*ra-PreambleIndex* modulo *nprach-NumSubcarriers*), where *nprach-SubcarrierOffset* and *nprach-NumSubcarriers* may be parameters in the currently used PRACH resource.

- else:

- may select the Random Access Preamble group according to the PRACH resource and the support for multi-tone Msg3 transmission. A UE supporting multi-tone Msg3 may only select the single-tone Msg3 Random Access Preambles group if there is no multi-tone Msg3 Random Access Preambles group.

- may randomly select a Random Access Preamble within the selected group.

- else if one of the reserved Random Access Preamble is selected by upper layer:

- the Random Access Preamble may be that selected by upper layer.

- else the Random Access Preamble is selected by the MAC entity as follows:

- If Msg3 has not yet been transmitted, the MAC entity may, for NB-IoT UEs, BL UEs or UEs in enhanced coverage:

- except for NB-IoT, may select the Random Access Preambles group and the PRACH resource corresponding to the selected enhanced coverage level;
- for NB-IoT, may select the PRACH resource corresponding to the selected enhanced coverage level, and select the Random Access Preambles group corresponding to the PRACH resource and the support for multi-tone Msg3 transmission. A UE supporting multi-tone Msg3 shall only select the single-tone Msg3 Random Access Preambles group if there is no multi-tone Msg3 Random Access Preambles group.

- If Msg3 has not yet been transmitted, the MAC entity may, except for BL UEs or UEs in enhanced coverage in case preamble group B does not exists, or for NB-IoT UEs:

    - if Random Access Preambles group B exists and any of the following events occur:

        - the potential message size (UL data available for transmission plus MAC header and, where required, MAC control elements) is greater than *messageSizeGroupA* and the pathloss is less than $P_{CMAX,c}$ (of the Serving Cell performing the Random Access Procedure) - *preambleInitialReceivedTargetPower* - *deltaPreambleMsg3* - *messagePowerOffsetGroupB;*

        - the Random Access procedure was initiated for the CCCH logical channel and the CCCH SDU size plus MAC header is greater than *messageSizeGroupA*;

            - may select the Random Access Preambles group B;

    - else:

        - may select the Random Access Preambles group A.

    - else, if Msg3 is being retransmitted, the MAC entity may:

        - may select the same group of Random Access Preambles as was used for the preamble transmission attempt corresponding to the first transmission of Msg3.

    - randomly select a Random Access Preamble within the selected group, excluding the reverved Random Access Preambles. The random function may be such that each of the allowed selections can be chosen with equal probability;

    - except for NB-IoT, may set PRACH Mask Index to 0.

- determine the next available subframe containing PRACH permitted by the restrictions given by the *prach-ConfigIndex* (except for NB-IoT), the PRACH Mask Index (except for NB-IoT), physical layer timing requirements and in case of NB-IoT, the subframes occupied by PRACH resources related to a higher enhanced coverage level (a MAC entity may take into account the possible occurrence of measurement gaps when determining the next available PRACH subframe);
- if the transmission mode is TDD and the PRACH Mask Index is equal to zero:

    - if *ra-PreambleIndex* was explicitly signalled and it was not 000000 (i.e., not selected by MAC):

        - randomly select, with equal probability, one PRACH from the PRACHs available in the determined subframe.

    - else:

        - randomly select, with equal probability, one PRACH from the PRACHs available in the determined subframe and the next two consecutive subframes.

- else:

    - determine a PRACH within the determined subframe in accordance with the requirements of the PRACH Mask Index, if any.

- for NB-IoT UEs, BL UEs or UEs in enhanced coverage, may select the *ra-ResponseWindowSize* and *mac-ContentionResolutionTimer* corresponding to the selected enhanced coverage level and PRACH.
- proceed to the Random Access Preamble transmission.

**2-3 Random Access Preamble Transmission**

See 1-3.

**2-4 Random Access Response reception**

Once the Random Access Preamble is transmitted, the MAC entity of the UE may monitor the PDCCH of the SpCell for Random Access Response(s) identified by the RA-RNTI defined below, in the RA Response window which starts at the subframe that contains the end of the preamble transmission plus three subframes and has length *ra-ResponseWindowSize* configured by RRC. If the UE is a BL UE or a UE in enhanced coverage, RA Response window starts at the subframe that contains the end of the last preamble repetition plus three subframes and has length *ra-ResponseWindowSize* for the corresponding coverage level. If the UE is an NB-IoT UE, in case the number of NPRACH repetitions is greater than or equal to 64, RA Response window starts at the subframe that contains the end of the last preamble repetition plus 41 subframes and has length *ra-ResponseWindowSize* for the corresponding coverage level, and in case the number of NPRACH repetitions is less than 64, RA Response window starts at the subframe that contains the end of the last preamble repetition plus 4 subframes and has length *ra-ResponseWindowSize* for the corresponding coverage level.

The RA-RNTI associated with the PRACH in which the Random Access Preamble is transmitted, is computed as:

$$RA\text{-}RNTI = 1 + t\_id + 10 * f\_id$$

where t_id is the index of the first subframe of the specified PRACH ($0 \leq$ t_id $<10$), and f_id is the index of the specified PRACH within that subframe, in ascending order of frequency domain ($0 \leq$ f_id$< 6$) except for NB-IoT UEs, BL UEs or UEs in enhanced coverage. If the PRACH resource is on a TDD carrier, the f_id is set to $f_{RA}$, where $f_{RA}$ is is a frequency resource index within the considered time instance.

For BL UEs and UEs in enhanced coverage, RA-RNTI associated with the PRACH in which the Random Access Preamble is transmitted, is computed as:

$$RA\text{-}RNTI = 1 + t\_id + 10 * f\_id + 60 * (SFN\_id \bmod (Wmax/10))$$

where t_id is the index of the first subframe of the specified PRACH ($0 \leq$ t_id $<10$), f_id is the index of the specified PRACH within that subframe, in ascending order of frequency domain ($0 \leq$ f_id$< 6$), SFN_id is the index of the first radio frame of the specified PRACH, and Wmax is 400, maximum possible RAR window size in subframes for BL UEs or UEs in enhanced coverage. If the PRACH resource is on a TDD carrier, the f_id is set to $f_{RA}$.

For NB-IoT UEs, the RA-RNTI associated with the PRACH in which the Random Access Preamble is transmitted, is computed as:

$$RA\text{-}RNTI = 1 + floor(SFN\_id/4)$$

where SFN_id is the index of the first radio frame of the specified PRACH.

PDCCH carries DCI ( Downlink Control Information), which includes resource assignments for a UE or group of UE's. The base station can transmit many DCI's or PDCCH's in a subframe. When responding to a Random Access Preamble, the base station may generate a DCI with Format 1A or 1C as shown in List 1 and List 2

- Flag for format0/format1A differentiation or flag for format0A/format1A differentiation
- Localized/Distributed VRB assignment flag
- Resource block assignment
- Modulation and coding scheme
- HARQ process number - reserved
- New data indicator
- Redundancy version - 2 bits
- TPC command for PUCCH

(continued)

| |
|---|
| - Downlink Assignment Index - reserved.<br>- SRS request<br>- HARQ-ACK resource offset<br>- SRS timing offset -present only when the DCI format is used for scheduling PDSCH in a LAA Scell and the UE is configured with uplink transmission on the LAA Scell. |

**List 1 Format 1A**

| |
|---|
| - 1 bit indicates the gap value<br>- Resource block assignment |
| - Modulation and coding scheme |

**List 2 Format 1C**

The generated DCI may be attached with a Cyclic Redundancy Check (CRC) parity bits for error detection. The CRC parity bits may be further scrambled with a corresponding RNTI. In case of the DCI for Random Access Response, the RA-RNTI may be used for scrambling the CRC.

The UE that monitors PDCCH may perform blind decoding of the PDCCH payload as it is not aware of the detailed control channel structure. Specifically, the UE under the process of Random Access Response reception may monitor a set of PDCCH candidates (a set of consecutive Control Channel Elements (CCEs) on which a PDCCH could be mapped). In this process the UE uses the aforementioned RA-RNTI for decoding the candidates.

After successful decoding of a DCI with the RA-RNTI, the UE may attempt to receive the Physical Downlink Shared Channel (PDSCH) whose resource is specified in the Resource block assignment field of the DCI with either format 1A or 1C. Accordingly, the MAC entity of the UE may proceed with processing the DL-SCH transport block received in the assigned PDSCH resources as a MAC PDU (see 1-6) for Random Access Response. The UE may continue PDCCH decoding PDSCH reception during the RA Response window.

The MAC entity may stop monitoring for Random Access Response(s) after successful reception of a Random Access Response containing Random Access Preamble identifiers that matches the transmitted Random Access Preamble.

- If a downlink assignment for this TTI has been received on the PDCCH for the RA-RNTI and the received TB is successfully decoded, the MAC entity may regardless of the possible occurrence of a measurement gap or a Sidelink Discovery Gap for Transmission or a Sidelink Discovery Gap for Reception:

    - if the Random Access Response contains a Backoff Indicator subheader:

        - may set the backoff parameter value as indicated by the BI field of the Backoff Indicator subheader.

    - else, may set the backoff parameter value to 0 ms.
    - if the Random Access Response contains a Random Access Preamble identifier corresponding to the transmitted Random Access Preamble, the MAC entity may:

        - if if the Random Access Preamble is selected by upper layer:

            - consider this Random Access Response reception successful and the Random Access procedure successfully completed.

        - else, consider this Random Access Response reception successful and apply the following actions for the serving cell where the Random Access Preamble was transmitted:

            - may process the received Timing Advance Command (see subclause 5.2);

- may indicate the *preambleInitialReceivedTargetPower* and the amount of power ramping applied to the latest preamble transmission to lower layers (i.e., (PREAMBLE_TRANSMISSION_COUNTER - 1) * *powerRampingStep*);

- if the SCell is configured with *ul-Configuration-r14,* may ignore the received UL grant otherwise may process the received UL grant value and indicate it to the lower layers;

- if, except for NB-IoT, *ra-PreambleIndex* was explicitly signalled and it was not 000000 (i.e., not selected by MAC):

  - may consider the Random Access procedure successfully completed.

- else, if, except for NB-IoT, the Random Access Preamble was selected by the MAC entity, or for NB-IoT:

  - may set the Temporary C-RNTI to the value received in the Random Access Response message no later than at the time of the first transmission corresponding to the UL grant provided in the Random Access Response message;

  - if this is the first successfully received Random Access Response within this Random Access procedure:

    - if the transmission is not being made for the CCCH logical channel, may indicate to the Multiplexing and assembly entity to include a C-RNTI MAC control element in the subsequent uplink transmission;

    - may obtain the MAC PDU to transmit from the "Multiplexing and assembly" entity and store it in the Msg3 buffer.

NOTE: When an uplink transmission is required, e.g., for contention resolution, the eNB may not provide a grant smaller than 56 bits (or 88 bits for NB-IoT) in the Random Access Response.

NOTE: If within a Random Access procedure, an uplink grant provided in the Random Access Response for the same group of Random Access Preambles has a different size than the first uplink grant allocated during that Random Access procedure, the UE behavior is not defined.

If no Random Access Response is received within the RA Response window, or if none of all received Random Access Responses contains a Random Access Preamble identifier corresponding to the transmitted Random Access Preamble, the Random Access Response reception may be considered not successful and the MAC entity may:

- if the notification of power ramping suspension has not been received from lower layers:

  - increment PREAMBLE_TRANSMISSION_COUNTER by 1;

- if the UE is an NB-IoT UE, a BL UE or a UE in enhanced coverage:

  - if PREAMBLE_TRANSMISSION_COUNTER = *preamble TransMax-CE* + 1:

    - if the Random Access Preamble is transmitted on the SpCell:

      - indicate a Random Access problem to upper layers;

    - if NB-IoT:

      - consider the Random Access procedure unsuccessfully completed;

- else:

  - if PREAMBLE_TRANSMISSION_COUNTER = *preamble TransMax* + 1:

- if the Random Access Preamble is transmitted on the SpCell:

    - indicate a Random Access problem to upper layers;

    - if the Random Access Preamble is transmitted on an SCell:

        - consider the Random Access procedure unsuccessfully completed.

- if in this Random Access procedure, the Random Access Preamble was selected by MAC:

    - based on the backoff parameter, may select a random backoff time according to a uniform distribution between 0 and the Backoff Parameter Value;

    - delay the subsequent Random Access transmission by the backoff time;

- else if the SCell where the Random Access Preamble was transmitted is configured with *ul-Configuration-r14:*

    - delay the subsequent Random Access transmission until the Random Access Procedure is initiated by a PDCCH order with the same *ra-PreambleIndex and ra-PRACH-MaskIndex*;

- if the UE is an NB-IoT UE, a BL UE or a UE in enhanced coverage:

    - increment PREAMBLE_TRANSMISSION_COUNTER_CE by 1;

    - if PREAMBLE_TRANSMISSION_COUNTER_CE = *maxNumPreambleAttemptCE* for the corresponding enhanced coverage level + 1:

        - reset PREAMBLE_TRANSMISSION_COUNTER _CE;
        - consider to be in the next enhanced coverage level, if it is supported by the Serving Cell and the UE, otherwise stay in the current enhanced coverage level;
        - select the Random Access Preambles group, *ra-ResponseWindowSize, mac-ContentionResolutionTimer,* and PRACH resource corresponding to the selected enhanced coverage level. A NB-IoT UE supporting multi-tone Msg3 may only select the single-tone Msg3 Random Access Preambles group if there is no multi-tone Msg3 Random Access Preambles group;
        - if the UE is an NB-IoT UE:

            - if the Random Access Procedure was initiated by a PDCCH order:

                - consider the PRACH resource corresponding to the selected enhanced coverage level as explicitly signalled;

- proceed to the selection of a Random Access Resource.

**2-5 Contention Resolution: see 1-5**

**3. THIRD NOT CLAIMED EMBODIMENT**

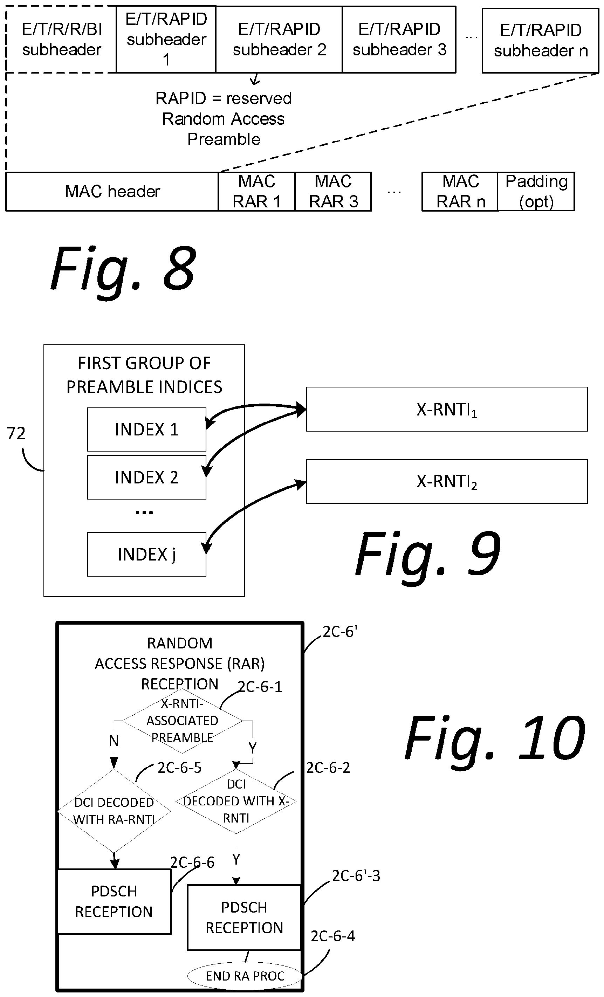

The third example embodiment and mode is essentially identical to the second example embodiment and mode, except that the MAC PDU payload does not contain MAC RAR that corresponds to the MAC subheader with the RAPID field being one of the reserved Random Access Preambles. In principle, the response of such a reserved preamble transmission associated with an upper layer designated request/notification may not have to contain information for contention resolution. The example of MAC PDU in this embodiment is illustrated in Fig. 8.

In the example MAC PDU shown in Fig. 8, the RAPID of subheader 2 is the reserved preamble index (e.g., selected from preamble index first group 72) and therefore there need be no RAR 2 in the MAC PDU payload. However, it is assumed that the RAPIDs in other subheaders 1, 3, ..., n are regular preamble indices each of which has associated RAR (1,3, ... , n) in the MAC PDU payload. The other RARs are included since the MAC PDU may be monitored not only by the UE that transmitted the reserved preamble but by other UEs that transmitted regular preambles. Each of these other UEs expects to receive one of the RAR fields 1, 3, ..., n as a regular p

rocess proceeding to Msg3 and needs to know that there is no RAR 2, in order to identify the correct RAR.

Thus, for the wireless terminal of the third example embodiment and mode, the terminal random access procedure controller 56 is configured to assume non-presence of a RAR in the payload when a subheader contains one of the preamble index first group 72.

### 4. FOURTH NOT CLAIMED EMBODIMENT

In a fourth example embodiment and mode a set of Radio Network Temporary Identifiers (RNTIs) is allocated and configured by the higher layer entity (RRC) of the network in the sake of Random Access Response for some of the designated requests/notifications described in the second embodiment. The set of RNTIs may comprise one or more RNTIs. In an example implementation of the fourth example embodiment and mode, one reserved Random Access Preamble disclosed in the second embodiment is associated with a designated value of RNTI (X-RNTI hereafter). A "reserved" random access preamble includes a random access preamble that is used for designated request(s) such as those described above.

By way of background, there are several different types of Radio Network Temporary Identifiers (RNTIs), including the following:

- - C-RNTI: unique identification used for identifying RRC Connection and scheduling;
- - RA-RNTI: identification used for the random access procedure (used for indicating initial transmission of Msg.3);
- - Temporary C-RNTI: identification used for the random access procedure (used for indicating retransmission of Msg.3);
- - SI-RNTI (System Information RNTI): identification used for identifying SI message.

To the above list this fourth example embodiment and mode adds another type of RNTI: the "X-RNTI", which may be an identification used for identifying that a designated request has been received, such as a request of a system information message such as an on-demand system information request. In one example configuration, the values allocated for X-RNTI may be distinct from other types of RNTIs. In another example configuration, the values for X-RNTI may be shared with some other types of RNTIs. For example, the X-RNTI may be equal to SI-RNTI.

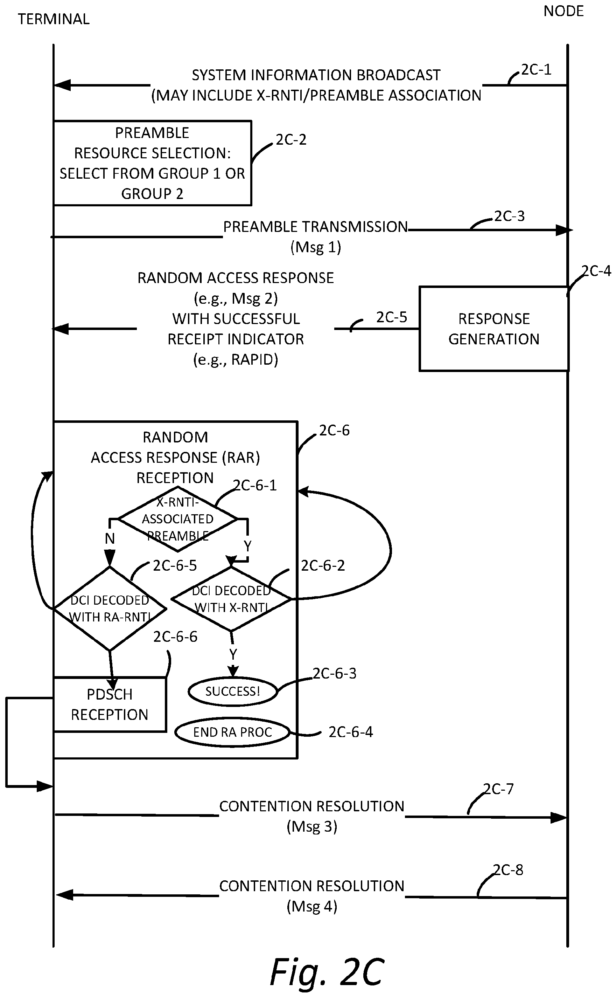

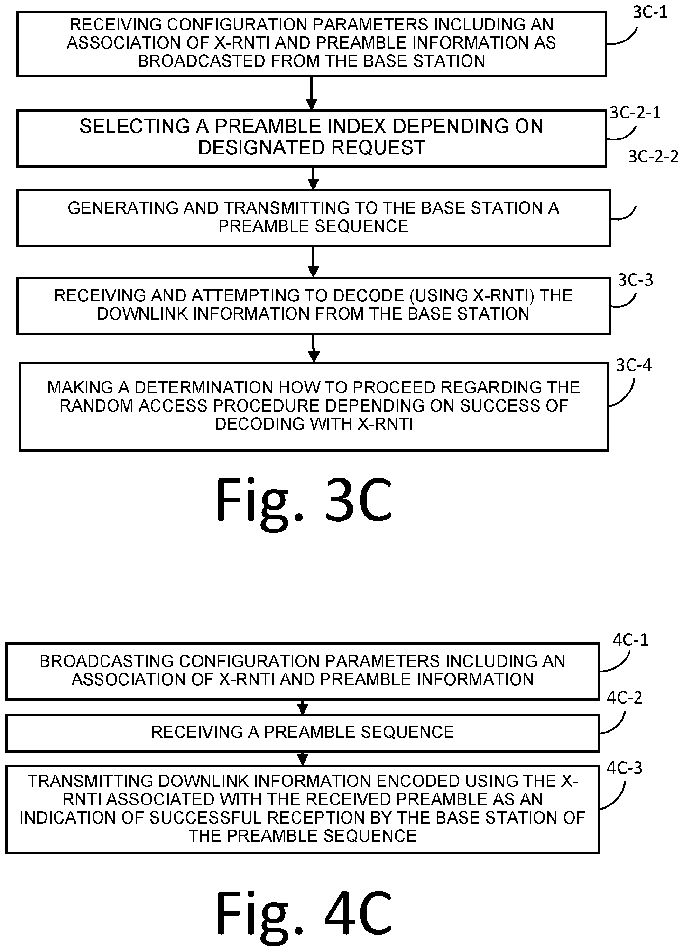

The fourth example embodiment and mode of a random access procedure of the technology disclosed herein is illustrated in Fig. 1C, Fig. 2C, Fig. 3C, and Fig. 4C. Fig. 1C shows structure and functionalities of radio access node 22C and wireless terminal 26C; Fig. 2C shows acts involved in the random access procedure of the second embodiment including messages; Fig. 3C shows example acts or steps specifically performed by wireless terminal 26C; and, Fig. 4C shows example acts or steps specifically performed by radio access node 22C.

As shown in Fig. 1C, the node processor 30 comprises system information generator 80. The system information generator 80 serves, e.g., to generate system information such as one or more system information blocks (SIBs). The system information generator 80 of Fig. 1C particularly includes X-RNTI/preamble association functionality 82. The X-RNTI/preamble association functionality 82 serves to associates random access preamble information, e.g., a random access preamble index or a preamble sequence, with Radio Network a Temporary Identifier (RNTI), and particularly the X-RNTI as mentioned above.

Fig. 1C further shows that the random access response checker 62C of the terminal random access procedure controller 56 is an X-RNTI-based RAR checker, and the preamble/resource selection agent 70C is an X-RNTI-based selection agent. As with the second and third example embodiments and modes, the X-RNTI-based selection agent 70C may select a preamble index from one of plural preamble index groups, e.g., from preamble index first group 72 and preamble index second group 74, wherein the preamble index first group 72 comprises preamble indices which are reserved and distinct for a set of designated requests, as explained above. The X-RNTI-based RAR checker 62C may confirm successful receipt of a preamble sequence by the radio access node 22A and even terminate the random access procedure upon receiving from the radio access node 22A, in the Random Access Response (RAR) phase, an indication of successful receipt that evidences or relates to the selected preamble and/or its index. Both the X-RNTI-based selection agent 70C and the X-RNTI-based RAR checker 62C know an association between the X-RNTI and the random access preamble information.

Fig. 9 illustrates an example, non-limiting association or mapping between preamble information and X-RNTI for the fourth example embodiment and mode. Fig. 9 particularly shows that one or more indices in the preamble index first group 72 may be associated with or mapped to an X-RNTI. The mapping of reserved Random Access Preambles and X-RNTI may be one-to-one, or N-to-one. In the latter case, more than one reserved Random Access Preambles are associated with one value of X-RNTI. A mapping such as that of Fig. 9 may be configured at wireless terminal 26C, e.g., at X-RNTI-based RAR checker 62C and X-RNTI-based selection agent 70C.

In one example configuration, the associations of preambles and X-RNTIs (depicted, for example, by Fig. 9) may be configured by a system information block (SIB) broadcasted by radio access node 22C. The system information generator 80 of Fig. 1C, using the X-RNTI/preamble association functionality 82 (which has information comparable to Fig. 9), prepares a system information block (SIB) for broadcast, e.g., as act 2C-1 described further here. In some configurations, X-RNTI may be equal to SI-RNTI. For example, in the case where the reserved Random Access Preambles are used for requesting on-demand delivery of SIBs, one exemplary RRC information element to be broadcasted for this configuration is shown below.

```
-- ASN1START

OnDemandSibGroupList ::=    SEQUENCE (SIZE (1..maxSIB-1}) OF OnDemandSibGroup

OnDemandSibGroup ::= SEQUENCE {
        sib-TypeList                    SIB-TypeList,
        ra-PreambleIndexSibGroup        INTEGER (0..63)
        x-RNTI                          BIT STRING (SIZE (16))
}

SIB-TypeList ::= SEQUENCE (SIZE (1..maxSIB-1)) OF SIB-Type

SIB-Type ::=                    ENUMERATED {
                                sibType3, sibType4, sibType5, sibType6,
                                sibType7, sibType8, sibType9, sibType10,
                                sibType11, sibType12-v920, sibType13-v920,
                                sibType14-v1130, sibType15-v1130,
                                sibType16-v1130, sibType17-v1250, sibType18-v1250,
                                ..., sibType19-v1250, sibType20-v1310, sibType21-
v14x0}
}


-- ASN1STOP
```

| *OnDemandSibGroupList* field descriptions |
|---|
| **sib-TypeList** <br> List of SIB types included in this SIB Group. |
| **ra-PreambleIndexSibGroup** <br> Index of the Random Access Preamble reserved for requesting the transmission of the SIBs in the SIB Group. |
| **x-RNTI** <br> This field indicates the X-RNTI associated with *ra-PreambleIndexSibGroup.* |

Fig. 2C shows basic example acts involved in the random access procedure of the fourth embodiment including messages. Act 2C-1 represents the initialization phase and as such depicts the radio access node 22C transmitting, and wireless terminal 26A receiving, configuration parameters. The configuration parameters may be broadcast as system information from the serving cell (e.g., the cell based at radio access node 22C and serving wireless terminal 26C). The configuration parameters may include the X-RNTI/preamble association, such as that depicted by Fig. 9 and understood with reference to the example RRC information element described above.

Act 2C-2 represents the preamble resource selection phase wherein the wireless terminal 26C selects a random access preamble sequence from a set of sequences available in the serving cell. In the fourth example embodiment and mode, like the second example embodiment and mode, in the preamble resource selection phase the X-RNTI-based selection agent 70C has the choice of selecting an preamble index from the preamble index first group 72 or the preamble index second group 74. If this particular instance of the random access procedure is for a designated request, such as (for example) an on-demand request for system information, the X-RNTI-based selection agent 70C selects an appropriate preamble index for the designated requested from preamble index first group 72. Otherwise, if not for a designated request, the X-RNTI-based selection agent 70C selects the preamble index from preamble index second group 74.

Act 2C-3 represents the preamble transmission phase in which the wireless terminal 26C transmits the selected preamble sequence corresponding to the selected preamble index on a physical channel (PRACH) using radio resources configured by the cell and communicated in act 2C-1. The transmission of act 2C-3 is depicted as the Msg1 of the random access procedure.

Act 2C-4 represents the radio access node 22C processing and generating a response to the preamble transmission message (Msg1) of act 2C-3. In processing the preamble transmission message (Msg1) of act 2C-3, the node random access procedure controller 54 takes note of the preamble sequence included in message Msg1. Further, as act 2C-5 the node random access procedure controller 54 causes the random access response generator 60 to generate downlink information which comprises or permits access to a Random Access Response (RAR) message, Msg2, which includes in downlink information an indication of successful receipt of the preamble sequence, the concept of "indication" having been previously explained. At least a portion of the downlink information which is generated as act 2C-4 may be encoded by system information generator 80 using the X-RNTI which, based on X-RNTI/preamble association functionality 82, the radio access node 22C knows is associated with the received preamble sequence. For example, the downlink information may be cyclically redundancy check (CRC) scrambled with the X-RNTI.

After transmitting one of the reserved Random Access Preambles, the wireless terminal 26C may monitor the downlink information received from the radio access node 22C. The terminal random access procedure controller 56 checks at act 2C-6-1 whether the preamble sequence used for Msg1 was associated with an X-RNTI, e.g., was associated with a designated request. If the check at act 2C-6-1 is affirmative, as act 2C-6-2 the terminal random access procedure controller 56 tries to decode the received downlink information using the X-RNTI that is associated with the preamble sequence that was transmitted in the preamble transmission message Msg1. For example, the wireless terminal 26C may monitor the PDCCH as described in the aforementioned embodiment, but in so doing may attempt to decode DCIs with the X-RNTI associated with the transmitted Random Access Preamble. In the particular act 2C-6 of Fig. 2C, the decoded DCI addressed with the X-RNTI does not include scheduling information for PDSCH. In this case, the format of the DCI addressed by the X-RNTI may be format 1A or 1C but each field of the DCI may contain a pre-determined value. As shown by act 2C-6-2 of Fig. 2C, the wireless terminal 26C attempts to decode the DCI with the X-RNTI associated with the preamble sequence transmitted to the radio access node 22C. If the DCI can be decoded using the X-RNTI, as shown by act 2C-6-3 the wireless terminal 26C may consider a successful decoding of the DCI with X-RNTI as a successful completion of the Random Access procedure. As indicated by act 2C-6-4, the terminal random access procedure controller 56 may at that point terminate the random access procedure without proceeding to PDSCH reception. If the DCI cannot be decoded using the X-RNTI, the wireless terminal 26C may continue monitoring PDCCH, attempting to decode other DCIs with the X-RNTI.

On the other hand, if it were determined as act 2C-6-1 that the transmitted preamble was not associated with an X-RNTI, e.g., that the wireless terminal 26C transmitted a preamble sequence that was other than a reserved preamble sequence (e.g., the wireless terminal 26C transmitted a preamble sequence having a preamble index associated with preamble index second group 74), act 2C-6-5 is performed. As act 2C-6-5 the terminal random access procedure controller 56 may monitor the PDCCH with the RA-RNTI. Namely, the wireless terminal 26C may attempt to decode DCI(s) with the RA-RNTI. In addition, the DCIs addressed with the RA-RNTI (i.e., CRC scrambled with the RA-RNTI) may have been used for scheduling of PDSCH for transmitting Msg.2 (e.g., RAR, see Fig. 5B-4, Fig. 5B-4a, and/or Fig. 5B-4b). After successful decoding of the DCI the wireless terminal 26C may proceed to PDSCH reception (as indicated by act 2C-6-6, and thereafter proceed with the random access procedure as indicated by the remainder of Fig. 2C. If the DCI cannot be decoded using the RA-RNTI, the wireless terminal 26C may continue monitoring PDCCH, attempting to decode other DCIs with the RA-RNTI.

Fig. 10 shows an alternate implementation of act 2C-6 of Fig. 2C, e.g., shows act 2C-6' in a scenario in which a DCI addressed with the X-RNTI may be used for scheduling of PDSCH to transmit Msg.2 (e.g., RAR, see Fig. 5B-4c). In this case, the format of the DCI may be format 1A or 1C as shown in List 1 and List 2, respectively. After successful decoding of the DCI as act 2C-6'-1 the UE may proceed to PDSCH reception (act 2C-6'-3), and thereafter end the random access procedure (act 2C-6-4). Similar to the case with no PDSCH, the terminal may continue monitoring PDCCH to find a DCI that can be decoded with X-RNTI or RA-RNTI.

The wireless terminal 26C may monitor the PDCCH with the RA-RNTI and/or the PDCCH with the X-RNTI based on the aforementioned parameter (i.e., *ra-ResponseWindowSize*) configured by RRC. Also, the wireless terminal 26C may monitor the PDCCH with the X-RNTI based on a parameter (e.g., *ra-ResponseWindowSize1*). The wireless terminal 26C may monitor the PDCCH with the X-RNTI, in a RA Response window which has a length determined based on the parameter (e.g., *ra-ResponseWindowSize1*). The parameter (e.g., *ra-ResponseWindowSize1*) may be configured by the eNB via MIB and/or SIB. Moreover, *a-ResponseWindowSize1* may be configured as a parameter separate from *ra-ResponseWindowSize*, or configured as the same parameter as *ra-ResponseWindowSize*.

Fig. 3C shows example acts or steps specifically performed by wireless terminal 26A. The acts of Fig. 3C may be performed by terminal random access procedure controller 56, which may comprise the terminal processor 40 executing instructions stored on non-transient memory. Act 3C-1 comprises the wireless terminal 26C receiving configuration parameters broadcasted from the base station, including configuration parameters associating an X-RNTI with preamble information.

Act 3C-2-1 comprises the preamble/resource selection agent 70 selecting a preamble index from one of preamble index first group 72 and preamble index second group 74. As explained above, whether the preamble/resource selection agent 70 selects a preamble index from preamble index first group 72 or preamble index second group 74, and if from preamble index first group 72, the particular preamble index of preamble index first group 72, depends on whether the random access procedure is for a designated request or not. Thus, in some sense act 3C-2 comprises the preamble/-resource selection agent 70 selecting a preamble index depending on designated request (e.g., whether there is or is not a designated request, and the particular type of designated request when a designated request is to be made). Act 3C-2-2 comprises generating and transmitting to the base station a preamble sequence, e.g., as message Msg1.

Act 3C-3 comprises receiving and attempting to decode downlink information from the base station, e.g., in/from message Msg2, and using the X-RNTI associated with the transmitted preamble sequence to perform the decoding of the downlink information.

Act 3C-4 comprises the X-RNTI-based RAR checker 62C making a determination how to proceed regarding the random access procedure depending on the decoding using the X-RNTI. If the downlink information can be decoded using the X-RNTI, the in at least some example implementations the random access procedure may be terminated.

Fig. 4C shows example acts or steps specifically performed by radio access node 22C. The acts of Fig. 4C may be performed by node random access procedure controller 54, which may comprise the node processor 30 executing instructions stored on non-transient memory. Act 4C-1 comprises the radio access node 22C broadcasting configuration parameters, e.g., in a system information block (SIB), which may include an association of X-RNTI and preamble information. Act 4C-2 comprises the radio access node 22C receiving a preamble sequence corresponding to the selected preamble index (e.g., in message Msg1 from wireless terminal 26B). Act 4C-3 comprises the random access response generator 60 generating, and the radio access node 22C transmitting, downlink information encoded with the X-RNTI that is associated with the received preamble sequence as an indication of successful reception by the base station of the preamble sequence.

Having provided an overview of the fourth example embodiment and mode, a more detailed discussion follows and is structured according to the aforementioned example phases of the random access procedure.

## 4-1 Initialization

The Random Access procedure may be initiated by a Physical Downlink Control Channel (PDCCH) order, by the MAC sublayer itself or by the RRC sublayer. Random Access procedure on a Secondary Cell (SCell) may only be initiated by a PDCCH order. If a MAC entity receives a PDCCH transmission consistent with a PDCCH order masked with its C-RNTI, and for a specific Serving Cell, the MAC entity may initiate a Random Access procedure on this Serving Cell. For Random Access on the Special Cell (SpCell, a serving cell supporting PUCCH transmission and contention based Random Access) a PDCCH order or RRC may optionally indicate the *ra-PreambleIndex* and the *ra-PRACH-MaskIndex,* except for NB-IoT where the subcarrier index is indicated; and for Random Access on an SCell, the PDCCH order indicates the *ra-PreambleIndex* with a value different from 000000 and the *ra-PRACH-MaskIndex.* For the pTAG preamble transmission on PRACH and reception of a PDCCH order are only supported for SpCell. If the UE is an NB-IoT UE and is configured with a non-anchor carrier, perform the Random Access procedure on the anchor carrier. Before the procedure can be initiated, the following information for related Serving Cell is assumed to be available for UEs other than NB-IoT UEs, BL UEs or UEs in enhanced coverage, unless explicitly stated otherwise:

- the available set of PRACH resources for the transmission of the Random Access Preamble, *prach-ConfigIndex.*

- the groups of Random Access Preambles and the set of available Random Access Preambles in each group (SpCell only):
  The preambles that are contained in Random Access Preambles group A and Random Access Preambles group B are calculated from the parameters *numberOfRA-Preambles* and *sizeOfRA-PreamblesGroupA*:
  If *sizeOfRA-PreamblesGroupA* is equal to *numberOfRA-Preambles* then there is no Random Access Preambles group B. The preambles in Random Access Preamble group A are the preambles 0 to *sizeOfRA-PreamblesGroupA -1* and, if it exists, the preambles in Random Access Preamble group B are the preambles *sizeOfRA-PreamblesGroupA* to *numberOfRA-Preambles - 1* from the set of 64 preambles.

- if Random Access Preambles group B exists, the thresholds, *messagePowerOffsetGroupB* and *messageSizeGroupA,* the configured UE transmitted power of the Serving Cell performing the Random Access Procedure, $P_{CMAX, c}$, and the offset between the preamble and Msg3, *deltaPreambleMsg3,* that are required for selecting one of the two groups of Random Access Preambles (SpCell only).

- the set of reserved Random Access Preambles.

- the X-RNTI value for each of reserved Random Access Preamble.

- the RA response window size *ra-ResponseWindowSize.*

- the power-ramping factor *powerRampingStep.*

- the maximum number of preamble transmission *preambleTransMax.*

- the initial preamble power *preambleInitialReceivedTargetPower.*

- the preamble format based offset DELTA_PREAMBLE.

- the maximum number of Msg3 HARQ transmissions *maxHARQ-Msg3Tx* (SpCell only).

- the Contention Resolution Timer *mac-ContentionResolutionTimer* (SpCell only).

NOTE: The above parameters may be updated from upper layers before each Random Access procedure is initiated.
The following information for related Serving Cell is assumed to be available before the procedure can be initiated for NB-IoT UEs, BL UEs or UEs in enhanced coverage:

- if the UE is a BL UE or a UE in enhanced coverage:

    - the available set of PRACH resources associated with each enhanced coverage level supported in the Serving Cell for the transmission of the Random Access Preamble, *prach-ConfigIndex.*

    - the groups of Random Access Preambles and the set of available Random Access Preambles in each group(SpCell only):

        The preambles that are contained in Random Access Preamble groups for each enhanced coverage level, if it exists, are the preambles *firstPreamble* to *lastPreamble.*
        If *sizeOfRA-PreamblesGroupA* is not equal to *numberOfRA-Preambles,* Random Access Preambles group B exists for all enhanced coverage levels and is calculated as above.

    NOTE: If Random Access Preamble group B exists, the eNB should ensure that at least one Random Access Preamble is contained in Random Access Preamble group A and Random Access Preamble group B for all enhanced coverage level.

- if the UE is a NB-IoT UE:

    - the available set of PRACH resources supported in the Serving Cell, *nprach-ParametersList.*

    - for random access resource selection and preamble transmission:

        - a PRACH resource is mapped into an enhanced coverage level.

        - each PRACH resource contains a set of *nprach-NumSubcarriers* subcarriers which can be partitioned into one or two groups for single/multi-tone Msg3 transmission by *nprach-SubcarrierMSG3-RangeStart* and *nprach-NumCBRA-StartSubcarriers* as configured by higher layers. Each group is referred to as a Random Access Preamble group below in the procedure text.

            - a subcarrier is identified by the subcarrier index in the range: *[nprach-SubcarrierOffset, nprach-SubcarrierOffset + nprach-NumSubcarriers -* 1]

            - each subcarrier of a Random Access Preamble group corresponds to a Random Access Preamble.

- when the subcarrier index is explicitly sent from the eNB as part of a PDCCH order *ra-PreambleIndex* shall be set to the signalled subcarrier index.

- the mapping of the PRACH resources into enhanced coverage levels is determined according to the following:

  - the number of enhanced coverage levels is equal to one plus the number of RSRP thresholds present in *rsrp-ThresholdsPrachInfoList.*

  - each enhanced coverage level has one PRACH resource present in *nprach-ParametersList.*

  - enhanced coverage levels are numbered from 0 and the mapping of PRACH resources to enhanced coverage levels are done in increasing *numRepetitionsPerPreambleAttempt* order.

- the criteria to select PRACH resources based on RSRP measurement per enhanced coverage level supported in the Serving Cell *rsrp-ThresholdsPrachInfoList.*

- the maximum number of preamble transmission attempts per enhanced coverage level supported in the Serving Cell *maxNumPreambleAttemptCE.*

- the number of repetitions required for preamble transmission per attempt for each enhanced coverage level supported in the Serving Cell *numRepetitionPerPreambleAttempt.*

- the configured UE transmitted power of the Serving Cell performing the Random Access Procedure, $P_{CMAX, c}$.

- the RA response window size *ra-ResponseWindowSize* and the Contention Resolution Timer *mac-ContentionResolutionTimer* (SpCell only) per enhanced coverage level supported in the Serving Cell.

- the power-ramping factor *powerRampingStep.*

- the maximum number of preamble transmission *preambleTransMax-CE.*

- the initial preamble power *preambleInitialReceivedTargetPower.*

- the preamble format based offset DELTA_PREAMBLE. For NB-IoT the DELTA_PREAMBLE is set to 0.

The Random Access procedure may be performed as follows:

- Flush the Msg3 buffer;f
- set the PREAMBLE_TRANSMISSION_COUNTER to 1;
- if the UE is an NB-IoT UE, a BL UE or a UE in enhanced coverage:

  - set the PREAMBLE_TRANSMISSION_COUNTER_CE to 1;

  - if the starting enhanced coverage level, or for NB-IoT the starting number of NPRACH repetitions, has been indicated in the PDCCH order which initiated the Random Access procedure, or if the starting enhanced coverage level has been provided by upper layers:

    - the MAC entity considers itself to be in that enhanced coverage level regardless of the measured RSRP;

  - else:

    - if the RSRP threshold of enhanced coverage level 3 is configured by upper layers in *rsrp-ThresholdsPrachInfoList* and the measured RSRP is less than the RSRP threshold of enhanced coverage level 3 and the UE is capable of enhanced coverage level 3 then:

      - the MAC entity considers to be in enhanced coverage level 3;

    - else if the RSRP threshold of enhanced coverage level 2 configured by upper layers in *rsrp-Threshold-*

*sPrachInfoList* and the measured RSRP is less than the RSRP threshold of enhanced coverage level 2 and the UE is capable of enhanced coverage level 2 then:

- the MAC entity considers to be in enhanced coverage level 2;

- else if the measured RSRP is less than the RSRP threshold of enhanced coverage level 1 as configured by upper layers in *rsrp-ThresholdsPrachInfoList* then:

- the MAC entity considers to be in enhanced coverage level 1;

- else:

- the MAC entity considers to be in enhanced coverage level 0;

- set the backoff parameter value to 0 ms;
- for the RN, suspend any RN subframe configuration;
- proceed to the selection of the Random Access Resource.

NOTE: There is only one Random Access procedure ongoing at any point in time in a MAC entity. If the MAC entity receives a request for a new Random Access procedure while another is already ongoing in the MAC entity, it is up to UE implementation whether to continue with the ongoing procedure or start with the new procedure.

### 4-2 Preamble Resource Selection

See 2-2.

### 4-3 Random Access Preamble Transmission

See 1-3.

### 4-4 Random Access Response reception

If one of the reserved Random Access Preamble is transmitted, the MAC entity of the UE may monitor the PDCCH of the SpCell for Random Access Response(s) identified by the X-RNTI associated with the transmitted Random Access Preamble, in the RA Response window which starts at the subframe that contains the end of the preamble transmission plus three subframes and has length *ra-ResponseWindowSize (or ra-ResponseWindowSize1)* configured by RRC. Otherwise, once the Random Access Preamble is transmitted, the MAC entity of the UE may monitor the PDCCH of the SpCell for Random Access Response(s) identified by the RA-RNTI defined below, in the RA Response window which starts at the subframe that contains the end of the preamble transmission plus three subframes and has length *ra-ResponseWindowSize* configured by RRC. If the UE is a BL UE or a UE in enhanced coverage, RA Response window starts at the subframe that contains the end of the last preamble repetition plus three subframes and has length *ra-ResponseWindowSize* for the corresponding coverage level. If the UE is an NB-IoT UE, in case the number of NPRACH repetitions is greater than or equal to 64, RA Response window starts at the subframe that contains the end of the last preamble repetition plus 41 subframes and has length *ra-ResponseWindowSize* for the corresponding coverage level, and in case the number of NPRACH repetitions is less than 64, RA Response window starts at the subframe that contains the end of the last preamble repetition plus 4 subframes and has length *ra-ResponseWindowSize* for the corresponding coverage level.

The RA-RNTI associated with the PRACH in which the Random Access Preamble is transmitted, is computed as:

$$\text{RA-RNTI} = 1 + t\_id + 10*f\_id$$

where t_id is the index of the first subframe of the specified PRACH ($0 \leq t\_id < 10$), and f_id is the index of the specified PRACH within that subframe, in ascending order of frequency domain ($0 \leq f\_id < 6$) except for NB-IoT UEs, BL UEs or UEs in enhanced coverage. If the PRACH resource is on a TDD carrier, the f_id is set to $f_{RA}$, where $f_{RA}$ is is a frequency resource index within the considered time instance.

For BL UEs and UEs in enhanced coverage, RA-RNTI associated with the PRACH in which the Random Access Preamble is transmitted, is computed as:

$$RA\text{-}RNTI=1+t\_id + 10*f\_id + 60*(SFN\_id \bmod (Wmax/10))$$

where t_id is the index of the first subframe of the specified PRACH ($0 \leq$ t_id <10), f_id is the index of the specified PRACH within that subframe, in ascending order of frequency domain ($0 \leq$ f_id< 6), SFN_id is the index of the first radio frame of the specified PRACH, and Wmax is 400, maximum possible RAR window size in subframes for BL UEs or UEs in enhanced coverage. If the PRACH resource is on a TDD carrier, the f_id is set to $f_{RA}$.

For NB-IoT UEs, the RA-RNTI associated with the PRACH in which the Random Access Preamble is transmitted, is computed as:

$$RA\text{-}RNTI=1+ floor(SFN\_id/4)$$

where SFN_id is the index of the first radio frame of the specified PRACH.

PDCCH carries DCI ( Downlink Control Information), which includes resource assignments for a UE or group of UE's. The base station can transmit many DCI's or PDCCH's in a subframe. When responding to a Random Access Preamble, the base station may generate a DCI with Format 1A or 1C as shown in List 1 and List 2

---

- Flag for format0/format1A differentiation or flag for format0A/format1A differentiation
- Localized/Distributed VRB assignment flag
- Resource block assignment
- Modulation and coding scheme
- HARQ process number - reserved
- New data indicator
- Redundancy version - 2 bits
- TPC command for PUCCH
- Downlink Assignment Index - reserved.
- SRS request
- HARQ-ACK resource offset
- SRS timing offset -present only when the DCI format is used for scheduling PDSCH in a LAA Scell and the UE is configured with uplink transmission on the LAA Scell.

---

**List 1 Format 1A**

---

- 1 bit indicates the gap value
- Resource block assignment
- Modulation and coding scheme

---

**List 2 Format 1C**

The generated DCI may be attached with a Cyclic Redundancy Check (CRC) parity bits for error detection. The CRC parity bits may be further scrambled with a corresponding RNTI. In case of the DCI for Random Access Response, the X-RNTI is used if configured for the transmitted Random Access Preamble, otherwise the RA-RNTI may be used for scrambling the CRC.

The UE that monitors PDCCH may perform blind decoding of the PDCCH payload as it is not aware of the detailed control channel structure. Specifically, the UE under the process of Random Access Response reception may monitor a set of PDCCH candidates (a set of consecutive Control Channel Elements (CCEs) on which a PDCCH could be mapped). In this process the UE uses the aforementioned X-RNTI or RA-RNTI for decoding the candidates.

If the UE has initiated Random Access Preamble transmission with one of the reserved preambles and successfully decodes a DCI with format 1A or 1C with the X-RNTI, the UE may consider that the Random Access procedure is successfully completed. Otherwise, after successful decoding of a DCI with the RA-RNTI, the UE may attempts to receive the Physical Downlink Shared Channel (PDSCH) whose resource is specified in the Resource block assignment field of the DCI with either format 1A or 1C. Accordingly, the MAC entity of the UE may proceed with processing the DL-SCH transport block received in the assigned PDSCH resources as a MAC PDU (see 1-6) for Random Access Response. The UE may continue PDCCH decoding - PDSCH reception during the RA Response window.

The MAC entity may stop monitoring for Random Access Response(s) after successful reception of a Random Access Response containing Random Access Preamble identifiers that matches the transmitted Random Access Preamble.

- If a downlink assignment for this TTI has been received on the PDCCH for the RA-RNTI and the received TB is successfully decoded, the MAC entity may regardless of the possible occurrence of a measurement gap or a Sidelink Discovery Gap for Transmission or a Sidelink Discovery Gap for Reception:

  - if the Random Access Response contains a Backoff Indicator subheader:

    - may set the backoff parameter value as indicated by the BI field of the Backoff Indicator subheader.

  - else, may set the backoff parameter value to 0 ms.

  - if the Random Access Response contains a Random Access Preamble identifier corresponding to the transmitted Random Access Preamble, the MAC entity may:

    - if if the Random Access Preamble is selected by upper layer:

      - consider this Random Access Response reception successful and the Random Access procedure successfully completed.

    - else, consider this Random Access Response reception successful and apply the following actions for the serving cell where the Random Access Preamble was transmitted:

      - may process the received Timing Advance Command (see subclause 5.2);

      - may indicate the *preambleInitialReceivedTargetPower* and the amount of power ramping applied to the latest preamble transmission to lower layers (i.e., (PREAMBLE_TRANSMISSION_COUNTER - 1) * *powerRampingStep*);

      - if the SCell is configured with *ul-Configuration-r14,* may ignore the received UL grant otherwise may process the received UL grant value and indicate it to the lower layers;

    - if, except for NB-IoT, *ra-PreambleIndex* was explicitly signalled and it was not 000000 (i.e., not selected by MAC):

      - may consider the Random Access procedure successfully completed.

    - else, if, except for NB-IoT, the Random Access Preamble was selected by the MAC entity, or for NB-IoT:

      - may set the Temporary C-RNTI to the value received in the Random Access Response message no later than at the time of the first transmission corresponding to the UL grant provided in the Random Access Response message;

      - if this is the first successfully received Random Access Response within this Random Access procedure:

        - if the transmission is not being made for the CCCH logical channel, may indicate to the Multiplexing and assembly entity to include a C-RNTI MAC control element in the subsequent uplink transmission;

        - may obtain the MAC PDU to transmit from the "Multiplexing and assembly" entity and store it in the Msg3 buffer.

NOTE: When an uplink transmission is required, e.g., for contention resolution, the eNB may not provide a grant smaller than 56 bits (or 88 bits for NB-IoT) in the Random Access Response.

NOTE: If within a Random Access procedure, an uplink grant provided in the Random Access Response for the same group of Random Access Preambles has a different size than the first uplink grant allocated during that Random Access procedure, the UE behavior is not defined.

If no Random Access Response is received within the RA Response window, or if none of all received Random Access Responses contains a Random Access Preamble identifier corresponding to the transmitted Random Access Preamble, the Random Access Response reception may be considered not successful and the MAC entity may:

- if the notification of power ramping suspension has not been received from lower layers:

    - increment PREAMBLE_TRANSMISSION_COUNTER by 1;

- if the UE is an NB-IoT UE, a BL UE or a UE in enhanced coverage:

    - if PREAMBLE_TRANSMISSION_COUNTER = *preamble TransMax-CE* + 1:

        - if the Random Access Preamble is transmitted on the SpCell:

            - indicate a Random Access problem to upper layers;

            - if NB-IoT:

                - consider the Random Access procedure unsuccessfully completed;

- else:

    - if PREAMBLE_TRANSMISSION_COUNTER = *preambleTransMax* + 1:

        - if the Random Access Preamble is transmitted on the SpCell:

            - indicate a Random Access problem to upper layers;

        - if the Random Access Preamble is transmitted on an SCell:

            - consider the Random Access procedure unsuccessfully completed.

- if in this Random Access procedure, the Random Access Preamble was selected by MAC:

    - based on the backoff parameter, may select a random backoff time according to a uniform distribution between 0 and the Backoff Parameter Value;
    - delay the subsequent Random Access transmission by the backoff time;

- else if the SCell where the Random Access Preamble was transmitted is configured with *ul-Configuration-r14:*

    - delay the subsequent Random Access transmission until the Random Access Procedure is initiated by a PDCCH order with the same *ra-PreambleIndex and ra-PRACH-MaskIndex;*

- if the UE is an NB-IoT UE, a BL UE or a UE in enhanced coverage:

    - increment PREAMBLE_TRANSMISSION_COUNTER_CE by 1;
    - if PREAMBLE_TRANSMISSION_COUNTER_CE = *maxNumPreambleAttemptCE* for the corresponding enhanced coverage level + 1:

        - reset PREAMBLE_TRANSMISSION_COUNTER _CE;
        - consider to be in the next enhanced coverage level, if it is supported by the Serving Cell and the UE, otherwise stay in the current enhanced coverage level;
        - select the Random Access Preambles group, *ra-ResponseWindowSize, mac-ContentionResolutionTimer,* and PRACH resource corresponding to the selected enhanced coverage level. A NB-IoT UE supporting multi-tone Msg3 may only select the single-tone Msg3 Random Access Preambles group if there is no multi-tone Msg3 Random Access Preambles group;

- if the UE is an NB-IoT UE:

    - if the Random Access Procedure was initiated by a PDCCH order:

        - consider the PRACH resource corresponding to the selected enhanced coverage level as explicitly signalled;

- proceed to the selection of a Random Access Resource.

**4-5 Contention Resolution**

See 1-5.

**5. FIFTH NOT CLAIMED EMBODIMENT**

The fifth example embodiment and mode contains modifications from the fourth embodiment. Specifically, instead of directly configuring the value of X-RNTI associated with a Random Access Preamble, the radio access node may associate the preamble information with a parameter that can be input into a function to derive the X-RNTI. An example of such function, which uses the input parameter *idx*, is shown below as Function 1:

$$\text{Function 1: } \text{X-RNTI} = 1 + t\_id + 10*f\_id + f_{\text{offset}}(idx)$$

where

- X-RNTI$= 1 + t\_id + 10*f\_id + f_{\text{offset}}(idx)$, and
- $f_{\text{offset}}(x)$ is a function to generate an offset value

    o (e.g. $f_{\text{offset}}(idx) = ([\text{pre-determined constant}] * x)$

- $t\_id$ is the index of the first subframe of the PRACH resource in the time domain
- $f\_id$ is the index of the PRACH resource in the frequency domain

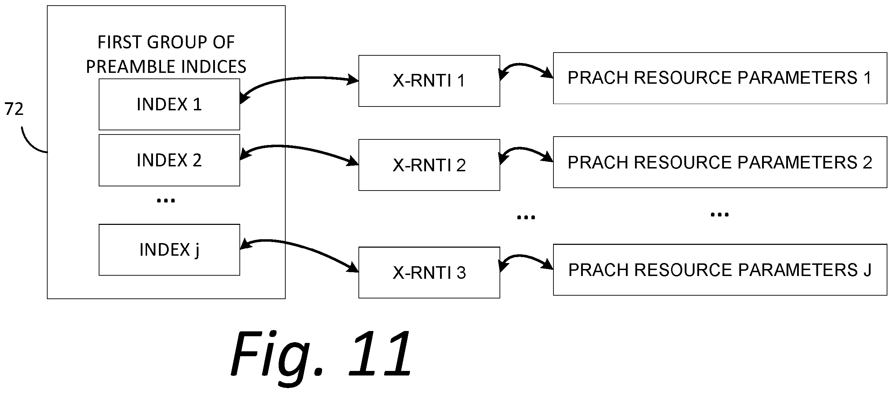

Fig. 11 shows that there may be an association between preamble information (e.g., a preamble sequence or a preamble index) and an X-RNTI, as well as with an X-RNTI-function input parameter (e.g., idx). Herein, "function input parameter" and "PRACH resource parameter" may be used interchangeably.

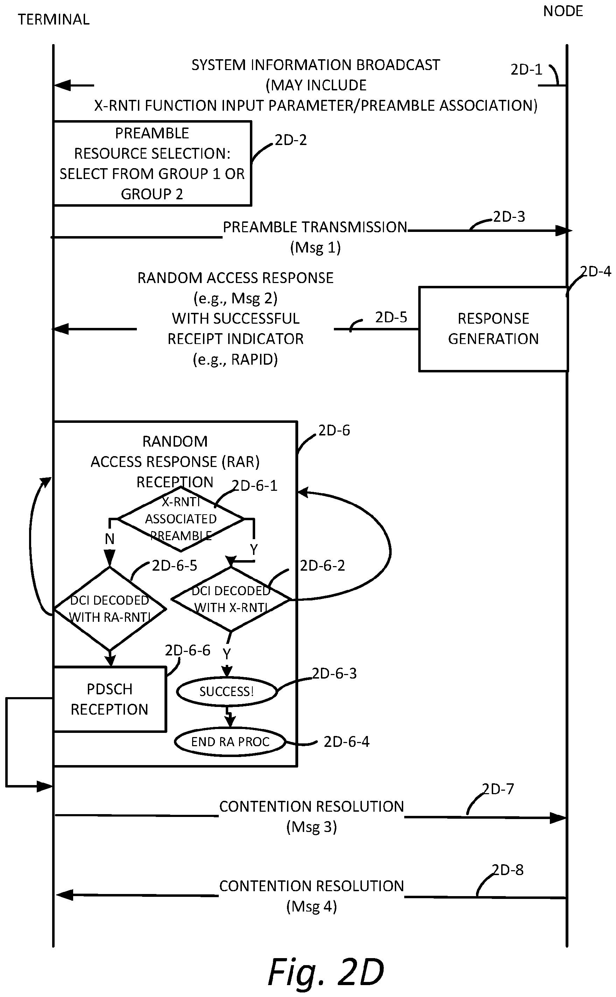

The fifth example embodiment and mode of a random access procedure of the technology disclosed herein is illustrated in Fig. 1D and Fig. 2D. Fig. 1D shows structure and functionalities of radio access node 22D and wireless terminal 26D; Fig. 2D shows acts involved in the random access procedure of the second embodiment including messages.

As shown in Fig. 1D, node processor 30 of radio access node 22D comprises system information generator 80 which works in conjunction with X-RNTI-function input parameter/preamble association functionality 82D. The terminal random access procedure controller 56 of wireless terminal 26D comprises X-RNTI function input -based RAR checker 62D and X-RNTI function-based selection agent 70D.

Fig. 2D shows basic example acts involved in the random access procedure of the fifth embodiment including messages. Act 2D-1 represents the initialization phase and as such depicts the radio access node 22D transmitting, and wireless terminal 26A receiving, configuration parameters. The configuration parameters may be broadcast as system information from the serving cell (e.g., the cell based at radio access node 22D and serving wireless terminal 26D). The configuration parameters may include an association of X-RNTI input function parameter(s) and preamble information, rather than an association of X-RNTI and preamble information as was the case in Fig. 2C. An example implementation of system information (e.g., a SIB) that includes the association of X-RNTI input function parameter(s) and preamble information may be understood with reference to the example RRC information element described below:

```
-- ASN1START

OnDemandSibGroupList ::=     SEQUENCE (SIZE (1..maxSIB-1}) OF OnDemandSibGroup

OnDemandSibGroup ::= SEQUENCE {
        sib-TypeList                    SIB-TypeList,
        ra-PreambleIndexSibGroup        INTEGER (0..63)
        idx                             INTEGER (0..63)
}

SIB-TypeList ::= SEQUENCE (SIZE (1..maxSIB-1)) OF SIB-Type

SIB-Type ::=                            ENUMERATED {
                                sibType3, sibType4, sibType5, sibType6,
                                sibType7, sibType8, sibType9, sibType10,
                                sibType11, sibType12-v920, sibType13-v920,
                                sibType14-v1130, sibType15-v1130,
                                sibType16-v1130, sibType17-v1250, sibType18-v1250,
                                ..., sibType19-v1250, sibType20-v1310, sibType21-
v14x0}
}

-- ASN1STOP
```

| *OnDemandSibGroupList* field descriptions |
|---|
| **sib-TypeList**<br>List of SIB types included in this SIB Group. |
| **ra-PreambleIndexSibGroup**<br>Index of the Random Access Preamble reserved for requesting the transmission of the SIBs in the SIB Group. |
| **Idx**<br>This field is used for derivation of X-RNTI associated with *ra-PreambleIndexSibGroup*. |

Act 2D-2 represents the preamble resource selection phase wherein the wireless terminal 26C selects a random access preamble sequence from a set of sequences available in the serving cell. In the fifth example embodiment and mode, like the second and third example embodiments and modes, in the preamble resource selection phase the X-RNTI function-based selection agent 70D has the choice of selecting a preamble index from the preamble index first group 72 or the preamble index second group 74. If this particular instance of the random access procedure is for a designated request, such as (for example) an on-demand request for system information, the X-RNTI function-based selection agent 70D selects an appropriate preamble index for the designated requested from preamble index first group 72. Otherwise, if not for a designated request, the X-RNTI function-based selection agent 70D selects the preamble index from preamble index second group 74.

Act 2D-3 represents the preamble transmission phase in which the wireless terminal 26C transmits the selected preamble sequence corresponding to the selected preamble index on a physical channel (PRACH) using radio resources configured by the cell and communicated in act 2D-1. The transmission of act 2D-3 is depicted as the Msg1 of the random access procedure.

Act 2D-4 represents the radio access node 22D processing and generating a response to the preamble transmission message (Msg1) of act 2D-3. In processing the preamble transmission message (Msg1) of act 2D-3, the node random access procedure controller 54 takes note of the preamble sequence included in message Msg1. Further, as act 2D-5 the node random access procedure controller 54 causes the random access response generator 60 to generate downlink information which comprises or permits access to a Random Access Response (RAR) message, Msg2, which includes in downlink information an indication of successful receipt of the preamble sequence, the concept of "indication" having been previously explained. At least a portion of the downlink information which is generated as act 2D-4 may be encoded by system information generator 80 using the X-RNTI which, based on X-RNTI-function input parameter/-preamble association functionality 82D, the radio access node 22D knows is associated with the received preamble sequence. For example, the downlink information may be cyclically redundancy check (CRC) scrambled with the X-RNTI. The node knows the X-RNTI in the same way as the terminal derived. The received preamble sequence tells the preamble index, and the PRACH resource (time/freq domain) where the preamble transmission was detected tells t_id and f_id.

After transmitting one of the reserved Random Access Preambles, the wireless terminal 26D may monitor the downlink information received from the radio access node 22D. The terminal random access response act 2D-6 is essentially the same as act 2C-6, with the terminal random access procedure controller 56 trying to decode the received downlink information using the X-RNTI that is associated with the preamble sequence that was transmitted in the preamble transmission message Msg1 in the case that the designated request was sent, or tries to decode the received downlink information using RA-RNTI in other cases.

The technology disclosed herein encompasses variations of the foregoing, such as, for example, other alternative methods which may include, not limited to, use of *ra-PreambleIndexSibGroup* as an input of the function $f_{offset}(x)$. Also, $f_{offset}(x)$ may be configured by using a parameter included in MIB and/or SIB.

## 6. SIXTH NOT CLAIMED EMBODIMENT

The sixth example embodiment and mode allows use of a different format for the DCI addressed by the X-RNTI. This format (format X hereafter) may contain a pre-determined number of reserved bits, where a pre-determined number of values may be set. As such, the DCI with format X may be considered a designated request unique format DCI. The DCI with format X may be attached with a CRC as previously described. If the UE has initiated Random Access Preamble transmission with one of the reserved preambles and successfully decodes a DCI with format X with the associated X-RNTI, the UE may consider that the Random Access procedure is successfully completed, without receiving PDSCH.

The sixth example embodiment and mode of a random access procedure of the technology disclosed herein is illustrated in Fig. 1E and Fig. 2E. Fig. 1E shows structure and functionalities of radio access node 22E and wireless terminal 26E; Fig. 2E shows acts involved in the random access procedure of the second embodiment including messages. As shown in Fig. 1E, node processor 30 of radio access node 22E comprises random access response generator 60, which in turn comprises designated request unique format DCI generator 90. The terminal random access procedure controller 56 of wireless terminal 26D comprises designated request unique format DCI handler 92.

Fig. 2E shows basic example acts involved in the random access procedure of the fifth embodiment including messages. Act 2E-1 represents the initialization phase and as such depicts the radio access node 22D transmitting, and wireless terminal 26A receiving, configuration parameters. The configuration parameters may be broadcast as system information from the serving cell (e.g., the cell based at radio access node 22E and serving wireless terminal 26E).

Act 2E-2 represents the preamble resource selection phase wherein the wireless terminal 26C selects a random access preamble sequence from a set of sequences available in the serving cell. In the sixth example embodiment and mode, like the second and third example embodiments and modes, in the preamble resource selection phase the preamble/resource selection agent 70 has the choice of selecting a preamble index from the preamble index first group 72 or the preamble index second group 74. If this particular instance of the random access procedure is for a designated request, such as (for example) an on-demand request for system information, the preamble/resource selection agent 70 selects an appropriate preamble index for the designated requested from preamble index first group 72. Otherwise, if not for a designated request, the preamble/resource selection agent 70 selects the preamble index from preamble index second group 74.

Act 2E-3 represents the preamble transmission phase in which the wireless terminal 26E transmits the selected preamble sequence corresponding to the selected preamble index on a physical channel (PRACH) using radio resources configured by the cell and communicated in act 2E-1. The transmission of act 2E-3 is depicted as the Msg1 of the random access procedure.

Act 2E-4 represents the radio access node 22E processing and generating a response to the preamble transmission message (Msg1) of act 2E-3. In processing the preamble transmission message (Msg1) of act 2E-3, the node random access procedure controller 54 takes note of the preamble sequence included in message Msg1. Further, as act 2E-5 the node random access procedure controller 54 causes the random access response generator 60 to generate downlink information which comprises or permits access to a Random Access Response (RAR) message, Msg2, which includes in downlink information an indication of successful receipt of the preamble sequence, the concept of "indication" having been previously explained. But if the received preamble sequence corresponds to a designated request, the node random access procedure controller 54 invokes designated request unique format DCI generator 90 to generate a DCI of format X. As stated above, the format X DCI may comprise a pre-determined number of reserved bit(s), where a pre-determined number of values may be set.

After transmitting one of the reserved Random Access Preambles, the wireless terminal 26E may monitor the downlink information received from the radio access node 22E. The terminal random access response act 2E-6 is essentially the same as act 2C-6, with the terminal random access procedure controller 56 trying to decode the received downlink information using the X-RNTI that is associated with the preamble sequence that was transmitted in the preamble transmission message Msg1 in the case that the designated request was sent, or tries to decode the received downlink information using RA-RNTI in other cases. In the event that the DCI is decoded with the X-RNTI as act 2E-6-2, the terminal random access procedure controller 56 knows that the DCI has format X and accordingly is able to (as act 2E-6-3) to de-format or process the contents of the DCI according to the known format X.

Thus, in the sixth example embodiment and mode, the wireless terminal 26E assume as distinct format for decoding a received DCI with the X-RNTI.

## 7. SEVENTH NOT CLAIMED EMBODIMENT

In a seventh example embodiment and mode the wireless terminal is allowed to use certain PRACH resources designated for said special purposes selected by the upper layer (RRC layer). The special purposes include such purposes as the designated request(s) described herein. A PRACH resource refers to a time and frequency region in the uplink to be used for RACH preamble transmission.

The seventh example embodiment and mode of a random access procedure of the technology disclosed herein is illustrated in Fig. 1F, Fig. 2F, Fig. 3D, and Fig. 4D. Fig. 1F shows structure and functionalities of radio access node 22F and wireless terminal 26F; Fig. 2F shows acts involved in the random access procedure of the second embodiment including messages; Fig. 3D shows example acts or steps specifically performed by wireless terminal 26F; and, Fig. 4D shows example acts or steps specifically performed by radio access node 22F.

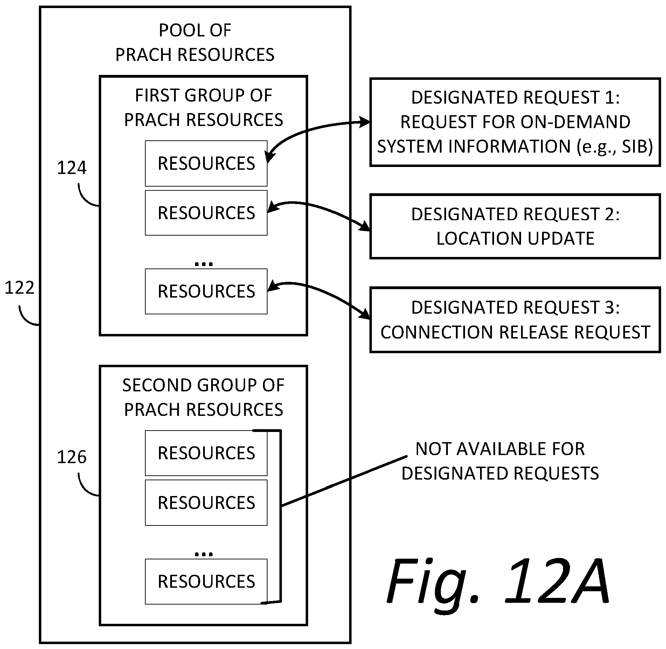

Fig. 1F shows that terminal processor 40, and the terminal random access procedure controller 56 in particular, comprises PRACH resource selection agent 120. As shown in Fig. 12A, PRACH resource selection agent 120 selects uplink physical resources from an uplink physical resource pool. The uplink physical resource pool comprises first random access physical radio resource group 124 and second random access physical radio resource group 126. The PRACH resource selection agent 120 serves to select an uplink physical resource from a first random access physical radio resource group 124 or a second random access physical radio resource group 126. As shown by Fig. 12A, a physical resource in the first random access physical radio resource group 124 is reserved for a designated request, but a physical resource in the second random access physical radio resource group 126 is not available for the designated request. For example, non-limiting types of designated requests, as shown in Fig. 12A, include a designated request for on-demand system information; designated request for location update, designated request for connection release request, etc.

The uplink physical resource pool with its first random access physical radio resource group 124 and second random access physical radio resource group 126 may be configured at the wireless terminal, e.g., pre-configured in memory or configured by the network (e.g., by radio access node 22F in the manner described below).

In preparing the random access request message, the terminal random access procedure controller 56 may preferably use both preamble/resource selection agent 70 and PRACH resource selection agent 120. In other words, the terminal random access procedure controller 56 may send the designated request to the radio access node by generating a preamble sequence associated with a preamble index which is transmitted on the selected uplink physical resource. As understood from preceding example embodiments and modes, the terminal random access procedure controller 56 may use preamble/resource selection agent 70 to select the preamble sequence from a first group 72 of preamble sequences that are reserved and distinct for the designated request or a second group 74 of preamble sequences that are allocated to purposes other than the designated request, and send the designated request to the radio access node by generating the selected preamble sequence for transmission on the PRACH resource selected by PRACH resource selection agent 120.

In one implementation, a PRACH resource may be exclusively used by a single designated upper layer request. For example, one PRACH resource may be dedicated for wireless terminals to request on-demand delivery of a SIB or a group of SIBs. In one configuration, the preamble index associated with the preamble sequence to be transmitted in this PRACH resource may be a reserved preamble index configured by the radio access node 22F. In this case, the radio access node 22F receiving this preamble sequence may verify that the received preamble sequence is the one expected in this PRACH resource and may reject or ignore any other preamble sequences. In another configuration, the preamble index may be selected by the wireless terminal 26F based on the process described in 1-2 of the first embodiment. In this case, the radio access node 22F may accept any preamble index that the wireless terminal 26F is allowed to select in this PRACH resource as a receipt of the designated upper layer request and may process the request accordingly.

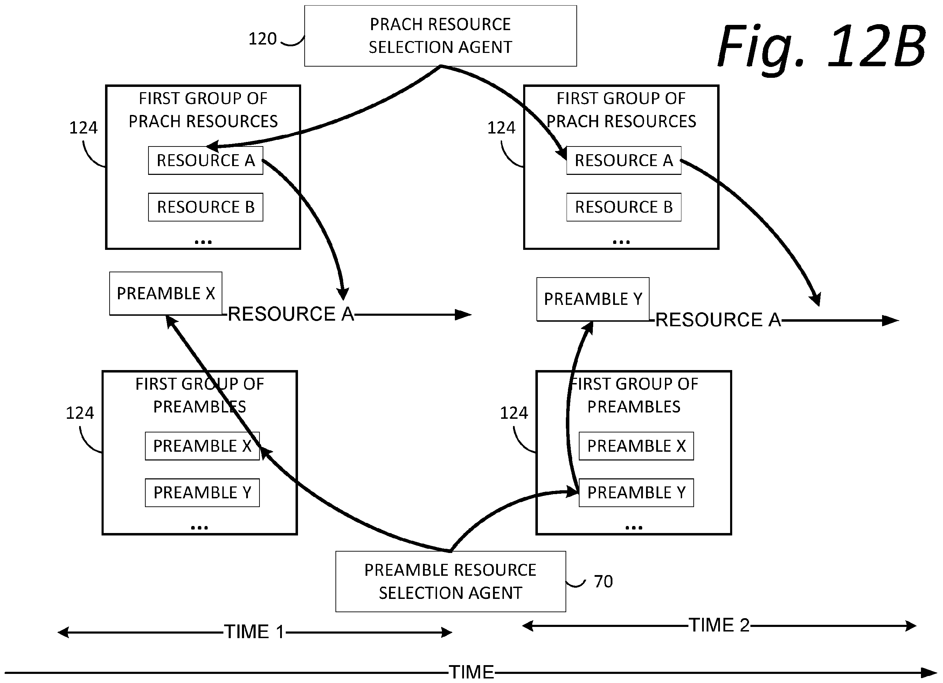

In another implementation, a PRACH resource configured to be used for an upper layer request may be shared by other upper layer requests and/or a normal RACH procedure (e.g. connection establishment). In this case, the wireless terminal 26F and the radio access node 22F may proceed with the procedures in accordance with the aforementioned embodiments. For example, Fig. 12B shows a situation in which PRACH resource A may be selected during a first time (time 1) to carry designated request preamble X, and then in another time (time 2) PRACH resource A may also be selected to carry designated request preamble Y. Thus Fig. 12B illustrates a situation in which one PRACH resource (e.g., resource A) may be allocated for multiple reserved preambles. For instance the PRACH resource A may be shared by two or more SIBs/SIB groups (e.g., at time 1 the wireless terminal 26F may be making an on-demand request for SIBx, while at time t2 the wireless terminal 26F may be making an on-demand request for SIB$_Y$). Because this PRACH resource A, shown as belonging to first random access physical radio resource group 124, is dedicated for special requests from the wireless terminal 26H, the configuration parameters to be used for preamble transmission could be optimized for that purpose without affecting general preamble transmission. In some cases, as shown in the ninth example embodiment below, transmission power to be used can be adjusted (increased to be stronger) only on this PRACH resource to raise the successful reception at the access node. Moreover, when multiple designated requests share the same resource, the preambles to be used should be designated preambles. The procedure for preamble transmission and response reception in this case is the same as the embodiments described earlier. Yet further, although Fig. 12B illustrates a situation in which a given wireless terminal uses a PRACH resource with a certain preamble sometimes and a different preamble other times, it should also be understood that more than one wireless terminal may use this resource for multiple preamble sequences, e.g. UE1 transmits preamble X and UE2 transmits preamble Y, on resource A, either simultaneously or at different times.

Fig. 1F further shows that the node processor 30 of radio access node 22F comprises system information generator 80. The system information generator 80 in turn may comprise PRACH designated request(s) resource indicator generator 128 for the example embodiments and modes in which the first random access physical radio resource group 124 is not preconfigured at the wireless terminal 26F. The PRACH designated request(s) resource indicator generator 128 generates configuration information that comprises an identification of the first random group of physical radio resources, e.g., first random access physical radio resource group 124. By providing such configuration information as generated by PRACH designated request(s) resource indicator generator 128, the radio access node 22F may configure the first random access physical radio resource group 124 at the wireless terminal 26F.

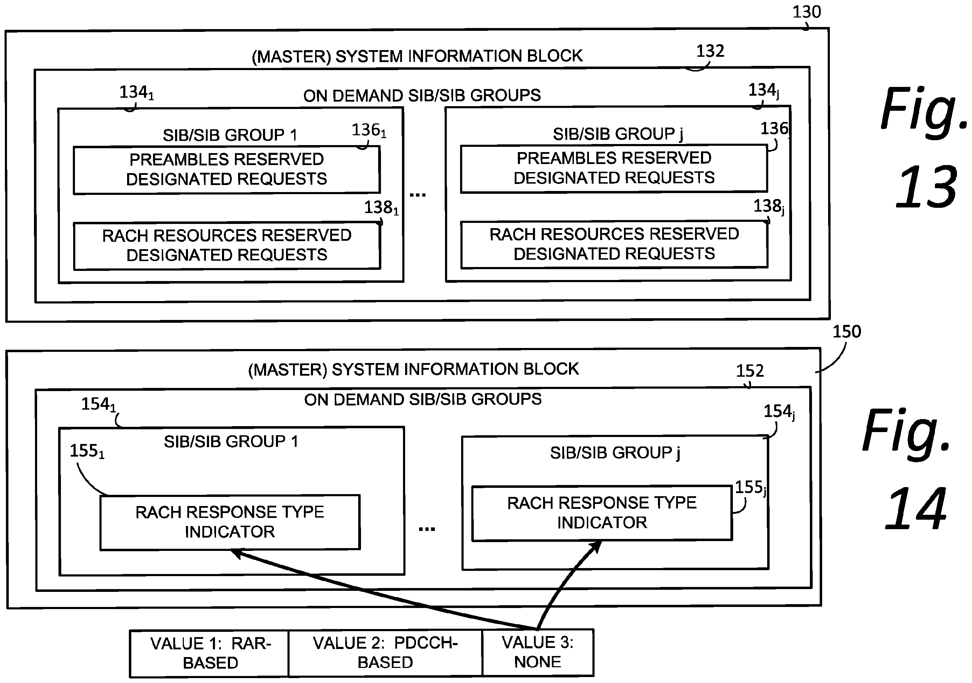

Fig. 13 illustrates non-limiting, example format of a system information block that may be used to identify the first random access physical radio resource group 124 for the seventh example embodiment and mode. Fig. 13 shows a system information block (SIB) 130, preferably a Master SIB (MIB), which includes an information element 132 that specifies uplink resources for designated requests, such as a designated request for on-demand supply of system information. The information element 132 further includes an information element 134 for each of 1, 2, ...j number of SIBs or SIB groups. For each SIB or SIB group, the information element 134 comprises a listing or other identification or ways to determine the RACH preambles reserved for designated requests (indicated by information element 136) and the RACH uplink resources reserved for the designated requests (indicated by information element 138).

The exemplary RRC information element shown below may be generated by PRACH designated request(s) resource indicator generator 128 and transmitted, e.g., broadcasted from the radio access node 22F. In the following RRC information element the preamble index for a SIB/SIB group is optional and, if not present, the wireless terminal 26F may randomly select one from the available preamble indices. Moreover, in the following RRC information element, each SIB/SIB group may be optionally configured with the *PRACH-ConfigSIBOnDemand* field comprising parameters instructing physical channel resources to be used for the preamble transmission. Absence of the *PRACH-ConfigSIBOn-Demand* field may result in the UE using the *PRACH-ConfigSIB* field shown in the first embodiment, the parameters to be used for the regular RACH process. Similar to the embodiments mentioned earlier, such an information element may be a part of Master Information Block (MIB) or a part of a periodically broadcasted SIB. Note that the exemplary information element is not intended to preclude any other possible configuration contents.

```
-- ASN1START

OnDemandSibGroupList ::=    SEQUENCE (SIZE (1..maxSIB-1)) OF OnDemandSibGroup

OnDemandSibGroup ::= SEQUENCE {
        sib-TypeList            SIB-TypeList,
        ra-PreambleIndex        INTEGER (0..63)              OPTIONAL, -- Need OR
        prach-Config            PRACH-ConfigSIBOnDemand      OPTIONAL, -- Need
OR
}

SIB-TypeList ::= SEQUENCE (SIZE (1..maxSIB-1)) OF SIB-Type

SIB-Type ::=                ENUMERATED {
                            sibType3, sibType4, sibType5, sibType6,
                            sibType7, sibType8, sibType9, sibType10,
                            sibType11, sibType12-v920, sibType13-v920,
                            sibType14-v1130, sibType15-v1130,
                            sibType16-v1130, sibType17-v1250, sibType18-v1250,
                            ..., sibType19-v1250, sibType20-v1310, sibType21-
v14x0}
}

PRACH-ConfigSIBOnDemand ::=            SEQUENCE {
    rootSequenceIndex                  INTEGER (0..837),
    prach-ConfigInfo                   PRACH-ConfigInfo
}

PRACH-ConfigInfo ::=        SEQUENCE {
    prach-ConfigIndex               INTEGER (0..63),
    highSpeedFlag                   BOOLEAN,
    zeroCorrelationZoneConfig       INTEGER (0..15),
    prach-FreqOffset                INTEGER (0..94)
}

-- ASN1STOP
```

When a reserved PRACH resource is used, in generating the random access response message (Msg 2), the RA-RNTI used by radio access node 22F to encode DCI on PDCCH will be a designated value specific to the PRACH resource. When the random access response checker 62 of the terminal random access procedure controller 56 successfully decodes a DCI with the RA-RNTI, the random access response checker 62 knows that the radio access node 22F responded with the preamble, which may be a reserved one or may be a general one. The wireless terminal 26F may (or may not) proceed on receiving MAC PDU payload on PDSCH to make sure that the preamble index is there in one of the MAC subheaders.

Fig. 2F shows basic example acts involved in the random access procedure of the seventh embodiment including messages. Act 2F-1 represents the initialization phase and as such depicts the radio access node 22F transmitting, and wireless terminal 26F receiving, configuration parameters. In an example implementation, the configuration information may include the indication of PRACH designated request(s) resources as described above, so that the radio access node 22F may configure the wireless terminal 26F. The configuration parameters may be broadcast as system information from the serving cell, e.g., the cell based at radio access node 22F and serving wireless terminal 26F.

Act 2F-2, representing the preamble resource selection phase, may comprise two sub-acts. Act 2F-2-1 comprises the PRACH resource selection agent 120 selecting between the first random access physical radio resource group 124 and the second random access physical radio resource group 126, depending on whether the random access request is for a designated request or not. Act 2F-2-2 comprises wireless terminal 26B, e.g., preamble/resource selection agent 70, selecting a random access preamble sequence from a set of sequences available in the serving cell. As previously described, in the preamble resource selection phase the preamble/resource selection agent 70 has the choice of selecting a preamble index from the preamble index first group 72 or the preamble index second group 74. If this particular instance of the random access procedure is for a designated request, such as, for example, an on-demand request for system information, the preamble/resource selection agent 70 selects an appropriate preamble index for the designated requested from preamble index first group 72.

Act 2F-3 represents the preamble transmission phase in which the wireless terminal 26F transmits the selected preamble sequence corresponding to the selected preamble index on the PRACH resource selected at act 2F-2-1. As described, the selected uplink resource may be from the first random access physical radio resource group 124 for a designated request, or from the second random access physical radio resource group 126 for a non-designated request (e.g., a normal RACH request). The transmission of act 2F-3 is depicted as the Msg1 of the random access procedure.

Act 2F-4 represents the radio access node 22F processing and generating a response to the preamble transmission message (Msg1) of act 2F-3. The radio access node 22F may process the preamble transmission message (Msg1) of act 2F-3 in several ways, two alternative example preamble transmission message (Msg1) handling routines being shown in Fig. 2F-1 and Fig. 2F-2.

In the preamble transmission message (Msg1) handling routine of Fig. 2F-1, as act 2F-4-1 the radio access node 22F determines whether the PRACH resources used for the preamble transmission message (Msg1) of act 2F-3 belongs to the first random access physical radio resource group 124. If the determination of act 2F-4-1 is negative, as act 2F-4-2 the radio access node 22F next checks at act 2F-4-2 whether the preamble index received on the PRACH resource is a preamble that is reserved for a designated request. If the determination of act 2F-4-2 is negative, the radio access node 22F presumes that the random access request was not a designated request and as act 2F-4-3 generates a random access response message Msg 2 accordingly. If the determination of act 2F-4-2 is positive, as act 2F-4-4 the radio access node 22F generates the random access response message Msg 2 and in so doing may encode DCI on PDCCH using a RA-RNTI that is value specific to the PRACH resource. If the determination of act 2F-4-1 is positive, as act 2F-4-5 the radio access node 22F makes a determination whether the preamble used for the preamble transmission message (Msg1) of act 2F-3 belongs to the preamble index first group 72 and thus confirms that the random access is a designated request. If the determination of act 2F-4-5 is negative, as act 2F-4-6 the radio access node 22F rejects or ignores any other preamble sequences, e.g., rejects or ignores the random access request of message Msg 1. If the determination of act 2F-4-5 is positive, the radio access node 22F has received a verification of the designated request and therefore, as act 2F-4-4, the radio access node 22F generates the random access response message Msg 2. In generating the random access response message, Msg 2, the radio access node 22F may encode DCI on PDCCH using a RA-RNTI that is value specific to the PRACH resource or, if specified in the configuration parameters, the X-RNTI associated with this designated request Regardless of whether a designated PRACH resource is allocated for a request, the eNB may assign and configure an X-RNTI to be used for encoding DCI.

The preamble transmission message (Msg1) handling routine of Fig. 2F-2 is an abbreviated form of the preamble transmission message (Msg1) handling routine of Fig. 2F-1. In the preamble transmission message (Msg1) handling routine of Fig. 2F-2, after confirming at act 2F-4-1 that the PRACH resource indicates a designated request, the radio access node 22F does not perform a check of preamble index as is done as act 2F-4-5 of Fig. 2F-1, but instead, as the positive alternative of act 2F-4-1, proceeds to perform act 2F-4-4 of generating the random access response message Msg 2. In generating the random access response message (Msg 2), the radio access node 22F may encode DCI on PDCCH using a RA-RNTI that is value specific to the PRACH resource or, if specified in the configuration parameters, the X-RNTI associated with this designated request.

When the random access response checker 62 of the terminal random access proceedure controller 56 successfully decodes a DCI with the RA-RNTI, the random access response checker 62 knows that the radio access node 22F responded with the preamble, which may be a reserved one or may be a general one. The wireless terminal 26F may (or may not) proceed on receiving MAC payload on PDSCH to make sure that the preamble index is there in one of the MAC subheaders.

Act 2F-6 of Fig. 2F represents the random access response reception phase. In the random access response reception phase the wireless terminal 26F may monitor the downlink information received from the radio access node 22F. The terminal random access procedure controller 56 checks at act 2F-6-0 whether the preamble sequence used for Msg1 was associated with a RA-RNTI or X-RNTI if configured. When the random access response checker 62 of the terminal random access procedure controller 56 successfully decodes a DCI with the X-RNTI, the random access response checker 62 knows that the radio access node 22F has positively acknowledged receipt of the random access request of Msg 1, and may end the random access procedure as indicated by act 2F-6-4. If the random access response checker 62 is able to decode the DCI with the RA-RNTI, then the random access response checker 62 may process the random access response message (Msg 2) in the manner previously described with reference to Fig. 2B. Thus, in the random response (RAR) reception phase of act 2F-6, if the received preamble index is not for RA-RNTI associated preamble, X-RNTI should have been used for the encoding and therefore successful decoding of DCI with X-RNTI indicates a successful preamble transmission.

Fig. 3D shows example acts or steps specifically performed by wireless terminal 26F. The acts of Fig. 3D may be performed by terminal random access procedure controller 56, which may comprise the terminal processor 40 executing instructions stored on non-transient memory. Act 3D-1 comprises the wireless terminal 26A receiving configuration parameters broadcasted from the base station. As indicated above, the configuration parameters may include an indication of PRACH designated request(s) resources.

Act 3D-2-0 comprises the PRACH resource selection agent 120 selecting an uplink physical resource from uplink physical resource pool 122. The uplink physical resource selected as act 3D-2-0 may be from the first random access physical radio resource group 124 (for a designated request) or from second random access physical radio resource group 126 (for other types of random access requests).

Act 3D-2-1 comprise the preamble/resource selection agent 70 selecting a preamble index from one of preamble index first group 72 and preamble index second group 74. As explained above, whether the preamble/resource selection agent 70 selects a preamble index from preamble index first group 72 or preamble index second group 74, and if from preamble index first group 72, the particular preamble index of preamble index first group 72, depending on whether the random access procedure is for a designated request or not. Thus, in some sense act 3D-2 comprises the preamble/-resource selection agent 70 selecting a preamble index depending on designated request, e.g., whether there is or is not a designated request, and the particular type of designated request when a designated request is to be made. Act 3D-2-2 comprises generating and transmitting to the base station a preamble sequence, e.g., as message Msg1.

Act 3D-3 comprises receiving and decoding downlink information from the base station, e.g., in/from message Msg2. Act 3D-4 comprises the random access response checker 62 making a determination regarding inclusion in the downlink information of an indication that the base station successfully received the random access request sent by the wireless terminal.

Act 3D-5 comprises the random access response checker 62 making a determination how to proceed regarding the random access procedure depending on whether the random access response message indicates that the radio access node 22F acknowledged receipt of a designated request. For example, if the random access response checker 62 of the terminal random access procedure controller 56 successfully decodes a DCI with the RA-RNTI, the random access response checker 62 knows that the radio access node 22F has positively acknowledged receipt of the random access request of Msg 1, and may end the random access procedure as indicated by act 2F-6-4. Otherwise, the random access procedure may continue.

Fig. 4D shows example acts or steps specifically performed by radio access node 22F. The acts of Fig. 4D may be performed by node random access procedure controller 54, which may comprise the node processor 30 executing instructions stored on non-transient memory. Act 4D-1 comprises the radio access node 22F broadcasting configuration parameters, e.g., in a system information block (SIB). As explained above, the system information may include an indication, definition, or description of PRACH designated request(s) resources.

Act 4D-2 comprises the radio access node 22F receiving a preamble sequence corresponding to the selected preamble index and transmitted on the PRACH resource selected by radio access node 22F at act 3D-2-0. The preamble sequence is transmitted in message Msg1 from wireless terminal 26F. Act 4D-3 comprises the random access response generator 60 generating, and the radio access node 22F transmitting, downlink information comprising an indication of successful reception by the base station of the preamble sequence. Details of act 4D-2 may be understood in light of the example descriptions of act 2F-4 and Fig. 2F-1 or Fig. 2F-2.

Having provided an overview of the seventh example embodiment and mode, a more detailed discussion follows and is structured according to the aforementioned example phases of the random access procedure.

**7-1 Initialization**

The Random Access procedure may be initiated by a Physical Downlink Control Channel (PDCCH) order, by the MAC sublayer itself or by the RRC sublayer. Random Access procedure on a Secondary Cell (SCell) may only be initiated by a PDCCH order. If a MAC entity receives a PDCCH transmission consistent with a PDCCH order masked with its C-RNTI, and for a specific Serving Cell, the MAC entity may initiate a Random Access procedure on this Serving Cell. For Random Access on the Special Cell (SpCell, a serving cell supporting PUCCH transmission and contention based Random Access) a PDCCH order or RRC may optionally indicate the *ra-PreambleIndex* and the *ra-PRACH-MaskIndex,* except for NB-IoT where the subcarrier index is indicated; and for Random Access on an SCell, the PDCCH order indicates the *ra-PreambleIndex* with a value different from 000000 and the *ra-PRACH-MaskIndex.* For the pTAG preamble transmission on PRACH and reception of a PDCCH order are only supported for SpCell. If the UE is an NB-IoT UE and is configured with a non-anchor carrier, perform the Random Access procedure on the anchor carrier. Before the procedure can be initiated, the following information for related Serving Cell is assumed to be available for UEs other than NB-IoT UEs, BL UEs or UEs in enhanced coverage, unless explicitly stated otherwise:

- the available set of PRACH resources for the transmission of the Random Access Preamble, *prach-ConfigIndex.*

- the groups of Random Access Preambles and the set of available Random Access Preambles in each group (SpCell only):
The preambles that are contained in Random Access Preambles group A and Random Access Preambles group B are calculated from the parameters *numberOfRA-Preambles* and *sizeOfRA-PreamblesGroupA:*
If *sizeOfRA-PreamblesGroupA* is equal to *numberOfRA-Preambles* then there is no Random Access Preambles group B. The preambles in Random Access Preamble group A are the preambles 0 to *sizeOfRA-PreamblesGroupA* - 1 and, if it exists, the preambles in Random Access Preamble group B are the preambles *sizeOfRA-PreamblesGroupA* to *numberOfRA-Preambles* - 1 from the set of 64 preambles.

- if Random Access Preambles group B exists, the thresholds, *messagePowerOffsetGroupB* and *messageSizeGroupA,* the configured UE transmitted power of the Serving Cell performing the Random Access Procedure, $P_{CMAX, c}$, and the offset between the preamble and Msg3, *deltaPreambleMsg3,* that are required for selecting one of the two groups of Random Access Preambles (SpCell only).

- the set of reserved Random Access Preambles.

- the PRACH resources to be selected by upper layer.

- the RA response window size *ra-ResponseWindowSize.*

- the power-ramping factor *powerRampingStep.*

- the maximum number of preamble transmission *preambleTransMax.*

- the initial preamble power *preambleInitialReceivedTargetPower.*

- the preamble format based offset DELTA_PREAMBLE.

- the maximum number of Msg3 HARQ transmissions *maxHARQ-Msg3Tx* (SpCell only).

- the Contention Resolution Timer *mac-ContentionResolutionTimer* (SpCell only).

NOTE:The above parameters may be updated from upper layers before each Random Access procedure is initiated.
The following information for related Serving Cell is assumed to be available before the procedure can be initiated for NB-IoT UEs, BL UEs or UEs in enhanced coverage:

- if the UE is a BL UE or a UE in enhanced coverage:

  - the available set of PRACH resources associated with each enhanced coverage level supported in the Serving Cell for the transmission of the Random Access Preamble, *prach-ConfigIndex.*

  - the groups of Random Access Preambles and the set of available Random Access Preambles in each group(SpCell only):

    The preambles that are contained in Random Access Preamble groups for each enhanced coverage level, if it exists, are the preambles *firstPreamble* to *lastPreamble.*

    If *sizeOfRA-PreamblesGroupA* is not equal to *numberOfRA-Preambles,* Random Access Preambles group B exists for all enhanced coverage levels and is calculated as above.

    NOTE:If Random Access Preamble group B exists, the eNB should ensure that at least one Random Access Preamble is contained in Random Access Preamble group A and Random Access Preamble group B for all enhanced coverage level.

  - if the UE is a NB-IoT UE:

- the available set of PRACH resources supported in the Serving Cell, *nprach-ParametersList.*

- for random access resource selection and preamble transmission:

  - a PRACH resource is mapped into an enhanced coverage level.

  - each PRACH resource contains a set of *nprach-NumSubcarriers* subcarriers which can be partitioned into one or two groups for single/multi-tone Msg3 transmission by *nprach-SubcarrierMSG3-RangeStart* and *nprach-NumCBRA-StartSubcarriers* as configured by higher layers. Each group is referred to as a Random Access Preamble group below in the procedure text.

  - a subcarrier is identified by the subcarrier index in the range: *[nprach-SubcarrierOffset, nprach-SubcarrierOffset + nprach-NumSubcarriers -1]*

  - each subcarrier of a Random Access Preamble group corresponds to a Random Access Preamble.

  - when the subcarrier index is explicitly sent from the eNB as part of a PDCCH order *ra-PreambleIndex* shall be set to the signalled subcarrier index.

  - the mapping of the PRACH resources into enhanced coverage levels is determined according to the following:

    - the number of enhanced coverage levels is equal to one plus the number of RSRP thresholds present in *rsrp-ThresholdsPrachInfoList.*

    - each enhanced coverage level has one PRACH resource present in *nprach-ParametersList.*

    - enhanced coverage levels are numbered from 0 and the mapping of PRACH resources to enhanced coverage levels are done in increasing *numRepetitionsPerPreambleAttempt* order.

    - the criteria to select PRACH resources based on RSRP measurement per enhanced coverage level supported in the Serving Cell *rsrp-ThresholdsPrachInfoList.*

    - the maximum number of preamble transmission attempts per enhanced coverage level supported in the Serving Cell *maxNumPreambleAttemptCE.*

    - the number of repetitions required for preamble transmission per attempt for each enhanced coverage level supported in the Serving Cell *numRepetitionPerPreambleAttempt.*

    - the configured UE transmitted power of the Serving Cell performing the Random Access Procedure, $P_{CMAX, c}.$

    - the RA response window size *ra-ResponseWindowSize* and the Contention Resolution Timer *macContentionResolutionTimer* (SpCell only) per enhanced coverage level supported in the Serving Cell.

    - the power-ramping factor *powerRampingStep.*

    - the maximum number of preamble transmission *preambleTransMax-CE.*

    - the initial preamble power *preambleInitialReceivedTargetPower.*

    - the preamble format based offset DELTA_PREAMBLE. For NB-IoT the DELTA_PREAMBLE is set to 0.

The Random Access procedure may be performed as follows:

- Flush the Msg3 buffer;f

- set the PREAMBLE_TRANSMISSION_COUNTER to 1;

- if the UE is an NB-IoT UE, a BL UE or a UE in enhanced coverage:

  - set the PREAMBLE_TRANSMISSION_COUNTER_CE to 1;

  - if the starting enhanced coverage level, or for NB-IoT the starting number of NPRACH repetitions, has been indicated in the PDCCH order which initiated the Random Access procedure, or if the starting enhanced coverage level has been provided by upper layers:

    - the MAC entity considers itself to be in that enhanced coverage level regardless of the measured RSRP;

    - else:

      - if the RSRP threshold of enhanced coverage level 3 is configured by upper layers in *rsrp-ThresholdsPrachInfoList* and the measured RSRP is less than the RSRP threshold of enhanced coverage level 3 and the UE is capable of enhanced coverage level 3 then:

        - the MAC entity considers to be in enhanced coverage level 3;

      - else if the RSRP threshold of enhanced coverage level 2 configured by upper layers in *rsrp-ThresholdsPrachInfoList* and the measured RSRP is less than the RSRP threshold of enhanced coverage level 2 and the UE is capable of enhanced coverage level 2 then:

        - the MAC entity considers to be in enhanced coverage level 2;

        - else if the measured RSRP is less than the RSRP threshold of enhanced coverage level 1 as configured by upper layers in *rsrp-ThresholdsPrachInfoList* then:

          - the MAC entity considers to be in enhanced coverage level 1;

          - else:

            - the MAC entity considers to be in enhanced coverage level 0;

            - set the backoff parameter value to 0 ms;

            - for the RN, suspend any RN subframe configuration;

            - proceed to the selection of the Random Access Resource.

NOTE: There is only one Random Access procedure ongoing at any point in time in a MAC entity. If the MAC entity receives a request for a new Random Access procedure while another is already ongoing in the MAC entity, it is up to UE implementation whether to continue with the ongoing procedure or start with the new procedure.

**7-2 Preamble Resource Selection**

The Random Access Resource selection procedure may be performed as follows:

- If a PRACH resource is one selected by upper layer:

  - the PRACH resource may be that selected by upper layer.
  - If one of the reserved Random Access Preamble is also selected by upper layer;
  - the Random Access Preamble may be that selected by upper layer.
  - else
  - may select one preamble from the Random Access Preambles group A or group B.
  - else if, except for NB-IoT, *ra-PreambleIndex* (Random Access Preamble) and *ra-PRACH-MaskIndex* (PRACH Mask Index) have been explicitly signalled and *ra-PreambleIndex* is not 000000:

- the Random Access Preamble and the PRACH Mask Index may be those explicitly signalled;

- else, for NB-IoT, if *ra-PreambleIndex* (Random Access Preamble) and PRACH resource have been explicitly signalled:

  - the PRACH resource may be that explicitly signalled;

  - if the *ra-PreambleIndex* signalled is not 000000:

    - the Random Access Preamble may be set to *nprach-SubcarrierOffset* + (*ra-PreambleIndex* modulo *nprach-NumSubcarriers*), where *nprach-SubcarrierOffset* and *nprach-NumSubcarriers* may be parameters in the currently used PRACH resource.

  - else:

    - may select the Random Access Preamble group according to the PRACH resource and the support for multi-tone Msg3 transmission. A UE supporting multi-tone Msg3 may only select the single-tone Msg3 Random Access Preambles group if there is no multi-tone Msg3 Random Access Preambles group.

    - may randomly select a Random Access Preamble within the selected group.

    - else if one of the reserved Random Access Preamble is selected by upper layer:

      - the Random Access Preamble may be that selected by upper layer.

    - else the Random Access Preamble is selected by the MAC entity as follows:

      - If Msg3 has not yet been transmitted, the MAC entity may, for NB-IoT UEs, BL UEs or UEs in enhanced coverage:

        - except for NB-IoT, may select the Random Access Preambles group and the PRACH resource corresponding to the selected enhanced coverage level;

        - for NB-IoT, may select the PRACH resource corresponding to the selected enhanced coverage level, and select the Random Access Preambles group corresponding to the PRACH resource and the support for multi-tone Msg3 transmission. A UE supporting multi-tone Msg3 shall only select the single-tone Msg3 Random Access Preambles group if there is no multi-tone Msg3 Random Access Preambles group.

      - If Msg3 has not yet been transmitted, the MAC entity may, except for BL UEs or UEs in enhanced coverage in case preamble group B does not exists, or for NB-IoT UEs:

        - if Random Access Preambles group B exists and any of the following events occur:

          - the potential message size (UL data available for transmission plus MAC header and, where required, MAC control elements) is greater than *messageSizeGroupA* and the pathloss is less than $P_{CMAX,c}$ (of the Serving Cell performing the Random Access Procedure) - *preambleInitialReceivedTargetPower* - *deltaPreambleMsg3* - *messagePowerOffsetGroupB;*

          - the Random Access procedure was initiated for the CCCH logical channel and the CCCH SDU size plus MAC header is greater than *messageSizeGroupA;*

- may select the Random Access Preambles group B;

- else:

    - may select the Random Access Preambles group A.

  - else, if Msg3 is being retransmitted, the MAC entity may:

    - may select the same group of Random Access Preambles as was used for the preamble transmission attempt corresponding to the first transmission of Msg3.

    - randomly select a Random Access Preamble within the selected group, excluding the reverved Random Access Preambles. The random function may be such that each of the allowed selections can be chosen with equal probability;

    - except for NB-IoT, may set PRACH Mask Index to 0.

    - determine the next available subframe containing PRACH permitted by the restrictions given by the *prach-ConfigIndex* (except for NB-IoT), the PRACH Mask Index (except for NB-IoT), physical layer timing requirements and in case of NB-IoT, the subframes occupied by PRACH resources related to a higher enhanced coverage level (a MAC entity may take into account the possible occurrence of measurement gaps when determining the next available PRACH subframe);

    - if the transmission mode is TDD and the PRACH Mask Index is equal to zero:

        - if *ra-PreambleIndex* was explicitly signalled and it was not 000000 (i.e., not selected by MAC):

            - randomly select, with equal probability, one PRACH from the PRACHs available in the determined subframe.

        - else:

            - randomly select, with equal probability, one PRACH from the PRACHs available in the determined subframe and the next two consecutive subframes.

      - else:

          - determine a PRACH within the determined subframe in accordance with the requirements of the PRACH Mask Index, if any.

          - for NB-IoT UEs, BL UEs or UEs in enhanced coverage, may select the *ra-ResponseWindowSize* and *mac-ContentionResolutionTimer* corresponding to the selected enhanced coverage level and PRACH.

          - proceed to the Random Access Preamble transmission.

### 7-3 Random Access Preamble Transmission

See 1-3.

### 7-4 Random Access Response reception

See 2-4 or 4-4.

### 7-5 Contention Resolution

See 1-5.

7-6 MAC PDU (Random Access Response)

See 2-6.

### 8. EIGHTH NOT CLAIMED EMBODIMENT

In an eighth example embodiment and mode both the wireless terminal and the radio access node may agree that an upper layer request procedure is completed when the wireless terminal finishes sending a preamble sequence, and accordingly that no response, e.g. no DCI in PDCCH and/or RAR, will be transmitted from the radio access node. In other words, after transmitting a Random Access Preamble Transmission with one of the reserved preamble, or a preamble (reserved or UE-selected) transmitted on a PRACH resource explicitly selected by upper layer, the wireless terminal may consider this Random Access procedure successfully completed.

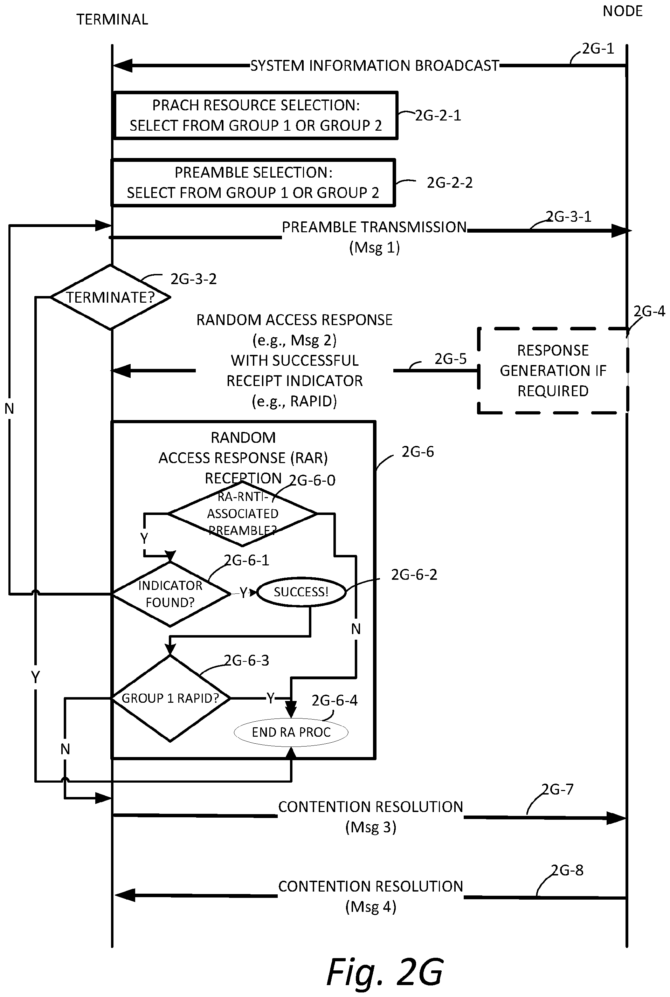

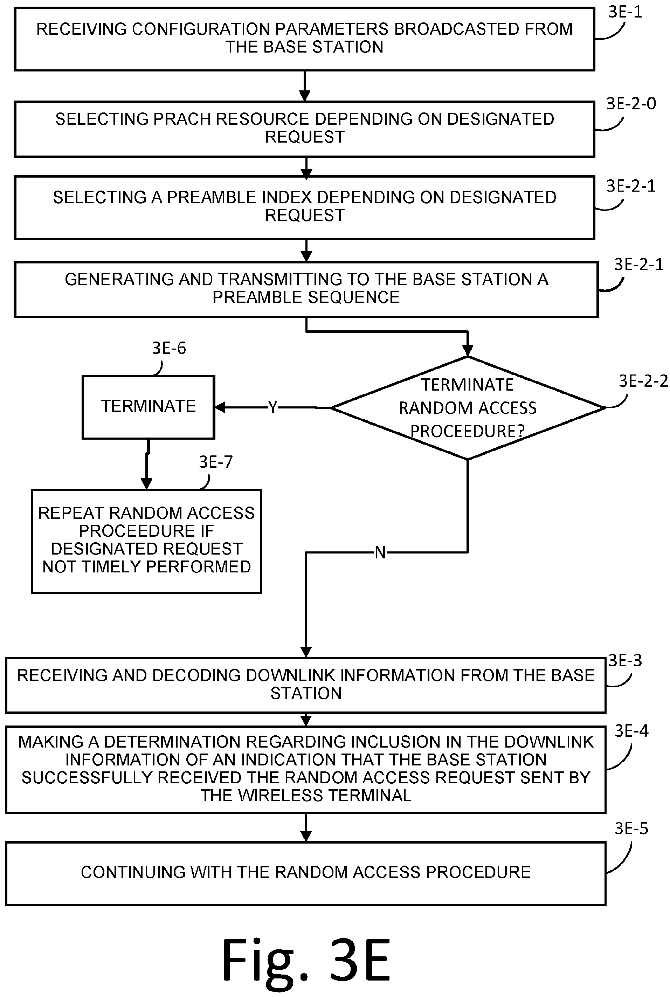

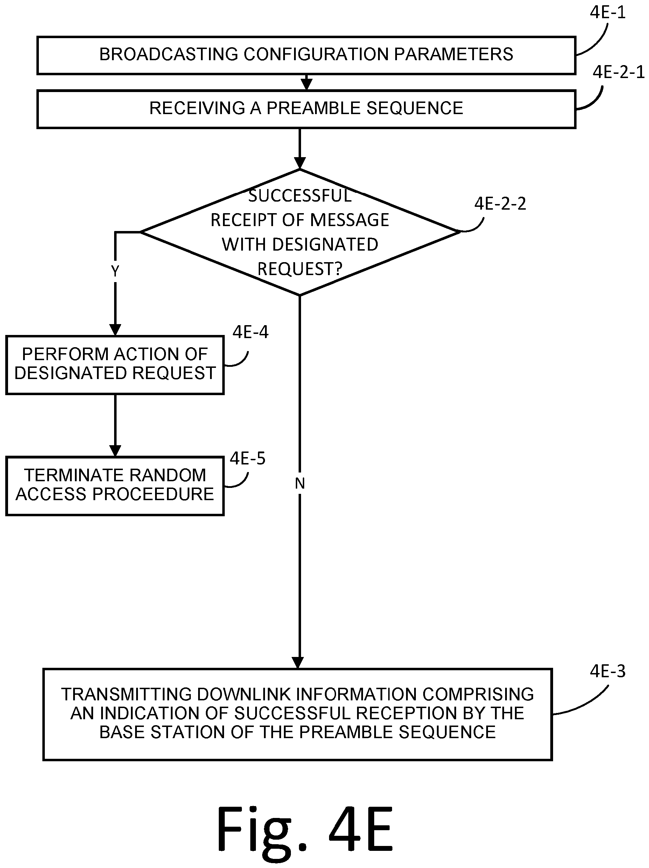

The eighth example embodiment and mode of a random access procedure of the technology disclosed herein is illustrated in Fig. 1G, Fig. 2G, Fig. 3E, and Fig. 4E. Fig. 1G shows structure and functionalities of radio access node 22G and wireless terminal 26G; Fig. 2G shows acts involved in the random access procedure of the second embodiment including messages; Fig. 3E shows example acts or steps specifically performed by wireless terminal 26G; and, Fig. 4E shows example acts or steps specifically performed by radio access node 22F.

Fig. 1G shows that terminal processor 40, and random access response checker 62 of the terminal random access procedure controller 56 in particular, comprises RACH termination controller 140. The RACH termination controller 140 determines that the random access procedure is terminated without the wireless terminal 26G receiving a random access response message (Msg 2) from the radio access node 22G in certain situations, e.g., in situations in which a designated request was made in conjunction with the random access procedure. For example, RACH termination controller 140 may determine that the random access procedure is successfully completed when the wireless terminal 26G transmits a random access preamble transmission message (Msg 1) with (1) one of the reserved preambles, or (2) a preamble (reserved or UE-selected) transmitted on a PRACH resource explicitly selected by upper layer for a designated request.

Failure of preamble reception at the radio access node 22G may be discovered by the upper layer of the wireless terminal 26G detecting that the expected action of this request is not fullfiled. For example, in a situation in which the designated request of a random access procedure comprises a request for system information, terminal processor 40 may re-send the designated request (e.g., the on-demand request for system information) to the radio access node if the wireless terminal 26G determines that the requested system information is not received within the predetermined time. In other words, in the case of on-demand system information delivery, the wireless terminal 26G may retransmit the reserved preamble or a preamble (reserved or UE-selected) on a configured PRACH resource when the wireless terminal 26G finds no requested SIB or group of SIBs transmitted for a predetermined duration.

In some example embodiments and modes the wireless terminal 26G may be configured with instructions as to how the wireless terminal 26G ascertains what type of response, if any, from the radio access node 22G enables the wireless terminal 26G to conclude that the random access procedure can be terminated. In some example implementations such instructions are provided via system information broadcast by the radio access node 22G. The configuration information from the radio access node may comprise termination criteria which informs the wireless terminal 26G how to determine that the random access procedure may be terminated. For example, the termination criteria either comprises an identification of a random access procedure response message from the radio access node or authorizes termination of the random access procedure without a response message from the radio access node.

Fig. 1G shows that the system information generator 80 of radio access node 22G may comprise RACH response type indication generator 144. The RACH response type indication generator 134 may generate system information that includes the termination criteria. Fig. 14 shows an example, non-limiting, simplified system information block (SIB) 150, preferably a Master Information Block (MIB), which includes an information element 152 that specifies parameters for designated requests, such as a designated request for on-demand supply of system information. The information element 152 further includes an information element 154 for each of 1, 2, ...j number of SIBs or SIB groups. For each SIB or SIB group, the information element 154 comprises a termination criteria information element 155. The termination criteria information element 155 may have a different value for each of plural differing ways in which the radio access node 22G may response to the random access request. As shown in Fig. 14, the termination criteria information element 155 may have either a first value which indicates that the wireless terminal 26G should expect to check for a RAR-based random access response message from the radio access node 22G, e.g., in the example manner of the second embodiment and mode, before determining that the random access procedure may be terminated. Alternatively the termination criteria information element 155 may comprise a second value which indicates that the wireless terminal 26G should expect to check for a PDCCH-based random access response message (in the example manner of the fourth embodiment and mode) from the radio access node 22G before determining that the random access procedure may be terminated. As a third alternative, the termination criteria information element 155 may comprise a third value which indicates that the wireless terminal 26G may consider the random access procedure to be determined after the wireless terminal 26G transmits a random access preamble transmission message (Msg 1) with (1) one of the reserved preambles, or (2) a preamble, reserved or UE-selected, transmitted on a PRACH resource explicitly selected by upper layer for a designated request. For the example shown in Fig. 14, the third value - which indicates that the wireless terminal 26G may consider the random access procedure as terminated is prescribed for each of SIB/SIB group 1 and SIB/SIB group j.

Thus, the radio access node 22G and the wireless terminal 26G may be configured to or not to proceed with response transmission/reception. In one implementation, the configuration is predetermined. In another configuration, the radio access node 22G may inform wireless terminals of this configuration by including in a periodically broadcasted message (e.g. MIB or SIB) an indication of whether and how it will send the response to the preamble. The following is an example information element of such indication, wherein the *ra-response* field indicates if the response is RAR-based (2nd embodiment), PDCCH-based (4th embodiment), or no response (this embodiment).

```
-- ASN1START

OnDemandSibGroupList ::=     SEQUENCE (SIZE (1..maxSIB-1)) OF OnDemandSibGroup

OnDemandSibGroup ::= SEQUENCE {
        sib-TypeList            SIB-TypeList,
        ra-PreambleIndex        INTEGER (0..63)   OPTIONAL, -- Need OR
        prach-Config            PRACH-ConfigSIBOnDemand OPTIONAL, -- Need OR
        ra-response             ENUMERATED {RAR, PDCCH, none, spare1}  OPTIONAL,
-- Need OR
}

SIB-TypeList ::= SEQUENCE (SIZE (1..maxSIB-1)) OF SIB-Type

SIB-Type ::=                ENUMERATED {
                                sibType3, sibType4, sibType5, sibType6,
                                sibType7, sibType8, sibType9, sibType10,
                                sibType11, sibType12-v920, sibType13-v920,
                                sibType14-v1130, sibType15-v1130,
                                sibType16-v1130, sibType17-v1250, sibType18-v1250,
                                ..., sibType19-v1250, sibType20-v1310, sibType21-
v14x0}
}

PRACH-ConfigSIBOnDemand ::=             SEQUENCE {
    rootSequenceIndex                   INTEGER (0..837),
    prach-ConfigInfo                    PRACH-ConfigInfo
}

PRACH-ConfigInfo ::=                    SEQUENCE {
    prach-ConfigIndex                   INTEGER (0..63),
    highSpeedFlag                       BOOLEAN,
    zeroCorrelationZoneConfig           INTEGER (0..15),
    prach-FreqOffset                    INTEGER (0..94)
}

-- ASN1STOP
```

Fig. 2G shows basic example acts involved in the random access procedure of the eighth embodiment including messages. Act 2G-1 represents the initialization phase and as such depicts the radio access node 22G transmitting, and wireless terminal 26G receiving, configuration parameters. In an example implementation, the configuration information may include the termination criteria as described above and represented by way of example in Fig. 14, so that the radio access node 22G may configure the wireless terminal 26G. The configuration parameters may be broadcast as system information from the serving cell (e.g., the cell based at radio access node 22G and serving wireless terminal 26G).

Act 2G-2, representing the preamble resource selection phase, may comprise two sub-acts. Act 2G-2-1 comprises the PRACH resource selection agent 120 selecting between the first random access physical radio resource group 124 and the second random access physical radio resource group 126, depending on whether the random access request is for a designated request or not. Act 2G-2-2 comprises wireless terminal 26B (e.g., preamble/resource selection agent 70) selecting a random access preamble sequence from a set of sequences available in the serving cell. As previously described, in the preamble resource selection phase the preamble/resource selection agent 70 has the choice of selecting a preamble index from the preamble index first group 72 or the preamble index second group 74. If this particular instance of the random access procedure is for a designated request, such as (for example) an on-demand request for system information, the preamble/resource selection agent 70 selects an appropriate preamble index for the designated requested from preamble index first group 72.

Act 2G-3 represents the preamble transmission phase in which the wireless terminal 26G transmits the selected preamble sequence corresponding to the selected preamble index on the PRACH resource selected at act 2G-2-1. As described, the selected uplink resource may be from the first random access physical radio resource group 124 for a designated request, or from the second random access physical radio resource group 126 for a non-designated request, e.g., a normal RACH request. The transmission of act 2G-3-1 is depicted as the Msg1 of the random access procedure.

As indicated above, if the transmission of act 2G-3-1 is depicted as the Msg1 of the random access procedure involved a designated request, e.g., an on-demand request for system information, for example, the wireless terminal 26G may be configured to terminate the random access procedure without awaiting a random access response. Act 2G-3-2 shows the wireless terminal 26G checking to determine whether it is configured, e.g., either preconfigured or configured by radio access node 22G, to terminate when the transmission of the RACH preamble (Msg1) involves a designated request. If the transmission of Msg 1 does involved a designated request, the wireless terminal 26G may terminate the random access procedure as shown by act 2G-6-4. Otherwise, the wireless terminal 26G may await a random access response message, as discussed below.

The radio access node 22G may process the preamble transmission message (Msg1) of act 2G-3-1, and thereafter may or may not perform optional act 2G-4. Whether act 2G-4 is executed depends on whether the radio access node 22G and wireless terminal 26G have an agreement or are configured so transmission of in the preamble transmission message (Msg 1) of a RACH preamble index related to a designated request may be considered by the wireless terminal 26G to terminate the random access procedure, and that successful receipt of a RACH preamble index related to a designated request does not require a response by the radio access node 22G. For that reason, act 2G-4 is shown in Fig. 2G as being response generation "if required", since no response may be required for a random access procedure involving a designated request. If a random access response is required, the radio access node 22G generates an appropriate random access response which, as understood with respect to the second example embodiment and mode, may be a RAR-based response message, or as understood with respect to the fourth example embodiment and mode may be a PDCCH-based response message. The remaining acts of Fig. 2G are understood in light or comparably numbered but differently alphabetically suffixed acts of other embodiment and modes, such as Fig. 2F, for example.

Fig. 3E shows example acts or steps specifically performed by wireless terminal 26G. The acts of Fig. 3E may be performed by terminal random access procedure controller 56, which may comprise the terminal processor 40 executing instructions stored on non-transient memory. Act 3E-1 comprises the wireless terminal 26A receiving configuration parameters broadcasted from the base station. As indicated above, the configuration parameters may include random access termination criteria, such as illustrated by way of example in Fig. 14.

Act 3E-2-0 comprises the PRACH resource selection agent 120 selecting an uplink physical resource from uplink physical resource pool 122. The uplink physical resource selected as act 3E-2-0 may be from the first random access physical radio resource group 124, e.g., for a designated request, or from second random access physical radio resource group 126, for other types of random access requests.

Act 3E-2-1 comprises the preamble/resource selection agent 70 selecting a preamble index from one of preamble index first group 72 and preamble index second group 74. As explained above, whether the preamble/resource selection agent 70 selects a preamble index from preamble index first group 72 or preamble index second group 74, and if from preamble index first group 72, the particular preamble index of preamble index first group 72, depending on whether the random access procedure is for a designated request or not. Thus, in some sense act 3E-2 comprises the preamble/resource selection agent 70 selecting a preamble index depending on designated request (e.g., whether there is or is not a designated request, and the particular type of designated request when a designated request is to be made). Act 3E-2-comprises generating and transmitting to the base station a preamble sequence, e.g., as message Msg1.

Act 3E-2-2 corresponds to act 2G-3-of Fig. 2G, and comprises the wireless terminal 26G checking to determine whether it is configured, e.g., either pre-configured or configured by radio access node 22G, to terminate when the transmission of the RACH preamble (Msg1) involves a designated request. If the transmission of Msg 1 does involve a designated request, the wireless terminal 26G may terminate the random access procedure as shown by act 3E-6. Otherwise, the wireless terminal 26G may await a random access response message as act 3E-3.

Act 3E-3 comprises receiving and decoding downlink information from the base station, e.g., in/from message Msg2. Act 3E-4 comprises the random access response checker 62 making a determination regarding inclusion in the downlink information of an indication that the base station successfully received the random access request sent by the wireless terminal. If the determination of act 3E-4 is positive, as act 3E-5 the wireless terminal 26G continues with the random access procedure. Otherwise, the wireless terminal 26G may have to repeat the preamble transmission message Msg 1 of Act 3E-2-1.

If the wireless terminal 26G is able to terminate the random access procedure at acct 3E-6, as act 3E-7 the wireless terminal 26G may monitor or check to determine if an action involved in the designated request has been performed. For example, if the designated request concerned an on-demand request for system information, act 3E-7 may comprise the wireless terminal 26G checking whether the requested system information has been received. If the requested system information has not been received, the wireless terminal 26G may repeat the random access procedure.

Fig. 4E shows example acts or steps specifically performed by radio access node 22G. The acts of Fig. 4E may be performed by node random access procedure controller 54, which may comprise the node processor 30 executing instructions stored on non-transient memory. Act 4E-1 comprises the radio access node 22G broadcasting configuration parameters, e.g., in a system information block (SIB). As explained above, the system information may include an indication, definition, or description of random access termination criteria.

Act 4E-2-1 comprises the radio access node 22G receiving a preamble sequence corresponding to the selected preamble index and transmitted on the PRACH resource selected by radio access node 22G at act 3E-2-0. The preamble sequence is transmitted in message Msg1 from wireless terminal 26G.

Act 4E-2-2 comprise the random access response generator 60 determining whether the radio access node 22G is obligated to provide a response message to the preamble sequence is transmitted in message Msg1. As indicated above, in the eighth example embodiments and modes it may be agreed, e.g., by configuration, that the radio access node 22G need not respond to a random access request if the random access message is for a designated request. For example, the radio access node 22G may need not generate a response if the 22G successfully receives a preamble transmission message that include (1) one of the reserved preambles, or (2) a preamble (reserved or UE-selected) transmitted on a PRACH resource explicitly selected by upper layer for a designated request. If the determination of act 4E-2-2 is negative, the radio access node 22G performs act 4E-3.

Act 4E-3 comprises the random access response generator 60 generating, and the radio access node 22G transmitting, downlink information comprising an indication of successful reception by the base station of the preamble sequence. Details of act 4E-2 may be understood in light of the example descriptions of act 2G-4 and Fig. 2G-1 or Fig. 2G-2.

If the determination of act 4E-2-2 is affirmative, e.g., the radio access node 22G has successfully received the preamble transmission message (Msg 1) which included the designated request, radio access node 22G performs act 4E-4 and act 4E-5. Act 4E-4 comprises performing the action involved in the designated request. For example, if the designated request is an on-demand request for a certain type of system information, as act 4E-4 the radio access node 22G prepares and transmits (e.g., broadcasts) the requested system information. As act 4E-5, the radio access node 22G may also consider that the random access procedure is terminated.

## 9. NINTH NOT CLAIMED EMBODIMENT

A ninth example embodiment and mode provides additional robustness on the preamble transmission for the eighth embodiment. Specifically, the wireless terminal of the ninth example embodiment and mode may be configured with preamble transmission power configuration parameters separately from the parameters used for the regular RACH process. The ninth example embodiment and mode may be used in the case where no response from the radio access node for the preamble transmission is configured, or may be used even in the case where a response is configured.

The ninth example embodiment and mode of a random access procedure of the technology disclosed herein is illustrated in Fig. 1H, Fig. 3F, and Fig. 4H. Fig. 1H shows structure and functionalities of radio access node 22H and wireless terminal 26H; Fig. 3F shows example acts or steps specifically performed by wireless terminal 26H; and, Fig. 4H shows example acts or steps specifically performed by radio access node 22H.

Fig. 1H shows that terminal processor 40, and the terminal random access procedure controller 56 in particular, comprises random access procedure power controller 160, also simply known as power controller 160. The power controller 160 controls power levels at which acts of the random access procedure are performed. In the ninth example embodiment and mode, the power controller 160 allows a random access preamble that pertains to a designated request to be transmitted at a different power level, and preferably a higher power level, than random access preambles that do not involve a designated request. As indicated before, the random access preambles are transmitted in the preamble transmission message (Msg 1). The power controller 160 is thus configured with plural power level(s), including a first power level for use in sending a preamble transmission message that is associated with a designated request. The first power level is different from a second power level that may be used by the wireless terminal for other random access procedure communications, such as transmission of a random access preamble that is not associated with a designated request. The plural power levels of the power controller 160 may be pre-configured at the wireless terminal 26H, or configured by the radio access node 22H (e.g., using a configuration message such as a system information broadcast message).

Fig. 1H shows that the node processor 30 of radio access node 22H, and the system information generator 80 in particular, may comprise preamble power indication generator 164. The preamble power indication generator 164 is used by radio access node 22H, e.g., to prepare a configuration message, such as a system information block (SIB), that may include the preamble transmission message transmit power level.

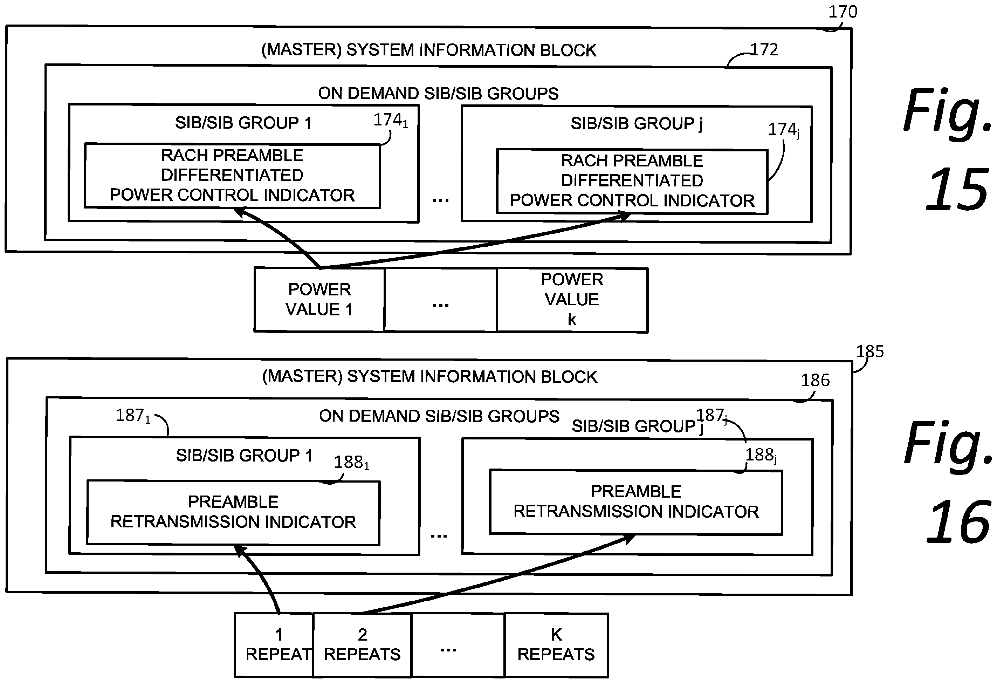

Fig. 15 shows an example, non-limiting, simplified system information block (SIB) 170, preferably a Master Information Block (MIB), which includes an information element 172 that specifies configuration parameters, such as a preamble transmission message transmit power level. The information element 172 further includes an information element 174 for each of 1, 2, ...j number of SIBs or SIB groups. For each SIB or SIB group, the information element 174 comprises a preamble transmission message transmit power level information element 175 which may comprise a table or bit specifying different preamble transmission message transmit power levels that may be used by wireless terminal 26H in transmitting a preamble transmission message, e.g., message Msg 1. For example, the preamble transmission message transmit power level information element 175 may comprise a first power value which indicates that the wireless terminal 26H should transmit a preamble transmission message (Msg 1) that pertains to or is associated with a designated request at a first transmission power value, a second power value which indicates that the wireless terminal 26H should transmit a preamble transmission message (Msg 1) that pertains to or is associated with a designated request at a second transmission power value, up to a $k^{th}$ power value which indicates that the wireless terminal 26H should transmit a preamble transmission message (Msg 1) that pertains to or is associated with a designated request at a $k_{th}$ transmission power value. For the particular example shown in Fig. 15, both the SIB/SIB group 1 and the SIB/SIB group j are directed by system information to use power value 1 for transmission of any random access preamble that pertains to a designated request, the power value 1 preferably being different from the power level used for transmission of a random access preamble that does not pertain to a designated request.

In one implementation for the case of the aforementioned on-demand system information delivery, *preamble-ReceivedTargetPower,* the power level the eNB would like to receive for a random access, may be specifically configured for a SIB/SIB group as shown below.

```
-- ASN1START

OnDemandSibGroupList ::=    SEQUENCE (SIZE (1..maxSIB-1}) OF OnDemandSibGroup

OnDemandSibGroup ::= SEQUENCE {
        sib-TypeList          SIB-TypeList,
        ra-PreambleIndex      INTEGER (0..63)   OPTIONAL, -- Need OR
        prach-Config          PRACH-ConfigSIB         OPTIONAL, -- Need OR
        ra-response ENUMERATED{RAR, PDCCH, none, spare1} OPTIONAL,              -
- Need OR
        preambleReceivedTargetPower ENUMERATED {
               dBm-120, dBm-118, dBm-116, dBm-114, dBm-112,
               dBm-110, dBm-108, dBm-106, dBm-104, dBm-102,
               dBm-100, dBm-98, dBm-96, dBm-94,
               dBm-92, dBm-90}          OPTIONAL, -- Need OR
}

SIB-TypeList ::= SEQUENCE (SIZE (1..maxSIB-1)) OF SIB-Type

SIB-Type ::=                  ENUMERATED {
                sibType3, sibType4, sibType5, sibType6,
                sibType7, sibType8, sibType9,sibType10,
                sibType11, sibType12-v920, sibType13-v920,
                sibType14-v1130, sibType15-v1130,
                sibType16-v1130,sibType17-v1250,sibType18-1250,
                   ..., sibType19-v1250,sibType20-v1310,
                   sibType21-v14x0}
}

PRACH-ConfigSIB ::=              SEQUENCE {
    rootSequenceIndex                INTEGER (0..837),
    prach-ConfigInfo                 PRACH-ConfigInfo
}

PRACH-ConfigInfo ::=             SEQUENCE {
```

```
prach-ConfigIndex                INTEGER (0..63),
highSpeedFlag                    BOOLEAN,
zeroCorrelationZoneConfig        INTEGER (0..15),
prach-FreqOffset                 INTEGER (0..94)
}
```

If this optional field *preambleReceivedTargetPower,* which may correspond to preamble transmission message transmit power level information element 175, is not present, the wireless terminal 26H may instead use *preambleInitialReceivedTargetPower* shown in the first embodiment, the parameter to be used for the regular RACH process.

This implementation is not intended to preclude any other ways of configuring preamble transmit power. For example, the configuration parameters for the preamble transmit power to be used for sending a special upper layer request may comprise a offset value to indicate an offset from the preamble transmit power for the regular RACH process.

Fig. 3F shows example acts or steps specifically performed by wireless terminal 26G. The acts of Fig. 3F may be performed by terminal random access procedure controller 56, which may comprise the terminal processor 40 executing instructions stored on non-transient memory. Act 3F-1 comprises the wireless terminal 26H receiving configuration parameters broadcasted from the base station. As indicated above, the configuration parameters may include preamble transmission message transmit power levels, such as illustrated by way of example in Fig. 15. In other words, the configuration information comprises information identifying a first power level for use in sending a designated request of the random access procedure. The first power level is different from a second power level that may be used by the wireless terminal for another communication of the random access procedure.

Act 3F-2 comprises the wireless terminal 26H selecting one or more of a preamble index and an uplink physical resource for which to transmit the preamble index to radio access node 22H. Although not described in detail at this juncture, it should be understood that the uplink physical resource selected as act 3F-2 may be from the first random access physical radio resource group 124 (for a designated request) or from second random access physical radio resource group 126 (for other types of random access requests), and that the preamble index may be selected from the preamble index first group 72 or the preamble index second group 74, depending on the nature of the random access procedure.

Act 3F-3 comprises generating and transmitting to the base station a preamble sequence, e.g., as message Msg1. In act 3F-3, the preamble transmission message (Msg 1) is transmitted at the first power level, which is different from the power level at which other messages of the random access procedure are transmitted. Accordingly, in context of the random access procedure, the preamble transmission message (Msg 1) is transmitted at a unique power level.

Act 3F-4 comprises the wireless terminal 26H finishing the random access procedure according to any one or more of the actions described in conjunction with other example embodiments and modes. For example, act 3F-4 may comprise the wireless terminal 26H assuming that the random access procedure should be terminated if the wireless terminal 26H transmitted a preamble index or used a PRACH resource that is indicative of a designated request. Otherwise, act 3F-4 may comprise the wireless terminal 26H waiting for and processing a random access response, either RAR-based or PDCCH-based, as described in earlier embodiments.

Fig. 4H shows example acts or steps specifically performed by radio access node 22G. The acts of Fig. 4H may be performed by node random access procedure controller 54, which may comprise the node processor 30 executing instructions stored on non-transient memory. Act 4H-1 comprises the radio access node 22H broadcasting configuration parameters, e.g., in a system information block (SIB). As explained above, the system information may include the preamble transmission message transmit power level, such as information element 175 shown in Fig. 15.

Act 4H-2comprises the radio access node 22G receiving a preamble sequence corresponding to the selected preamble index and transmitted on the PRACH resource selected by radio access node. The preamble sequence is received in message Msg1 from wireless terminal 26H.

Act 4H-3 comprises the random access response generator 60 finishing the random access procedure according to any one or more of the actions described in conjunction with other example embodiments and modes. For example, act 4H-3 may assume that the random access procedure should be terminated and a designated request performed if the wireless terminal 26H transmitted a preamble index or used a PRACH resource that is indicative of a designated request. Otherwise, act 4H-3 may comprise the wireless terminal 26H generating a random access response, either RAR-based or PDCCH-based, as described in earlier embodiments.

Having provided an overview of the ninth example embodiment and mode, a more detailed discussion of the Random Access preamble Transmission stage for the ninth example embodiment and mode follows:

## 9-3 Random Access Preamble Transmission

The random-access procedure may be performed as follows:

- if *preambleReceivedTargetPower* is configured:

  - set PREAMBLE_RECEIVED_TARGET_POWER to *preambleReceivedTargetPower* + DELTA_PREAMBLE;

- else set PREAMBLE_RECEIVED_TARGET_POWER to *preambleInitialReceivedTargetPower* + DELTA_PREAMBLE + (PREAMBLE_TRANSMISSION_COUNTER - 1) * *powerRampingStep;*

- if the UE is a BL UE or a UE in enhanced coverage:

- the PREAMBLE_RECEIVED_TARGET_POWER may be set to: PREAMBLE_RECEIVED_TARGET_POWER - 10 * log10(*numRepetitionPerPreambleAttempt*);

- if NB-IoT:

- for enhanced coverage level 0, the PREAMBLE_RECEIVED_TARGET_POWER may be set to: PREAMBLE _RECEIVED _TARGET _POWER - 10 * log10(*numRepetitionPerPreambleAttempt*)

- for other enhanced coverage levels, the PREAMBLE_RECEIVED_TARGET_POWER may be set corresponding to the max UE output power;

- if the UE is an NB-IoT UE, a BL UE or a UE in enhanced coverage:

  - may instruct the physical layer to transmit a preamble with the number of repetitions required for preamble transmission corresponding to the selected preamble group (i.e., *numRepetitionPerPreambleAttempt)* using the selected PRACH corresponding to the selected enhanced coverage level, corresponding RA-RNTI, preamble index or for NB-IoT subcarrier index, and PREAMBLE_RECEIVED_TARGET_POWER.
  - else:

    - may instruct the physical layer to transmit a preamble using the selected PRACH, corresponding RA-RNTI, preamble index and PREAMBLE_RECEIVED_TARGET_POWER. Note: The physical layer may generate a preamble sequence from the preamble index and the parameters contained in PRACH-ConfigInfo. When receiving the sequence, the eNB may be able to uniquely identify the preamble index corresponding to the sequence.

## 10. **TENTH NOT CLAIMED EMBODIMENT**

A tenth example embodiment and mode improves the robustness of the preamble transmission, especially in the case of no response transmission configured in the radio access node, as shown in the eighth or ninth embodiment, the wireless terminal of the tenth embodiment may attempt to transmit the preamble associated with an upper layer request multiple times, using multiple RACH occasions in the uplink. The number of attempts may be pre-determined, autonomously determined by the UE, or configured by the eNB via broadcasted system information (e.g. a parameter in the *OnDemandSIBGroup* information element.

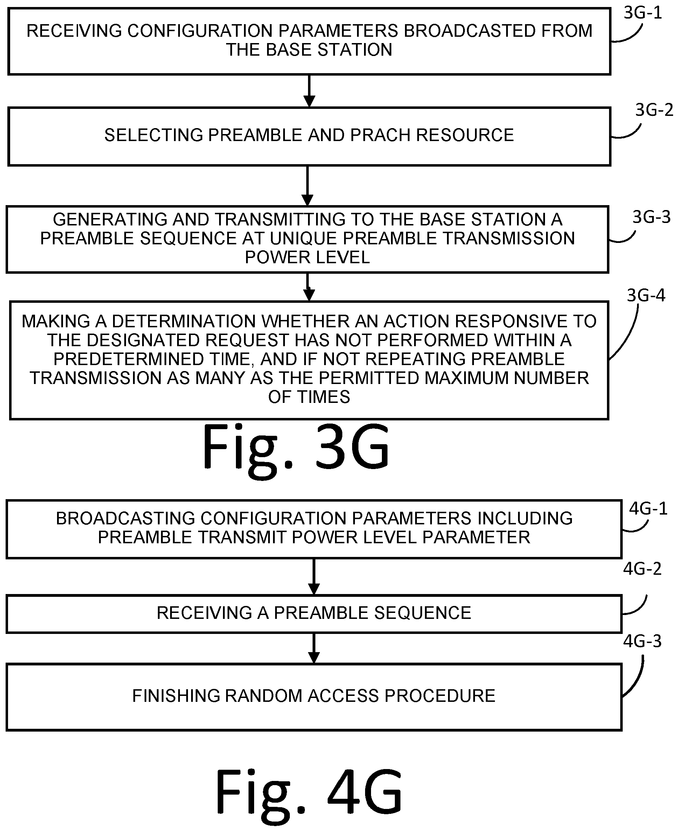

The tenth example embodiment and mode of a random access procedure of the technology disclosed herein is illustrated in Fig. 1I, Fig. 3G, and Fig. 4G. Fig. 1I shows structure and functionalities of radio access node 22I and wireless terminal 26I; Fig. 3G shows example acts or steps specifically performed by wireless terminal 26I; and, Fig. 4G shows example acts or steps specifically performed by radio access node 22I.

Fig. 1I shows that terminal processor 40, and the terminal random access procedure controller 56 in particular, comprises preamble transmission repeater 180, also simply known as or preamble transmission controller 180. The preamble transmission controller 180 controls the number of times during a random access procedure that the preamble transmission message (Msg 1) may be repeatedly transmitted.

Fig. 1I shows that the node processor 30 of radio access node 22I, and the system information generator 80 in particular, may comprise preamble re-transmission indication generator 184. The preamble re-transmission indication generator 184 is used by radio access node 22I to prepare a configuration message, such as a system information block (SIB), that may include the preamble transmission message transmit power level.

Fig. 16 shows an example, non-limiting, simplified system information block (SIB) 185, preferably a Master SIB (MIB), which includes an information element 186 that specifies configuration parameters, such as a preamble transmission message transmit power level. The information element 186 further includes an information element 187 for each of 1, 2, ...j number of SIBs or SIB groups. For each SIB or SIB group, the information element 174 comprises a preamble re-transmission information element 188 which may comprise a table or bit specifying different preamble transmission message transmit power levels that may be used by wireless terminal 26I in transmitting a preamble transmission message, e.g., message Msg 1. For example, the preamble re-transmission information element 188 may comprise a number indicative of the maximum number of permitted re-transmission attempts, e.g., from 1 to k number of retransmissions. In the example shown in Fig. 16, the SIB/SIB group 1 is permitted one re-transmission of the random access preamble; the SIB/SIB group 1 is permitted two re-transmissions of the random access preamble.

Fig. 3G shows example acts or steps specifically performed by wireless terminal 26G. The acts of Fig. 3G may be performed by terminal random access procedure controller 56, which may comprise the terminal processor 40 executing instructions stored on non-transient memory. Act 3G-1 comprises the wireless terminal 26I receiving configuration parameters broadcasted from the base station. As indicated above, the configuration parameters may include the preamble re-transmission information element 188, such as illustrated by way of example in Fig. 16. In other words, the configuration information comprises information identifying a maximum number of times that transmission of the RACH preamble may be repeated if the first execution of the random access procedure is not successful.

Act 3G-2 comprises the wireless terminal 26I selecting one or more of a preamble index and an uplink physical resource for which to transmit the preamble index to radio access node 22I. Although not described in detail at this juncture, it should be understood that the uplink physical resource selected as act 3G-2 may be from the first random access physical radio resource group 124, e.g., for a designated request, or from second random access physical radio resource group 126, for other types of random access requests, and that the preamble index may be selected from the preamble index first group 72 or the preamble index second group 74, depending on the nature of the random access procedure.

Act 3G-3 comprises generating and transmitting to the base station a preamble sequence, e.g., as message Msg1. The preamble transmission message Msg 1 may be for a designated request.

Act 3G-4 comprises the wireless terminal 26I making a determination whether an action responsive to the designated request has not performed within a predetermined time, and if not, repeating act 3G-3 followed by the determination of act 3G-4 a number of time but not more than that permitted by the preamble re-transmission information element 188.

Fig. 4G shows example acts or steps specifically performed by radio access node 22G. The acts of Fig. 4G may be performed by node random access procedure controller 54, which may comprise the node processor 30 executing instructions stored on non-transient memory. Act 4G-1 comprises the radio access node 22I broadcasting configuration parameters, e.g., in a system information block (SIB). As explained above, the system information may include the preamble re-transmission limit value, such as information element 188 shown in Fig. 16.

Act 4G-2 comprises the radio access node 22G receiving a preamble sequence corresponding to the selected preamble index and transmitted on the PRACH resource selected by radio access node. The preamble sequence is received in message Msg1 from wireless terminal 26I.

Act 4G-3 comprises the random access response generator 60 finishing the random access procedure according to any one or more of the actions described in conjunction with other example embodiments and modes. For example, act 4G-3 may assume that the random access procedure should be terminated and a designated request performed if the wireless terminal 26I transmitted a preamble index or used a PRACH resource that is indicative of a designated request. Otherwise, act 4G-3 may comprise the wireless terminal 26I generating a random access response, either RAR-based or PDCCH-based, as described in earlier embodiments. If for some reason the radio access node 22I does not receive the preamble transmission of act 4G-2, the radio access node 22I may receive other transmissions of the preamble transmission message (Msg 1) in conjunction with the wireless terminal 26I executing act 3G-4.

The seventh example embodiment and mode described above involved, e.g., selection and/or use of certain uplink radio resources for random access requests that are for a designated request. Various other example embodiments and modes described above may be used in conjunction with the reserved uplink resource technology of the seventh example embodiment and mode, particularly including the eighth through tenth example embodiment and mode inclusive. However, it should be understood that in at least some implementations the technological aspects of the eighth through tenth example embodiments and modes inclusive do not require the reserved uplink resource technology and are implemented without the reserved uplink resource technology. For example, the use of system information to advise of the type of random access response that a wireless terminal should expect, as generated by the RACH response type indication generator 144 of Fig. 1G and the system information illustrated in Fig. 14 does not require that the wireless terminal select a reserved PRACH in the manner shown in act 2G-2-1 of Fig. 2G or in act 3E-2-0 of Fig. 3E. Similarly, the use of system information to advise what power level a wireless terminal should use for random access preamble transmission, as generated by preamble power indication generator 164 of Fig. 1H and the system information illustrated in Fig. 15 does not require that the wireless terminal select a reserved PRACH in the manner shown in act 3F-2-0 of Fig. 3F. Further, the use of system information to advise that a wireless terminal should repeat random access preamble transmission, and a maximum value for doing so, as generated by preamble re-transmission indication generator 184 of Fig. 1I and the system information illustrated in Fig. 16 does not require that the wireless terminal select a reserved PRACH.

It should be understood that apparatus, functionalities, acts and the like that are commonly numbered throughout the various example embodiments and modes have essentially the same structure and/or operation for each of the example embodiments and modes unless otherwise noted.

For yet other example embodiments and modes, aspects of the first through tenth example embodiments and modes may be used in combination with one another.

Although the processes and methods of the disclosed embodiments may be discussed as being implemented as a software routine, some of the method steps that are disclosed therein may be performed in hardware as well as by a processor running software. As such, the embodiments may be implemented in software as executed upon a computer system, in hardware as an application specific integrated circuit or other type of hardware implementation, or a combination of software and hardware. The software routines of the disclosed embodiments are capable of being executed on any computer operating system, and is capable of being performed using any CPU architecture. The instructions of such software are stored on non-transient computer readable media.

The functions of the various elements including functional blocks, including but not limited to those labeled or described as "computer", "processor" or "controller", may be provided through the use of hardware such as circuit hardware and/or hardware capable of executing software in the form of coded instructions stored on computer readable medium. Thus, such functions and illustrated functional blocks are to be understood as being either hardware-implemented and/or computer-implemented, and thus machine-implemented.

In terms of hardware implementation, the functional blocks may include or encompass, without limitation, digital signal processor (DSP) hardware, reduced instruction set processor, hardware (e.g., digital or analog) circuitry including but not limited to application specific integrated circuit(s) [ASIC], and/or field programmable gate array(s) (FPGA(s)), and (where appropriate) state machines capable of performing such functions.

Certain units and functionalities of node 22 and wireless terminal 26 are, in example embodiments, implemented by electronic machinery, computer, and/or circuitry. For example, the node processors 30 and terminal processors 40 of the example embodiments herein described and/or encompassed may be comprised by the computer circuitry of Fig. 13. Fig. 17 shows an example of such electronic machinery or circuitry, whether node or terminal, as comprising one or more processor(s) circuits 190, program instruction memory 191; other memory 192 (e.g., RAM, cache, etc.); input/output interfaces 193; peripheral interfaces 194; support circuits 195; and busses 196 for communication between the aforementioned units.

The program instruction memory 191 may comprise coded instructions which, when executed by the processor(s), perform acts including but not limited to those described herein. Thus is understood that each of node processor 30 and terminal processor 40, for example, comprise memory in which non-transient instructions are stored for execution.

In terms of computer implementation, a computer is generally understood to comprise one or more processors or one or more controllers, and the terms computer and processor and controller may be employed interchangeably herein. When provided by a computer or processor or controller, the functions may be provided by a single dedicated computer or processor or controller, by a single shared computer or processor or controller, or by a plurality of individual computers or processors or controllers, some of which may be shared or distributed. Moreover, use of the term "processor" or "controller" shall also be construed to refer to other hardware capable of performing such functions and/or executing software, such as the example hardware recited above.

The functions of the various elements including functional blocks, including but not limited to those labeled or described as "computer", "processor" or "controller", may be provided through the use of hardware such as circuit hardware and/or hardware capable of executing software in the form of coded instructions stored on computer readable medium. Thus, such functions and illustrated functional blocks are to be understood as being either hardware-implemented and/or computer-implemented, and thus machine-implemented.

Nodes that communicate using the air interface also have suitable radio communications circuitry. Moreover, the technology can additionally be considered to be embodied entirely within any form of computer-readable memory, such as solid-state memory, magnetic disk, or optical disk containing an appropriate set of computer instructions that would cause a processor to carry out the techniques described herein.

It will be appreciated that the technology disclosed herein is directed to solving radio communications-centric issues and is necessarily rooted in computer technology and overcomes problems specifically arising in radio communications. Moreover, in at least one of its aspects the technology disclosed herein improves the functioning of the basic function of a wireless terminal and/or node itself so that, for example, the wireless terminal and/or node can operate more effectively by prudent use of radio resources.

Although the description above contains many specificities, these should not be construed as limiting the scope of the technology disclosed herein but as merely providing illustrations of some of the presently preferred embodiments of the technology disclosed herein. Thus the scope of the technology disclosed herein should be determined by the appended claims. Therefore, it will be appreciated that the scope of the technology disclosed herein fully encompasses other embodiments which may become obvious to those skilled in the art, and that the scope of the technology disclosed herein is accordingly to be limited by nothing other than the appended claims, in which reference to an element in the singular is not intended to mean "one and only one" unless explicitly so stated, but rather "one or more." Moreover, it is not necessary for a device or method to address each and every problem sought to be solved by the technology disclosed herein, for it to be encompassed by the present claims. Furthermore, no element, component, or method step in the present disclosure is intended to be dedicated to the public regardless of whether the element, component, or method step is explicitly recited in the claims.

**Claims**

1.  A user equipment (26) comprising:
    a receiving unit (46) configured to receive, from a base station apparatus (22), a periodically broadcasted system information block, SIB, the periodically broadcasted SIB indicating configuration parameters for a random access procedure, the configuration parameters at least comprising:

    one or more SIB types, wherein the one or more SIB types identify a specific set of one or more on-demand SIBs, a set of multiple random access preambles configured for requesting on-demand delivery of the specific set of one or more on-demand SIBs, and
    a set of multiple physical random access channel, PRACH, resources configured for requesting on-demand delivery of the specific set of one or more on-demand SIBs;
    a processing unit (40) configured to select a random access preamble from the set of multiple random access preambles and a PRACH resource from the set of multiple PRACH resources in accordance with a request for the specific set of one or more on-demand SIBs; and
    a transmitting unit (44) configured to transmit the selected random access preamble using the selected PRACH resource for requesting on-demand delivery of the specific set of one or more on-demand SIBs.

2.  The user equipment (26) of claim 1, wherein the request for the specific set of one or more on-demand SIBs requests a system information block, SIB, or a group of SIBs from the base station apparatus (22).

3.  A base station apparatus (22) comprising:

    a receiving unit (36) and a transmitting unit (34) configured to communicate across a radio interface with a user equipment (26); and
    a processing unit (30) configured to:
    periodically broadcast a system information block, SIB, the periodically broadcasted SIB indicating configuration parameters for a random access procedure, the configuration parameters at least comprising:

    one or more SIB types, wherein the one or more SIB types identify a specific set of one or more on-demand SIBs,
    a set of multiple random access preambles configured for requesting on-demand delivery of the specific set of one or more on-demand SIBs, and
    a set of multiple physical random access channel, PRACH, resources configured for requesting on-demand delivery of the specific set of one or more on-demand SIBs;
    receive a preamble sequence associated with one of the random access preambles of the set of multiple random access preambles on one of the PRACH resources of the set of multiple PRACH resources in accordance with a request for the specific set of one or more on-demand SIBs; and
    identify and process the request for the specific set of one or more on-demand SIBs from the user equipment (26).

4.  The base station apparatus (22) of claim 3, wherein the request for the specific set of one or more on-demand SIBs requests a system information block, SIB, or a group of SIBs from the base station apparatus (22).

5.  A method for a user equipment (26), comprising:
    receiving, from a base station apparatus (22), a periodically broadcasted system information block, SIB, the periodically broadcasted SIB indicating configuration parameters for a random access procedure, the configuration parameters at least comprising:

    one or more SIB types, wherein the one or more SIB types identify a specific set of one or more on-demand SIBs, a set of multiple random access preambles configured for requesting on-demand delivery of the specific set of one or more on-demand SIBs, and

a set of multiple physical random access channel, PRACH, resources configured for requesting on-demand delivery of the specific set of one or more on-demand SIBs;

selecting a random access preamble from the set of multiple random access preambles and a PRACH resource from the set of multiple PRACH resources in accordance with a request for the specific set of one or more on-demand SIBs; and

transmitting the selected random access preamble using the selected PRACH resource for requesting on-demand delivery of the specific set of one of more on-demand SIBs.

6. The method of claim 5, wherein the request for the specific set of one or more on-demand SIBs requests a system information block, SIB, or a group of SIBs from the base station apparatus (22).

7. A method for a base station apparatus (22), comprising:

using a receiving unit (36) and a transmitting unit (34) to communicate across a radio interface with a user equipment (26);

using a processing unit (30) to:

periodically broadcast a system information block, SIB, the periodically broadcasted SIB indicating configuration parameters for a random access procedure, the configuration parameters at least comprising:

one or more SIB types, wherein the one or more SIB types identify a specific set of one or more on-demand SIBs,

a set of multiple random access preambles configured for requesting on-demand delivery of the specific set of one or more on-demand SIBs, and

a set of multiple physical random access channel, PRACH, resources configured for requesting on-demand delivery of the specific set of one or more on-demand SIBs;

receive a preamble sequence associated with one of the random access preambles of the set of multiple random access preambles on one of the PRACH resources of the set of multiple PRACH resources in accordance with a request for the specific set of one or more on-demand SIBs; and

identify and process the request for the specific set of one or more on-demand SIBs from the user equipment (26).

8. The method of claim 7, wherein the request for the specific set of one or more on-demand SIBs requests a system information block, SIB, or a group of SIBs from the base station apparatus (22).

**Patentansprüche**

1. Benutzerausrüstung bzw. -gerät (26), umfassend:

eine Empfangseinheit (46), die konfiguriert ist, von einer Basisstationsvorrichtung (22) einen periodisch gesendeten Systeminformationsblock, SIB, zu empfangen, wobei der periodisch gesendete SIB Konfigurationsparameter für eine Zufallszugriffsprozedur angibt, wobei die Konfigurationsparameter zumindest umfassen:

einen oder mehrere SIB-Typen, wobei der eine oder die mehreren SIB-Typen einen spezifischen Satz von einem oder mehreren On-Demand-SIBs identifizieren,

einen Satz von mehreren Zufallszugriffspräambeln, die konfiguriert sind, eine On-Demand-Lieferung des spezifischen Satzes von einem oder mehreren On-Demand-SIBs anzufordern, und

einen Satz von mehreren Physikalischer-Zufallszugriffskanal,PRACH,-Ressourcen, die konfiguriert sind, eine On-Demand-Lieferung des spezifischen Satzes von einem oder mehreren On-Demand-SIBs anzufordern;

eine Verarbeitungseinheit (40), die konfiguriert ist, eine Zufallszugriffspräambel aus dem Satz von mehreren Zufallszugriffspräambeln und eine PRACH-Ressource aus dem Satz von mehreren PRACH-Ressourcen gemäß einer Anforderung des spezifischen Satzes von einem oder mehreren On-Demand-SIBs auszuwählen; und

eine Sende- bzw. Übertragungseinheit (44), die konfiguriert ist, die ausgewählte Zufallszugriffspräambel unter Verwendung der ausgewählten PRACH-Ressource zu übertragen, um eine On-Demand-Lieferung des spezifischen Satzes von einem oder mehreren On-Demand-SIBs anzufordern.

2. Benutzerausrüstung (26) nach Anspruch 1, wobei die Anforderung des spezifischen Satzes von einem oder mehreren On-Demand-SIBs einen Systeminformationsblock, SIB, oder eine Gruppe von SIBs von der Basisstationsvorrichtung (22) anfordert.

3. Basisstationsvorrichtung (22), umfassend:

eine Empfangseinheit (36) und eine Sende- bzw. Übertragungseinheit (34), die konfiguriert sind, über eine Funkschnittstelle mit einer Benutzerausrüstung bzw. einem Benutzergerät (26) zu kommunizieren; und
eine Verarbeitungseinheit (30), die konfiguriert ist zum:
periodischen Senden eines Systeminformationsblocks, SIB, wobei der periodisch gesendete SIB Konfigurationsparameter für eine Zufallszugriffsprozedur angibt, wobei die Konfigurationsparameter zumindest umfassen:

einen oder mehrere SIB-Typen, wobei der eine oder die mehreren SIB-Typen einen spezifischen Satz von einem oder mehreren On-Demand-SIBs identifizieren,
einen Satz von mehreren Zufallszugriffspräambeln, die konfiguriert sind, eine On-Demand-Lieferung des spezifischen Satzes von einem oder mehreren On-Demand-SIBs anzufordern, und
einen Satz von mehreren Physikalischer-Zufallszugriffskanal,PRACH,-Ressourcen, die konfiguriert sind, eine On-Demand-Lieferung des spezifischen Satzes von einem oder mehreren On-Demand-SIBs anzufordern;
Empfangen einer Präambelsequenz, die mit einer der Zufallszugriffspräambeln des Satzes von mehreren Zufallszugriffspräambeln auf einer der PRACH-Ressourcen des Satzes von mehreren PRACH-Ressourcen verknüpft ist, gemäß einer Anforderung des spezifischen Satz von einem oder mehreren On-Demand-SIBs; und
Identifizieren und Verarbeiten der Anforderung des spezifischen Satzes von einem oder mehreren On-Demand-SIBs von der Benutzerausrüstung (26).

4. Basisstationsvorrichtung (22) nach Anspruch 3, wobei die Anforderung des spezifischen Satzes von einem oder mehreren On-Demand-SIBs einen Systeminformationsblock, SIB, oder eine Gruppe von SIBs von der Basisstationsvorrichtung (22) anfordert.

5. Verfahren für eine Benutzerausrüstung bzw. ein Benutzergerät (26), umfassend:
Empfangen, von einer Basisstationsvorrichtung (22), eines periodisch gesendeten Systeminformationsblocks, SIB, wobei der periodisch gesendete SIB Konfigurationsparameter für eine Zufallszugriffsprozedur angibt, wobei die Konfigurationsparameter zumindest umfassen:

einen oder mehrere SIB-Typen, wobei der eine oder die mehreren SIB-Typen einen spezifischen Satz von einem oder mehreren On-Demand-SIBs identifizieren,
einen Satz von mehreren Zufallszugriffspräambeln, die konfiguriert sind, eine On-Demand-Lieferung des spezifischen Satzes von einem oder mehreren On-Demand-SIBs anzufordern, und
einen Satz von mehreren Physikalischer-Zufallszugriffskanal,PRACH,-Ressourcen, die konfiguriert sind, eine On-Demand-Lieferung des spezifischen Satzes von einem oder mehreren On-Demand-SIBs anzufordern;
Auswählen einer Zufallszugriffspräambel aus dem Satz von mehreren Zufallszugriffspräambeln und einer PRACH-Ressource aus dem Satz von mehreren PRACH-Ressourcen gemäß einer Anforderung des spezifischen Satzes von einem oder mehreren On-Demand-SIBs; und
Übertragen der ausgewählten Zufallszugriffspräambel unter Verwendung der ausgewählten PRACH-Ressource, um eine On-Demand-Lieferung des spezifischen Satzes von einem oder mehreren On-Demand-SIBs anzufordern.

6. Verfahren nach Anspruch 5, wobei die Anforderung des spezifischen Satzes von einem oder mehreren On-Demand-SIBs einen Systeminformationsblock, SIB, oder eine Gruppe von SIBs von der Basisstationsvorrichtung (22) anfordert.

7. Verfahren für eine Basisstationsvorrichtung (22), umfassend:

Verwenden einer Empfangseinheit (36) und einer Sende- bzw. Übertragungseinheit (34) zum Kommunizieren über eine Funkschnittstelle mit einer Benutzerausrüstung bzw. einem Benutzergerät (26);
Verwenden einer Verarbeitungseinheit (30) zum:
periodischen Senden eines Systeminformationsblocks, SIB, wobei der periodisch gesendete SIB Konfigurationsparameter für eine Zufallszugriffsprozedur angibt, wobei die Konfigurationsparameter zumindest umfassen:

einen oder mehrere SIB-Typen, wobei der eine oder die mehreren SIB-Typen einen spezifischen Satz von einem oder mehreren On-Demand-SIBs identifizieren,

einen Satz von mehreren Zufallszugriffspräambeln, die konfiguriert sind, eine On-Demand-Lieferung des spezifischen Satzes von einem oder mehreren On-Demand-SIBs anzufordern, und

einen Satz von mehreren Physikalischer-Zufallszugriffskanal,PRACH,-Ressourcen, die konfiguriert sind, eine On-Demand-Lieferung des spezifischen Satzes von einem oder mehreren On-Demand-SIBs anzufordern;

Empfangen einer Präambelsequenz, die mit einer der Zufallszugriffspräambeln des Satzes von mehreren Zufallszugriffspräambeln auf einer der PRACH-Ressourcen des Satzes von mehreren PRACH-Ressourcen verknüpft ist, gemäß einer Anforderung des spezifischen Satz von einem oder mehreren On-Demand-SIBs; und

Identifizieren und Verarbeiten der Anforderung des spezifischen Satzes von einem oder mehreren On-Demand-SIBs von der Benutzerausrüstung (26).

**8.** Verfahren nach Anspruch 7, wobei die Anforderung des spezifischen Satzes von einem oder mehreren On-Demand-SIBs einen Systeminformationsblock, SIB, oder eine Gruppe von SIBs von der Basisstationsvorrichtung (22) anfordert.

## Revendications

**1.** Équipement utilisateur (26) comprenant :
un module de réception (46) configuré pour recevoir, d'un appareil de station de base (22), un bloc d'informations système, SIB, diffusé périodiquement, le SIB diffusé périodiquement indiquant des paramètres de configuration pour une procédure d'accès aléatoire, les paramètres de configuration comprenant au moins :

un ou plusieurs types de SIB, dans lequel le ou les types de SIB identifient un ensemble spécifique d'un ou plusieurs SIB à la demande,
un ensemble de multiples préambules d'accès aléatoire configurés pour demander la livraison à la demande de l'ensemble spécifique d'un ou plusieurs SIB à la demande, et
un ensemble de multiples ressources de canal physique d'accès aléatoire, PRACH, configurées pour demander la livraison à la demande de l'ensemble spécifique d'un ou plusieurs SIB à la demande ;
une unité de traitement (40) configurée pour sélectionner un préambule d'accès aléatoire parmi l'ensemble de multiples préambules d'accès aléatoire et une ressource de PRACH parmi l'ensemble de multiples ressources de PRACH conformément à une requête pour l'ensemble spécifique d'un ou plusieurs SIB à la demande ; et
un module de transmission (44) configuré pour transmettre le préambule d'accès aléatoire sélectionné en utilisant la ressource de PRACH sélectionnée pour demander la livraison à la demande de l'ensemble spécifique d'un ou plusieurs SIB à la demande.

**2.** Équipement utilisateur (26) selon la revendication 1, dans lequel la requête pour l'ensemble spécifique d'un ou plusieurs SIB à la demande demande un bloc d'informations système, SIB, ou un groupe de SIB à l'appareil de station de base (22).

**3.** Appareil de station de base (22) comprenant :

un module de réception (36) et un module de transmission (34) configurés pour communiquer en travers d'une interface radio avec un équipement utilisateur (26) ; et un module de traitement (30) configuré pour :
diffuser périodiquement un bloc d'informations système, SIB, le SIB diffusé périodiquement indiquant des paramètres de configuration pour une procédure d'accès aléatoire, les paramètres de configuration comprenant au moins :

un ou plusieurs types de SIB, dans lequel le ou les types de SIB identifient un ensemble spécifique d'un ou plusieurs SIB à la demande,
un ensemble de multiples préambules d'accès aléatoire configurés pour demander la livraison à la demande de l'ensemble spécifique d'un ou plusieurs SIB à la demande, et
un ensemble de multiples ressources de canal physique d'accès aléatoire, PRACH, configurées pour demander la livraison à la demande de l'ensemble spécifique d'un ou plusieurs SIB à la demande ;
recevoir une séquence de préambule associée à un des préambules d'accès aléatoire de l'ensemble de multiples préambules d'accès aléatoire sur une des ressources de PRACH de l'ensemble de multiples ressources de PRACH conformément à une requête pour l'ensemble spécifique d'un ou plusieurs SIB à la demande ; et

identifier et traiter la requête pour l'ensemble spécifique d'un ou plusieurs SIB à la demande provenant de l'équipement utilisateur (26).

4. Appareil de station de base (22) selon la revendication 3, dans lequel la requête pour l'ensemble spécifique d'un ou plusieurs SIB à la demande demande un bloc d'informations système, SIB, ou un groupe de SIB à l'appareil de station de base (22).

5. Procédé pour un équipement utilisateur (26), comprenant :
recevoir, d'un appareil de station de base (22), un bloc d'informations système, SIB, diffusé périodiquement, le SIB diffusé périodiquement indiquant des paramètres de configuration pour une procédure d'accès aléatoire, les paramètres de configuration comprenant au moins :

un ou plusieurs types de SIB, dans lequel le ou les types de SIB identifient un ensemble spécifique d'un ou plusieurs SIB à la demande,
un ensemble de multiples préambules d'accès aléatoire configurés pour demander la livraison à la demande de l'ensemble spécifique d'un ou plusieurs SIB à la demande, et
un ensemble de multiples ressources de canal physique d'accès aléatoire, PRACH, configurées pour demander la livraison à la demande de l'ensemble spécifique d'un ou plusieurs SIB à la demande ;
sélectionner un préambule d'accès aléatoire parmi l'ensemble de multiples préambules d'accès aléatoire et une ressource de PRACH parmi l'ensemble de multiples ressources de PRACH conformément à une requête pour l'ensemble spécifique d'un ou plusieurs SIB à la demande ; et
transmettre le préambule d'accès aléatoire sélectionné en utilisant la ressource de PRACH sélectionnée pour demander la livraison à la demande de l'ensemble spécifique d'un ou plusieurs SIB à la demande.

6. Procédé selon la revendication 5, dans lequel la requête pour l'ensemble spécifique d'un ou plusieurs SIB à la demande demande un bloc d'informations système, SIB, ou un groupe de SIB à l'appareil de station de base (22).

7. Procédé pour un appareil de station de base (22), comprenant :

utiliser un module de réception (36) et un module de transmission (34) pour communiquer en travers d'une interface radio avec un équipement utilisateur (26) ;
utiliser un module de traitement (30) pour :
diffuser périodiquement un bloc d'informations système, SIB, le SIB diffusé périodiquement indiquant des paramètres de configuration pour une procédure d'accès aléatoire, les paramètres de configuration comprenant au moins :

un ou plusieurs types de SIB, dans lequel le ou les types de SIB identifient un ensemble spécifique d'un ou plusieurs SIB à la demande,
un ensemble de multiples préambules d'accès aléatoire configurés pour demander la livraison à la demande de l'ensemble spécifique d'un ou plusieurs SIB à la demande, et
un ensemble de multiples ressources de canal physique d'accès aléatoire, PRACH, configurées pour demander la livraison à la demande de l'ensemble spécifique d'un ou plusieurs SIB à la demande ;
recevoir une séquence de préambule associée à un des préambules d'accès aléatoire de l'ensemble de multiples préambules d'accès aléatoire sur une des ressources de PRACH de l'ensemble de multiples ressources de PRACH conformément à une requête pour l'ensemble spécifique d'un ou plusieurs SIB à la demande ; et
identifier et traiter la requête pour l'ensemble spécifique d'un ou plusieurs SIB à la demande provenant de l'équipement utilisateur (26).

8. Procédé selon la revendication 7, dans lequel la requête pour l'ensemble spécifique d'un ou plusieurs SIB à la demande demande un bloc d'informations système, SIB, ou un groupe de SIB à l'appareil de station de base (22).

Fig. 1A

20B

22B

ACCESS NODE

PROCESSOR

RANDOM ACCESS PROCEDURE CONTROLLER

54

RANDOM ACCESS RESPONSE
GENERATOR

30

60

50

FRAME/SIGNAL HANDLER

32

TRANSCEIVER

34

TX

36

RX

24

WIRELESS
TERMINAL

42

TRANSCEIVER

46

RX

44

TX

PROCESSOR

52

FRAME/SIGNAL SCHEDULER/HANDLER

RANDOM ACCESS PROCEDURE CONTROLLER

RANDOM ACCESS RESPONSE CHECKER

62

40

56

PREAMBLE/RESOURCE SELECTION AGENT

72

FIRST GROUP

74

SECOND
GROUP

70

48

USER INTERFACE

26B

Fig. 1B

Fig. 1C

20D

22D

ACCESS NODE

PROCESSOR

SYSTEM INFORMATION GENERATOR

80

84 X-RNTI-FUNCTION INPUT PARAMETER/
PREAMBLE ASSOCIATION

30

54 RANDOM ACCESS PROCEDURE CONTROLLER

RANDOM ACCESS RESPONSE
GENERATOR

60

50 FRAME/SIGNAL HANDLER

32 TRANSCEIVER

34 TX

36 RX

24

42 TRANSCEIVER

WIRELESS
TERMINAL

46 RX

44 TX

52 PROCESSOR
FRAME/SIGNAL SCHEDULER/HANDLER

RANDOM ACCESS PROCEDURE CONTROLLER

62D

X-RNTI FUNCTION INPUT BASED RANDOM ACCESS
RESPONSE CHECKER

40

56

X-RNTI FUNCTION-BASED PREAMBLE/RESOURCE
SELECTION AGENT

70D FIRST GROUP

72

74 SECOND
GROUP

48 USER INTERFACE

26D

Fig. 1D

Fig. 1E

Fig. 1F

Fig. 1G

Fig. 1H

201

221

## ACCESS NODE

### PROCESSOR

#### RANDOM ACCESS PROCEDURE CONTROLLER

54

RANDOM ACCESS RESPONSE GENERATOR

60

30

80

SYSTEM INFORMATION GENERATOR

184

PREAMBLE RE-TRANSMISSION INDICATION GENERATOR

50

FRAME/SIGNAL HANDLER

32

TRANSCEIVER

34

TX

36

RX

24

WIRELESS TERMINAL

42

TRANSCEIVER

46

RX

44

TX

### PROCESSOR

52

FRAME/SIGNAL SCHEDULER/HANDLER

RANDOM ACCESS PROCEDURE CONTROLLER

180

RANDOM ACCESS RESPONSE CHECKER

62

PREAMBLE TRANSMISSION REPEATER

40

56

PRACH RESOURCE SELECTION AGENT

SECOND GROUP

126

PREAMBLE SELECTION AGENT

72

124

FIRST GROUP: DESIGNATED REQUEST

FIRST GROUP

74

SECOND GROUP

120

70

48

USER INTERFACE

26H

# Fig. 1I

*Fig. 2A*

*Fig. 2B*

TERMINAL

NODE

SYSTEM INFORMATION BROADCAST
(MAY INCLUDE X-RNTI/PREAMBLE ASSOCIATION    2C-1

PREAMBLE
RESOURCE SELECTION:
SELECT FROM GROUP 1 OR
GROUP 2                    2C-2

PREAMBLE TRANSMISSION                    2C-3
(Msg 1)

RANDOM ACCESS RESPONSE
(e.g., Msg 2)                                      2C-4
WITH SUCCESSFUL                    2C-5        RESPONSE
RECEIPT INDICATOR                              GENERATION
(e.g., RAPID)

RANDOM
ACCESS RESPONSE (RAR)
RECEPTION                    2C-6
                        2C-6-1
              X-RNTI-
              ASSOCIATED
        N     PREAMBLE     Y
        2C-6-5            2C-6-2

    DCI DECODED        DCI DECODED
    WITH RA-RNTI       WITH X-RNTI

        2C-6-6            Y

    PDSCH            SUCCESS!        2C-6-3
    RECEPTION

                    END RA PROC    2C-6-4

CONTENTION RESOLUTION                    2C-7
(Msg 3)

CONTENTION RESOLUTION                    2C-8
(Msg 4)

*Fig. 2C*

*Fig. 2D*

TERMINAL                                                                NODE

SYSTEM INFORMATION BROADCAST                                    2E-1
(MAY INCLUDE X-RNTI/PREAMBLE ASSOCIATION

PREAMBLE
RESOURCE SELECTION:          2E-2
SELECT FROM GROUP 1 OR
GROUP 2

PREAMBLE TRANSMISSION                    2E-3
(Msg 1)

RANDOM ACCESS RESPONSE                                          2E-4
(e.g., Msg 2)
WITH SUCCESSFUL              2E-5           RESPONSE
RECEIPT INDICATOR                          GENERATION
(e.g., RAPID)

RANDOM                      2E-6
ACCESS RESPONSE (RAR)
RECEPTION          2E-6-1
X-RNTI-
ASSOCIATED
N        PREAMBLE        Y    2E-6-2

2E-6-5
DCI DECODED        DCI DECODED
WITH RA-RNTI       WITH X-RNTI

Y
2E-6-6           SUCCESS!
DECODE          2E-6-3
PDSCH            FORMAT X
RECEPTION
END RA PROC       2E-6-4

CONTENTION RESOLUTION                    2E-7
(Msg 3)

CONTENTION RESOLUTION                    2E-8
(Msg 4)

*Fig. 2E*

Fig. 2F

## Fig. 2F-1

PRACH RESOURCE INDICATE DESIGNATED REQUEST? — 2F-4-1

PREAMBLE INDEX INDICATE DESIGNATED REQUEST? — 2F-4-2

GENERATE RA RESPONSE FOR NORMAL REQUEST — 2F-4-3

GENERATE RA RESPONSE FOR DESIGNATED REQUEST — 2F-4-4

PREAMBLE INDEX INDICATE DESIGNATED REQUEST? — 2F-4-5

REJECT RANDOM ACCESS REQUEST — 2F-4-6

## Fig. 2F-2

PRACH RESOURCE INDICATE DESIGNATED REQUEST? — 2F-4-1

PREAMBLE INDEX INDICATE DESIGNATED REQUEST? — 2F-4-2

GENERATE RA RESPONSE FOR NORMAL REQUEST — 2F-4-3

GENERATE RA RESPONSE FOR DESIGNATED REQUEST — 2F-4-4

Fig. 2G

| | |
|---|---|
| RECEIVING CONFIGURATION PARAMETERS BROADCASTED FROM THE BASE STATION | 3A-1 |

↓

| | |
|---|---|
| GENERATING AND TRANSMITTING TO THE BASE STATION A PREAMBLE SEQUENCE | 3A-2 |

↓

| | |
|---|---|
| RECEIVING AND DECODING DOWNLINK INFORMATION FROM THE BASE STATION | 3A-3 |

↓

| | |
|---|---|
| MAKING A DETERMINATION REGARDING INCLUSION IN THE DOWNLINK INFORMATION OF AN INDICATION THAT THE BASE STATION SUCCESSFULLY RECEIVED THE PREAMBLE SEQUENCE SENT BY THE WIRELESS TERMINAL | 3A-4 |

# Fig. 3A

| | |
|---|---|
| BROADCASTING CONFIGURATION PARAMETERS | 4A-1 |

↓

| | |
|---|---|
| RECEIVING A PREAMBLE SEQUENCE | 4A-2 |

↓

| | |
|---|---|
| TRANSMITTING DOWNLINK INFORMATION COMPRISING AN INDICATION OF SUCCESSFUL RECEPTION BY THE BASE STATION OF THE PREAMBLE SEQUENCE | 4A-3 |

# Fig. 4A

RECEIVING CONFIGURATION PARAMETERS BROADCASTED FROM THE BASE STATION — 3B-1

↓

SELECTING A PREAMBLE INDEX DEPENDING ON DESIGNATED REQUEST — 3B-2-1

↓

GENERATING AND TRANSMITTING TO THE BASE STATION A PREAMBLE SEQUENCE — 3B-2-2

↓

RECEIVING AND DECODING DOWNLINK INFORMATION FROM THE BASE STATION — 3B-3

↓

MAKING A DETERMINATION REGARDING INCLUSION IN THE DOWNLINK INFORMATION OF AN INDICATION THAT THE BASE STATION SUCCESSFULLY RECEIVED THE PREAMBLE SEQUENCE SENT BY THE WIRELESS TERMINAL — 3B-4

↓

MAKING A DETERMINATION HOW TO PROCEED REGARDING THE RANDOM ACCESS PROCEDURE DEPENDING ON THE PREAMBLE INDEX — 3B-5

# Fig. 3B

BROADCASTING CONFIGURATION PARAMETERS — 4B-1

↓

RECEIVING A PREAMBLE SEQUENCE — 4B-2

↓

TRANSMITTING DOWNLINK INFORMATION COMPRISING AN INDICATION OF SUCCESSFUL RECEPTION BY THE BASE STATION OF THE PREAMBLE SEQUENCE — 4B-3

# Fig. 4B

| RECEIVING CONFIGURATION PARAMETERS INCLUDING AN ASSOCIATION OF X-RNTI AND PREAMBLE INFORMATION AS BROADCASTED FROM THE BASE STATION | 3C-1 |

| SELECTING A PREAMBLE INDEX DEPENDING ON DESIGNATED REQUEST | 3C-2-1 |
| | 3C-2-2 |

| GENERATING AND TRANSMITTING TO THE BASE STATION A PREAMBLE SEQUENCE |

| RECEIVING AND ATTEMPTING TO DECODE (USING X-RNTI) THE DOWNLINK INFORMATION FROM THE BASE STATION | 3C-3 |

| MAKING A DETERMINATION HOW TO PROCEED REGARDING THE RANDOM ACCESS PROCEDURE DEPENDING ON SUCCESS OF DECODING WITH X-RNTI | 3C-4 |

# Fig. 3C

| BROADCASTING CONFIGURATION PARAMETERS INCLUDING AN ASSOCIATION OF X-RNTI AND PREAMBLE INFORMATION | 4C-1 |

| RECEIVING A PREAMBLE SEQUENCE | 4C-2 |

| TRANSMITTING DOWNLINK INFORMATION ENCODED USING THE X-RNTI ASSOCIATED WITH THE RECEIVED PREAMBLE AS AN INDICATION OF SUCCESSFUL RECEPTION BY THE BASE STATION OF THE PREAMBLE SEQUENCE | 4C-3 |

# Fig. 4C

RECEIVING CONFIGURATION PARAMETERS BROADCASTED FROM THE BASE STATION

3D-1

SELECTING PRACH RESOURCE DEPENDING ON DESIGNATED REQUEST

3D-2-0

SELECTING A PREAMBLE INDEX DEPENDING ON DESIGNATED REQUEST

3D-2-1

GENERATING AND TRANSMITTING TO THE BASE STATION A PREAMBLE SEQUENCE

3D-2-2

RECEIVING AND DECODING DOWNLINK INFORMATION FROM THE BASE STATION

3D-3

MAKING A DETERMINATION REGARDING INCLUSION IN THE DOWNLINK INFORMATION OF AN INDICATION THAT THE BASE STATION SUCCESSFULLY RECEIVED THE RANDOM ACCESS REQUEST SENT BY THE WIRELESS TERMINAL

3D-4

MAKING A DETERMINATION HOW TO PROCEED REGARDING THE RANDOM ACCESS PROCEDURE DEPENDING ON THE PREAMBLE INDEX

3D-5

# Fig. 3D

BROADCASTING CONFIGURATION PARAMETERS

4D-1

RECEIVING A PREAMBLE SEQUENCE

4D-2

TRANSMITTING DOWNLINK INFORMATION COMPRISING AN INDICATION OF SUCCESSFUL RECEPTION BY THE BASE STATION OF THE PREAMBLE SEQUENCE

4D-3

# Fig. 4D

RECEIVING CONFIGURATION PARAMETERS BROADCASTED FROM THE BASE STATION — 3E-1

SELECTING PRACH RESOURCE DEPENDING ON DESIGNATED REQUEST — 3E-2-0

SELECTING A PREAMBLE INDEX DEPENDING ON DESIGNATED REQUEST — 3E-2-1

GENERATING AND TRANSMITTING TO THE BASE STATION A PREAMBLE SEQUENCE — 3E-2-1

3E-6
TERMINATE

TERMINATE RANDOM ACCESS PROCEEDURE? — 3E-2-2

Y

N

3E-7
REPEAT RANDOM ACCESS PROCEEDURE IF DESIGNATED REQUEST NOT TIMELY PERFORMED

RECEIVING AND DECODING DOWNLINK INFORMATION FROM THE BASE STATION — 3E-3

MAKING A DETERMINATION REGARDING INCLUSION IN THE DOWNLINK INFORMATION OF AN INDICATION THAT THE BASE STATION SUCCESSFULLY RECEIVED THE RANDOM ACCESS REQUEST SENT BY THE WIRELESS TERMINAL — 3E-4

CONTINUING WITH THE RANDOM ACCESS PROCEDURE — 3E-5

# Fig. 3E

BROADCASTING CONFIGURATION PARAMETERS 4E-1

RECEIVING A PREAMBLE SEQUENCE 4E-2-1

SUCCESSFUL
RECEIPT OF MESSAGE
WITH DESIGNATED
REQUEST? 4E-2-2

Y

PERFORM ACTION OF
DESIGNATED REQUEST 4E-4

TERMINATE RANDOM
ACCESS PROCEEDURE 4E-5

N

TRANSMITTING DOWNLINK INFORMATION COMPRISING
AN INDICATION OF SUCCESSFUL RECEPTION BY THE
BASE STATION OF THE PREAMBLE SEQUENCE 4E-3

# Fig. 4E

| RECEIVING CONFIGURATION PARAMETERS BROADCASTED FROM THE BASE STATION | 3F-1 |
|---|---|

↓

| SELECTING PREAMBLE AND PRACH RESOURCE | 3F-2 |
|---|---|

↓

| GENERATING AND TRANSMITTING TO THE BASE STATION A PREAMBLE SEQUENCE AT UNIQUE PREAMBLE TRANSMISSION POWER LEVEL | 3F-3 |
|---|---|

↓

| FINISHING RANDOM ACCESS PROCEDURE | 3F-4 |
|---|---|

# Fig. 3F

| BROADCASTING CONFIGURATION PARAMETERS INCLUDING PREAMBLE TRANSMIT POWER LEVEL PARAMETER | 4F-1 |
|---|---|

↓

| RECEIVING A PREAMBLE SEQUENCE | 4F-2 |
|---|---|

↓

| FINISHING RANDOM ACCESS PROCEDURE | 4F-3 |
|---|---|

# Fig. 4F

| RECEIVING CONFIGURATION PARAMETERS BROADCASTED FROM THE BASE STATION | 3G-1 |

| SELECTING PREAMBLE AND PRACH RESOURCE | 3G-2 |

| GENERATING AND TRANSMITTING TO THE BASE STATION A PREAMBLE SEQUENCE AT UNIQUE PREAMBLE TRANSMISSION POWER LEVEL | 3G-3 |

| MAKING A DETERMINATION WHETHER AN ACTION RESPONSIVE TO THE DESIGNATED REQUEST HAS NOT PERFORMED WITHIN A PREDETERMINED TIME, AND IF NOT REPEATING PREAMBLE TRANSMISSION AS MANY AS THE PERMITTED MAXIMUM NUMBER OF TIMES | 3G-4 |

# Fig. 3G

| BROADCASTING CONFIGURATION PARAMETERS INCLUDING PREAMBLE TRANSMIT POWER LEVEL PARAMETER | 4G-1 |

| RECEIVING A PREAMBLE SEQUENCE | 4G-2 |

| FINISHING RANDOM ACCESS PROCEDURE | 4G-3 |

# Fig. 4G

| E/T/R/R/BI subheader | E/T/RAPID subheader 1 | E/T/RAPID subheader 2 | ... | E/T/RAPID subheader n |
|---|---|---|---|---|

| MAC header | MAC RAR 1 | MAC RAR 2 | ... | MAC RAR n | Padding (opt) |
|---|---|---|---|---|---|

←————————— MAC payload —————————→

## Fig. 5A-1

| E | T | RAPID | Oct 1 |
|---|---|---|---|

## Fig. 5A-2

| E | T | R | R | BI | Oct 1 |
|---|---|---|---|---|---|

## Fig. 5A-3

| R | Timing Advance Command | Oct 1 |
|---|---|---|
| Timing Advance Command | UL Grant | Oct 2 |
| UL Grant | | Oct 3 |
| UL Grant | | Oct 4 |
| Temporary C-RNTI | | Oct 5 |
| Temporary C-RNTI | | Oct 6 |

## Fig. 5A-4

| R | Timing Advance Command | Oct 1 |
|---|---|---|
| Timing Advance Command | UL Grant | Oct 2 |
| UL Grant | | Oct 3 |
| Temporary C-RNTI | | Oct 4 |
| Temporary C-RNTI | | Oct 5 |

## Fig. 5A-4a

| R | Timing Advance Command | Oct 1 |
|---|---|---|
| Timing Advance Command | UL Grant | Oct 2 |
| UL Grant | | Oct 3 |
| UL Grant | R | Oct 4 |
| Temporary C-RNTI | | Oct 5 |
| Temporary C-RNTI | | Oct 6 |

## Fig. 5A-4b

| E/T/R/R/BI subheader | E/T/RAPID subheader 1 | E/T/RAPID subheader 2 | ... | E/T/RAPID subheader n |
|---|---|---|---|---|

| MAC header | MAC RAR 1 | MAC RAR 2 | ... | MAC RAR n | Padding (opt) |
|---|---|---|---|---|---|

← MAC payload →

## Fig. 5B-1

| E | T | RAPID | Oct 1 |
|---|---|---|---|

## Fig. 5B-2

| E | T | R | R | BI | Oct 1 |
|---|---|---|---|---|---|

## Fig. 5B-3

| R | Timing Advance Command | | Oct 1 |
|---|---|---|---|
| Timing Advance Command | | UL Grant | Oct 2 |
| UL Grant | | | Oct 3 |
| UL Grant | | | Oct 4 |
| Temporary C-RNTI | | | Oct 5 |
| Temporary C-RNTI | | | Oct 6 |

## Fig. 5B-4

| R | Timing Advance Command | | Oct 1 |
|---|---|---|---|
| Timing Advance Command | | UL Grant | Oct 2 |
| UL Grant | | | Oct 3 |
| Temporary C-RNTI | | | Oct 4 |
| Temporary C-RNTI | | | Oct 5 |

## Fig. 5B-4a

| R | Timing Advance Command | | Oct 1 |
|---|---|---|---|
| Timing Advance Command | | UL Grant | Oct 2 |
| UL Grant | | | Oct 3 |
| UL Grant | | R | Oct 4 |
| Temporary C-RNTI | | | Oct 5 |
| Temporary C-RNTI | | | Oct 6 |

## Fig. 5B-4b

| reserved | Oct 1 |
|---|---|
| reserved | Oct 2 |
| reserved | Oct 3 |
| reserved | Oct 4 |
| reserved | Oct 5 |
| reserved | Oct 6 |

## Fig. 5B-4c

RANDOM ACCESS RESPONSE
(Msg 2)
WITH SUCCESSFUL
RECEIPT INDICATOR

2A-5

PDCCH

PDSCH

MAC
PDU

# Fig. 6

FIRST GROUP OF
PREAMBLE INDICES

72

INDEX 1

INDEX 2

...

INDEX j

DESIGNATED REQUEST 1:
REQUEST FOR ON-DEMAND
SYSTEM INFORMATION (e.g., SIB)

DESIGNATED REQUEST 2:
LOCATION UPDATE

DESIGNATED REQUEST 3:
CONNECTION RELEASE REQUEST

# Fig. 7

190 PROCESSOR(S)

191 PROGRAM
INSTRUCTION
MEMORY

196

192 OTHER
MEMORY

193 I/O
I/F

194 PERIPHERAL
I/F

195 SUPPORT
CIRCUITS

# Fig. 17

| E/T/R/R/BI subheader | E/T/RAPID subheader 1 | E/T/RAPID subheader 2 | E/T/RAPID subheader 3 | ... | E/T/RAPID subheader n |
|---|---|---|---|---|---|

RAPID = reserved
Random Access
Preamble

| MAC header | MAC RAR 1 | MAC RAR 3 | ... | MAC RAR n | Padding (opt) |
|---|---|---|---|---|---|

# Fig. 8

FIRST GROUP OF
PREAMBLE INDICES

72

INDEX 1

INDEX 2

...

INDEX j

X-RNTI$_1$

X-RNTI$_2$

# Fig. 9

RANDOM
ACCESS RESPONSE (RAR)
RECEPTION    2C-6-1

2C-6'

X-RNTI-
ASSOCIATED
PREAMBLE

N          Y

2C-6-5          2C-6-2

DCI DECODED
WITH RA-RNTI

DCI
DECODED WITH X-
RNTI

Y

2C-6-6          2C-6'-3

PDSCH
RECEPTION

PDSCH
RECEPTION

2C-6-4

END RA PROC

# Fig. 10

*Fig. 11*

POOL OF
PRACH RESOURCES

FIRST GROUP OF
PRACH RESOURCES

124

RESOURCES

RESOURCES

...

RESOURCES

122

DESIGNATED REQUEST 1:
REQUEST FOR ON-DEMAND
SYSTEM INFORMATION (e.g., SIB)

DESIGNATED REQUEST 2:
LOCATION UPDATE

DESIGNATED REQUEST 3:
CONNECTION RELEASE REQUEST

SECOND GROUP OF
PRACH RESOURCES

126

RESOURCES

RESOURCES

...

RESOURCES

NOT AVAILABLE FOR
DESIGNATED REQUESTS

*Fig. 12A*

Fig. 12B

PRACH RESOURCE SELECTION AGENT — 120

FIRST GROUP OF PRACH RESOURCES — 124
RESOURCE A
RESOURCE B
...

FIRST GROUP OF PRACH RESOURCES — 124
RESOURCE A
RESOURCE B
...

PREAMBLE X
RESOURCE A

PREAMBLE Y
RESOURCE A

FIRST GROUP OF PREAMBLES — 124
PREAMBLE X
PREAMBLE Y
...

FIRST GROUP OF PREAMBLES — 124
PREAMBLE X
PREAMBLE Y
...

PREAMBLE RESOURCE SELECTION AGENT — 70

TIME 1

TIME 2

TIME

EP 3 616 462 B1

**130**

**(MASTER) SYSTEM INFORMATION BLOCK** **132**

**ON DEMAND SIB/SIB GROUPS**

$134_1$

**SIB/SIB GROUP 1** $136_1$

PREAMBLES RESERVED
DESIGNATED REQUESTS

$138_1$

RACH RESOURCES RESERVED
DESIGNATED REQUESTS

...

$134_j$

**SIB/SIB GROUP j** $136_j$

PREAMBLES RESERVED
DESIGNATED REQUESTS

$138_j$

RACH RESOURCES RESERVED
DESIGNATED REQUESTS

*Fig. 13*

**150**

**(MASTER) SYSTEM INFORMATION BLOCK** **152**

**ON DEMAND SIB/SIB GROUPS**

$154_1$

**SIB/SIB GROUP 1**

$155_1$

RACH RESPONSE TYPE
INDICATOR

...

$154_j$

**SIB/SIB GROUP j**

$155_j$

RACH RESPONSE TYPE
INDICATOR

*Fig. 14*

| VALUE 1: RAR-BASED | VALUE 2: PDCCH-BASED | VALUE 3: NONE |
| --- | --- | --- |

**Fig. 15**

**Fig. 16**

EP 3 616 462 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016198909 A1

**Non-patent literature cited in the description**

- **SAMSUNG et al.** On Demand SI Request TX. *3GPP DRAFT; R2-1702970_ON DEMAND SI REQUEST TX_MSG1 VS MSG3, 3RD GENERATION PART-NERSHIP PROJECT (3GPP), MOBILE COMPE-TENCE CENTRE ; 650, ROUTE DES LUCIOLES ; F-06921 SOPHIA-ANTIPOLIS CEDEX ; FRANCE*, 03 April 2017, vol. RAN WG2 (Spokane)
- **INTERDIGITAL COMMUNICATIONS**. Request and Acquisition of Other-SI. *3GPP DRAFT; R2-1701195 (NR SI AI10224 ACQUISITION OF OTHER-SI), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE*, 12 February 2017, vol. RAN WG2 (Athens)
- **OPPO**. Discussion on Remaining Issues of Other SI Design. *3GPP DRAFT; R2-1700045-DISCUSSION ON REMAINING ISSUES OF OTHER SI DESIGN, 3RD GENERATION PARTNERSHIP PROJECT (3GPP), MOBILE COMPETENCE CENTRE ; 650, ROUTE DESLUCIOLES ; F-06921 SOPHIA-ANTI-POLIS CEDEX*, 17 January 2017, vol. RAN WG2 (Spokane)